(19) Europäisches Patentamt
European Patent Office
Office européen des brevets

(11) EP 3 923 724 B1

(12) EUROPEAN PATENT SPECIFICATION

(45) Date of publication and mention of the grant of the patent:
**26.07.2023 Bulletin 2023/30**

(21) Application number: **20703413.3**

(22) Date of filing: **30.01.2020**

(51) International Patent Classification (IPC):
***A01N 43/58*** $^{(2006.01)}$ ***A01N 43/60*** $^{(2006.01)}$
***A01N 47/40*** $^{(2006.01)}$ ***A01N 43/36*** $^{(2006.01)}$
***A01N 43/40*** $^{(2006.01)}$

(52) Cooperative Patent Classification (CPC):
(C-Sets available)
**A01N 43/58; A01N 43/60; A01N 47/40** (Cont.)

(86) International application number:
**PCT/EP2020/052340**

(87) International publication number:
**WO 2020/164924 (20.08.2020 Gazette 2020/34)**

(54) **HERBICIDAL COMPOSITIONS**

HERBIZIDZUSAMMENSETZUNGEN

COMPOSITIONS HERBICIDES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.02.2019 IN 201911006079**

(43) Date of publication of application:
**22.12.2021 Bulletin 2021/51**

(73) Proprietor: **Syngenta Crop Protection AG**
**4058 Basel (CH)**

(72) Inventors:
- **WILLETTS, Nigel, James**
  **Bracknell Berkshire RG42 6EY (GB)**
- **HALL, Gavin, John**
  **Bracknell Berkshire RG42 6EY (GB)**
- **THOMSON, Niall, Rae**
  **Bracknell Berkshire RG42 6EY (GB)**
- **FELLMANN, Julia**
  **20158 Basel (CH)**
- **WUERFFEL, Raymond, Joseph**
  **Vero Beach, FL 32967 (US)**
- **SONAWANE, Ravindra**
  **Corlim Ilhas Goa 403 110 (IN)**
- **PHADTE, Mangala**
  **Corlim Ilhas Goa 403 110 (IN)**
- **KANDUKURI, Sandeep, Reddy**
  **Corlim, Ilhas Goa 403 110 (IN)**
- **ARMSTRONG, Sarah**
  **Bracknell Berkshire RG42 6EY (GB)**
- **NG, Sean**
  **Bracknell Berkshire RG42 6EY (GB)**
- **MCGRANAGHAN, Andrea**
  **Bracknell Berkshire RG42 6EY (GB)**
- **SCUTT, James, Nicholas**
  **Bracknell Berkshire RG42 6EY (GB)**
- **MOORHOUSE, Sian**
  **Bracknell Berkshire RG42 6EY (GB)**

(56) References cited:
**WO-A1-2015/084796 WO-A1-2018/065311**
**WO-A1-2018/175231 WO-A1-2019/034757**
**WO-A2-01/90071 GB-A- 1 334 272**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**A01N 43/58, A01N 43/36, A01N 43/40;**
**A01N 43/60, A01N 43/36, A01N 43/40;**
**A01N 47/40, A01N 43/36, A01N 43/40**

## Description

The present invention relates novel herbicidal compositions and their use in controlling plants or inhibiting plant growth.

Herbicidal pyridazine derivatives are described in co-pending PCT application PCT/EP2018/072280, published as WO2019/034757 (relevant under Article 54(3) EPC).

Herbicidal pyrrolidinone derivatives of the formula

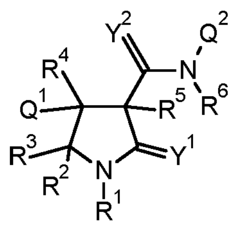

are described in WO2015/084796.

The object of the present invention is to provide herbicidal mixtures which are highly effective against various weed species (particularly at low dose), and is based on the finding that pyridazine compounds of Formula (I) as defined herein, in combination with herbicidal pyrrolidinone derivatives of Formula (II) as defined herein are particularly efficacious at mediating such weed control.

Thus in a first aspect of the invention, there is provided a composition comprising as component

(A) a compound of Formula (I), or an agrochemically acceptable salt or a zwitterionic species thereof,

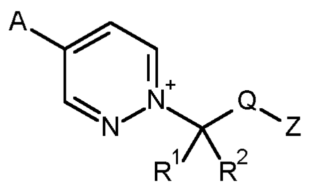 (I),

wherein:

A is 6-membered heteroaryl selected from the group consisting of:

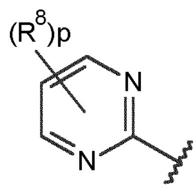
A-I

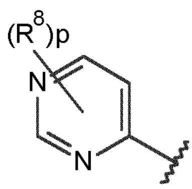
A-II

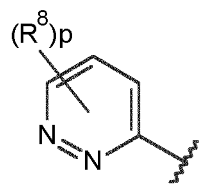
A-III

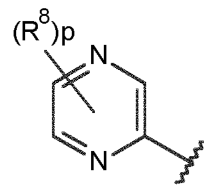
A-IV

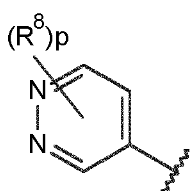
A-V

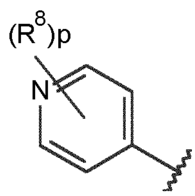
A-VI

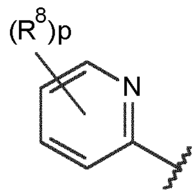
A-VII

wherein the jagged line defines the point of attachment to the remaining part of a compound of Formula (I), p is 0, 1 or 2 and each $R^8$ is independently selected from the group consisting of $NH_2$, methyl and methoxy;

$R^1$ and $R^2$ are each independently hydrogen or methyl; Q is $(CR^{1a}R^{2b})_m$; m is 0, 1, or 2; each $R^{1a}$ and $R^{2b}$ are independently selected from the group consisting of hydrogen, hydroxy, methyl, and $NH_2$; Z is - $S(O)_2OR^{10}$, $-C(O)OR^{10}$, $-C(O)NHS(O)_2R^{12}$ and -C(O)NHCN; $R^{10}$ is hydrogen, methyl, benzyl or phenyl; and $R^{12}$ is methyl, $-NH_2$, $-N(CH_3)_2$, or $-NHCH_3$;
and as component (B):

(B) one or more compounds of formula (II)

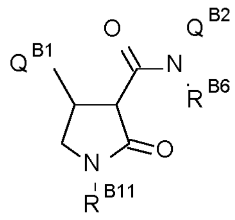
(II)

wherein,

$R^{B11}$ is H, $C_1$-$C_6$alkyl, $C_1$-$C_6$ haloalkyl or $C_4$-$C_8$ cycloalkyl;
$R^{B6}$ is H, $C_1$-$C_6$alkyl, or $C_1$-$C_6$alkoxy;
$Q^{B1}$ is an optionally substituted ring system, selected from the group consisting of phenyl, thienyl, pyridinyl, benzodioxolyl, naphthyl, naphthalenyl, benzofuranyl, furanyl, benzothiophenyl, and pyrazolyl, wherein when substituted said ring system is substituted by 1 to 3 $R^{B4}$;
$Q^{B2}$ is an optionally substituted ring system, selected from the group consisting of phenyl, pyridinyl, benzodioxolyl, pyridinone, thiadazolyl, thiazolyl, and oxazolyl, wherein when substituted said ring system is substituted by 1 to 3 $R^{B5}$;
each $R^{B4}$ is independently halogen, $C_1$-$C_6$alkyl, $C_1$-$C_6$haloalkyl, $C_1$-$C_6$alkoxy, $C_1$-$C_6$haloalkoxy, $C_3$-$C_8$cycloalkyl, cyano, $C_1$-$C_6$alkylthio, $C_1$-$C_6$alkylsulphinyl, $C_1$-$C_6$alkylsulphonyl, SFs, $NHR^{B8}$, phenyl optionally substituted by 1-3 $R^{B7}$, or pyrazolyl optionally substituted by 1-3 $R^{B7}$;
each $R^{B5}$ is independently halogen, $C_1$-$C_6$alkyl, $C_1$-$C_6$haloalkyl, $C_1$-$C_6$alkoxy, $C_1$-$C_6$haloalkoxy, cyano, nitro, $C_1$-$C_6$alkylthio, $C_1$-$C_6$alkylsulphinyl, or $C_1$-$C_6$alkylsulphonyl;
each $R^{B7}$ is independently $C_1$-$C_6$alkyl, halogen, or $C_1$-$C_6$haloalkyl; and
$R^{B8}$ is $C_1$-$C_4$alkoxycarbonyl; or an N-oxide, or a salt form thereof.

In a second aspect, the invention provides the use of a composition of the invention as a herbicide.

In a third aspect, the invention provides methods of (i) inhibiting plant growth, and (ii) controlling plants, said methods comprising applying to the plants or to the locus thereof, a herbicidally effective amount of a composition of the invention.

In a fourth aspect, the invention provides methods of (i) inhibiting plant growth, and (ii) controlling plants, said methods comprising applying to the plants or to the locus thereof: (A): a compound of Formula (I) as defined herein, and (B) a compound of Formula (II) as defined herein.

In a fifth aspect, the invention provides a method of controlling grasses and/or weeds in crops of useful plants which comprises applying to the useful plants or locus thereof or to the area of cultivation a herbicidally effective amount of a composition of the invention.

When active ingredients are combined, the activity to be expected (E) for any given active ingredient combination obeys the so-called Colby Formula and can be calculated as follows (Colby, S.R., Calculating synergistic and antagonistic responses of herbicide combination, Weeds, Vol. 15, pages 20-22; 1967):

ppm = milligrams of active ingredient (a.i.) per liter

X = % action by first active ingredient using p ppm of the active ingredient

Y = % action by second active ingredient sing q ppm of the active ingredient.

According to Colby, the expected action of active ingredients A +B using p + q ppm of active ingredient is represented by the following formula:

$$E = X + Y - \frac{X \cdot Y}{100}$$

If the action actually observed (O) is greater than the expected action E then the action of the combination is *super-additive,* i.e. there is a synergistic effect. In mathematical terms, synergism corresponds to a positive value for the difference of (O-E). In the case of purely complementary addition of activities (expected activity), said difference (O-E) is zero. A negative value of said difference (O-E) signals a loss of activity compared to the expected activity.

Compounds of Formulae (I) and compounds of Formula (II) are all effective herbicidal compounds, as shown herein with respect to compounds of Formula (I) and as shown in WO2015/084796 for compounds of Formula (II).

Accordingly, the combination of the present invention takes advantage of any additive herbicidal activity, and certain embodiments may even exhibit a synergistic effect. This occurs whenever the action of an active ingredient combination is greater than the sum of the actions of the individual components.

Combinations of the invention may also provide for an extended spectrum of activity in comparison to that obtained by each individual component, and/or permit the use of lower rates of the individual components when used in combination to that when used alone, in order to mediate effective herbicidal activity.

In addition, it is also possible that the composition of the invention may show increased crop tolerance, when compared with the effect of the compound A alone. This occurs when the action of an active ingredient combination is less damaging to a useful crop than the action of one of the active ingredients alone.

As stated above, compositions of the invention comprise as component (A) a compound of Formula (I) as defined herein. More details with respect to compounds of Formula (I) are provided below.

The presence of one or more possible asymmetric carbon atoms in a compound of Formula (I) means that the compounds may occur in chiral isomeric forms, i.e., enantiomeric or diastereomeric forms. Also atropisomers may occur as a result of restricted rotation about a single bond. Formula (I) is intended to include all those possible isomeric forms and mixtures thereof. The present invention includes all those possible isomeric forms and mixtures thereof for a compound of Formula (I). Likewise, Formula (I) is intended to include all possible tautomers (including lactam-lactim tautomerism and keto-enol tautomerism) where present. The present invention includes all possible tautomeric forms for a compound of Formula (I). Similarly, where there are di-substituted alkenes, these may be present in *E* or Z form or as mixtures of both in any proportion. The present invention includes all these possible isomeric forms and mixtures thereof for a compound of Formula (I).

The compounds of Formula (I) will typically be provided in the form of an agronomically acceptable salt, a zwitterion or an agronomically acceptable salt of a zwitterion. This invention covers all such agronomically acceptable salts, zwitterions and mixtures thereof in all proportions.

For example a compound of Formula (I) wherein Z comprises an acidic proton, may exist as a zwitterion, a compound of Formula (I-I), or as an agronomically acceptable salt, a compound of Formula (I-II) as shown below:

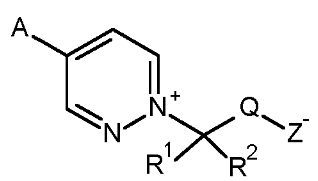

(I-I)

or

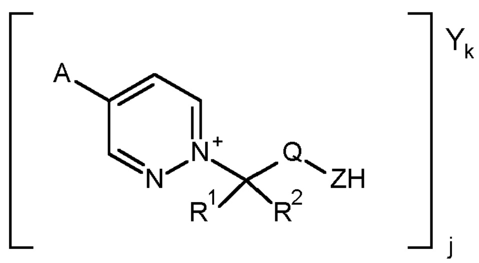

(I-II)

wherein, Y represents an agronomically acceptable anion and j and k represent integers that may be selected from 1, 2 or 3, dependent upon the charge of the respective anion Y.

A compound of Formula (I) may also exist as an agronomically acceptable salt of a zwitterion, a compound of Formula (I-III) as shown below:

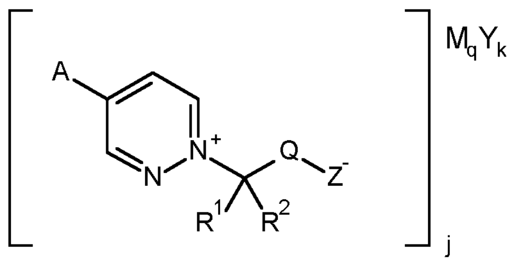

(I-III)

wherein, Y represents an agronomically acceptable anion, M represents an agronomically acceptable cation (in addition to the pyridazinium cation) and the integers j, k and q may be selected from 1, 2 or 3, dependent upon the charge of the respective anion Y and respective cation M.

Thus where a compound of Formula (I) is drawn in protonated form herein, the skilled person would appreciate that it could equally be represented in unprotonated or salt form with one or more relevant counter ions.

In one embodiment of the invention there is provided a compound of Formula (I-II) wherein k is 1 or 2, j is 1 and Y is selected from the group consisting of halogen, trifluoroacetate and pentafluoropropionate. In this embodiment a nitrogen atom in ring A may be protonated or a nitrogen atom comprised in Q may be protonated (for example see compound 1.030 or 1.035 in table A). Preferably, in a compound of Formula (I-II), k is 1 or 2, j is 1 and Y is chloride, wherein a nitrogen atom in ring A is protonated.

Suitable agronomically acceptable salts for component (A), i.e. a compound of Formula (I-II) or (I-III), as employed in the present invention, and represented by an anion Y, include but are not limited chloride, bromide, iodide, fluoride, 2-naphthalenesulfonate, acetate, adipate, methoxide, ethoxide, propoxide, butoxide, aspartate, benzenesulfonate, benzoate, bicarbonate, bisulfate, bitartrate, butylsulfate, butylsulfonate, butyrate, camphorate, camsylate, caprate, caproate, caprylate, carbonate, citrate, diphosphate, edetate, edisylate, enanthate, ethanedisulfonate, ethanesulfonate, ethylsulfate, formate, fumarate, gluceptate, gluconate, glucoronate, glutamate, glycerophosphate, heptadecanoate, hexadecanoate, hydrogen sulfate, hydroxide, hydroxynaphthoate, isethionate, lactate, lactobionate, laurate, malate, maleate, mandelate, mesylate, methanedisulfonate, methylsulfate, mucate, myristate, napsylate, nitrate, nonadecanoate, octadecanoate, oxalate, pelargonate, pentadecanoate, pentafluoropropionate, perchlorate, phosphate, propionate, propylsulfate, propylsulfonate, succinate, sulfate, tartrate, tosylate, tridecylate, triflate, trifluoroacetate, undecylinate and valerate.

Suitable cations represented by M in a compound of Formula (I-III), include, but are not limited to, metals, conjugate acids of amines and organic cations. Examples of suitable metals include aluminium, calcium, cesium, copper, lithium, magnesium, manganese, potassium, sodium, iron and zinc. Examples of suitable amines include allylamine, ammonia, amylamine, arginine, benethamine, benzathine, butenyl-2-amine, butylamine, butylethanolamine, cyclohexylamine, decylamine, diamylamine, dibutylamine, diethanolamine, diethylamine, diethylenetriamine, diheptylamine, dihexylamine, diisoamylamine, diisopropylamine, dimethylamine, dioctylamine, dipropanolamine, dipropargylamine, dipropylamine, dodecylamine, ethanolamine, ethylamine, ethylbutylamine, ethylenediamine, ethylheptylamine, ethyloctylamine, ethylpropanolamine, heptadecylamine, heptylamine, hexadecylamine, hexenyl-2-amine, hexylamine, hexylheptylamine, hexyloctylamine, histidine, indoline, isoamylamine, isobutanolamine, isobutylamine, isopropanolamine, isopropylamine, lysine, meglumine, methoxyethylamine, methylamine, methylbutylamine, methylethylamine, methylhexylamine, methylisopropylamine, methylnonylamine, methyloctadecylamine, methylpentadecylamine, morpholine, N,N-diethylethanolamine, N-methylpiperazine, nonylamine, octadecylamine, octylamine, oleylamine, pentadecylamine, pentenyl-2-amine, phenoxyethylamine, picoline, piperazine, piperidine, propanolamine, propylamine, propylenediamine, pyridine, pyrrolidine, sec-butylamine, stearylamine, tallowamine, tetradecylamine, tributylamine, tridecylamine, trimethylamine, triheptylamine, trihexylamine, triisobutylamine, triisodecylamine, triisopropylamine, trimethylamine, tripentylamine, tripropylamine, tris(hydroxymethyl)aminomethane, and undecylamine. Examples of suitable organic cations include benzyltributylammonium, benzyltrimethylammonium, benzyltriphenylphosphonium, choline, tetrabutylammonium, tetrabutylphosphonium, tetraethylammonium, tetraethylphosphonium, tetramethylammonium, tetramethylphosphonium, tetrapropylammonium, tetrapropylphosphonium, tributylsulfonium, tributylsulfoxonium, triethylsulfonium, triethylsulfoxonium, trimethylsulfonium, trimethylsulfoxonium, tripropylsulfonium and tripropylsulfoxonium.

Preferred compounds of Formula (I), wherein Z comprises an acidic proton, can be represented as either Formual (I-I) or (I-II). For compounds of Formula (I-II) emphasis is given to salts when Y is chloride, bromide, iodide, hydroxide, bicarbonate, acetate, pentafluoropropionate, triflate, trifluoroacetate, methylsulfate, tosylate and nitrate, wherein j and k are 1. Preferably, Y is chloride, bromide, iodide, hydroxide, bicarbonate, acetate, trifluoroacetate, methylsulfate, tosylate and nitrate, wherein j and k are 1. For compounds of Formula (I-II) emphasis is also given to salts when Y is carbonate and sulfate, wherein j is 2 and k is 1, and when Y is phosphate, wherein j is 3 and k is 1.

Where appropriate compounds of Formula (I) may also be in the form of (and/or be used as) an N-oxide.

Compounds of Formula (I) wherein m is 0 may be represented by a compound of Formula (I-Ia) as shown below:

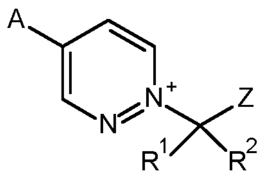

(I-Ia)

wherein $R^1$, $R^2$, A and Z are as defined for compounds of Formula (I).

Compounds of Formula (I) wherein m is 1 may be represented by a compound of Formula (I-Ib) as shown below:

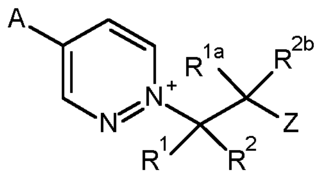

(I-Ib)

wherein $R^1$, $R^2$, $R^{1a}$, $R^{2b}$, A and Z are as defined for compounds of Formula (I).

Compounds of Formula (I) wherein m is 2 may be represented by a compound of Formula (I-Ic) as shown below:

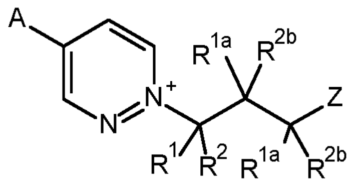

(I-Ic)

wherein $R^1$, $R^2$, $R^{1a}$, $R^{2b}$, A and Z are as defined for compounds of Formula (I).

Compounds of Formula (I) wherein m is 3 may be represented by a compound of Formula (I-Id) as shown below:

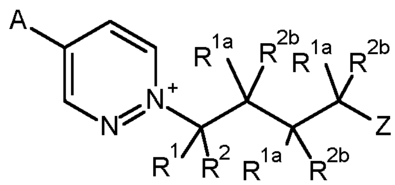

(I-Id)

wherein $R^1$, $R^2$, $R^{1a}$, $R^{2b}$, A and Z are as defined for compounds of Formula (I).

Preferred values of A, $R^1$, $R^2$, $R^{1a}$, $R^{2b}$, $R^8$, $R^{10}$, $R^{12}$, Q, Z, m and p are as set out below, and a compound of Formula (I) according for use in the invention may comprise any combination of said values, unless explictly stated otherwise. The skilled man will appreciate that values for any specified set of embodiments may be combined with values for any other set of embodiments where such combinations are not mutually exclusive, and where not explicitly stated to the contrary.

With respect to substituents $R^1$ and $R^2$, the following combinations may all be found in compounds of Formula (I): $R^1$ is hydrogen and $R^2$ is hydrogen, $R^1$ is methyl and $R^2$ is hydrogen (or $R^1$ is hydrogen and $R^2$ is methyl), $R^1$ is methyl and $R^2$ is methyl. However, most commonly, $R^1$ is hydrogen and $R^2$ is hydrogen.

As stated herein, m is an integer of 0, 1 or 2. Preferably m is 1 or 2, and most preferably m is 1. Where m is 1,

it is preferred that $R^{1a}$ and $R^{2b}$ are each independently selected from the group consisting of hydrogen, hydroxy and methyl. In such cases where m is 1, it is particularly preferred that at least one of $R^{1a}$ and $R^{2b}$ is hydrogen.

Where m is 2 or more, it is preferred that the $R^{1a}$ and $R^{2b}$ borne by the carbon atom adjoining the $CR^1CR^2$ moiety, are each independently selected from the group consisting of hydrogen, hydroxy and methyl, and more preferably that at least one of said $R^{1a}$ and $R^{2b}$ is hydrogen.

As stated herein A is 6-membered heteroaryl selected from the group consisting of:

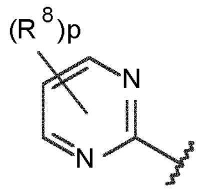
A-I

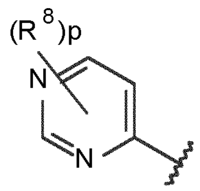
A-II

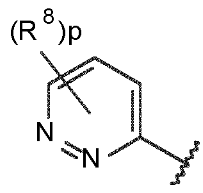
A-III

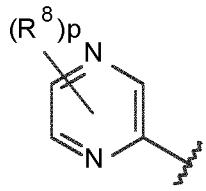
A-IV

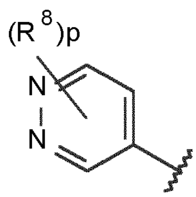
A-V

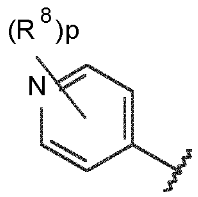
A-VI

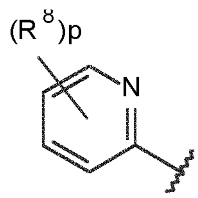
A-VII

wherein the jagged line defines the point of attachment to the remaining part of a compound of Formula (I), p is 0, 1 or 2 and each $R^8$ is independently selected from the group consisting of $NH_2$, methyl and methoxy.

Where p is an integer of 2, it is preferred that each $R^8$ is methyl. However, preferably p is 0 or 1.

In certain embodiments A is preferably A-I, A-II or A-III, and p is preferably 0 or 1. In such embodiments, where p is 0, the skilled man will appreciate that any nitrogen atom in A may be protonated.

Preferably Z is selected from the group consisting of: -C(O)OH, $-C(O)OCH_3$, -S(O)zOH, - $C(O)OCH_2C_6H_5$, $-C(O)OC_6H_5$, $-C(O)NHS(O)_2N(CH_3)_2$. More preferably Z is -C(O)OH or -S(O)zOH.

Specific compounds of Formula (I) for use in the invention as component (A), are described below in the Examples, and in particular in Table A. These include compounds 1.001, 1.002, 1.003, 1.004, 1.005, 1.006, 1.007, 1.008, 1.009, 1.010, 1.011, 1.012, 1.013, 1.014, 1.015, 1.016, 1.017, 1.018, 1.019, 1.020, 1.021, 1.022, 1.023, 1.024, 1.025, 1.026, 1.027, 1.028, 1.029, 1.030, 1.031, 1.032, 1.033, 1.034, 1.035, 2.001, 2.002, 2.003, 2.004, 2.005, 2.006, 2.007, 2.008, 2.009, 2.010, and 2.011. Particularly preferred compounds of Formula (I) for use as component (A) in the invention are selected from 1.001, 1.002, 1.003, 1.004, 1.005, 1.006, 1.007, 1.008, 1.009, 1.010, 1.011, 1.012, 1.013, 1.014, 1.015, 1.016, 1.017, 1.018, 1.019, 1.020, 1.021, 1.022, 1.023, 1.024, 1.025, 1.026, 1.027, 1.028, 1.029, 1.030, 1.031, 1.032, 1.033, 1.034 and 1.035. More preferred still are compounds 1.001, 1.002, 1.003, 1.010, 1.011, 1.021, 1.022, 1.023, 1.027, 1.030, 1.031, 1.032, 1.034 and 1.035.

The compounds of Formula (I) may be prepared according to the following schemes, in which the substituents A, $R^1$, $R^2$, $R^{1a}$, $R^{2b}$, $R^8$, $R^{10}$, $R^{12}$, Q, Z, m and p have (unless otherwise stated explicitly) the definitions described hereinbefore.

The compounds of Formula (I) may be prepared by the alkylation of compounds of formula (X), wherein A is as defined for compounds of Formula (I), with a suitable alkylating agent of formula (W), wherein $R^1$, $R^2$, Q,and Z are as defined for compounds of Formula (I) and LG is a suitable leaving group, for example, halide or pseudohalide such as triflate, mesylate or tosylate, in a suitable solvent at a suitable temperature, as described in reaction scheme 1. Example conditions include stirring a compound of formula (X) with an alkylating agent of formula (W) in a solvent, or mixture of solvents, such as acetone, dichloromethane, dichloroethane, *N,N*-dimethylformamide, acetonitrile, 1,4-dioxane, water, acetic acid or trifluroacetic acid at a temperature between -78°C and 150°C. An alkylating agent of formula (W) may include, but is not limited to, bromoacetic acid, methyl bromoacetate, 3-bromopropionoic acid, methyl 3-bromopropionate, 2-bromo-N-methoxyacetamide, sodium 2-bromoethanesulphonate, 2,2-dimethylpropyl 2-(trifluoromethylsulfonyloxy)ethanesulfonate, 2-bromo-N-methanesulfonylacetamide, 3-bromo-N-methanesulfonylpropanamide, and dimethoxyphosphorylmethyl trifluoromethanesulfonate. -Such alkylating agents and related compounds are either known in the literature or may be prepared by known literature methods. Compounds of Formula (I) which may be described as esters of N-alkyl acids, which include, but are not limited to, esters of carboxylic acids, phosphonic acids, phosphinic

acids, sulfonic acids and sulfinic acids, may be subsequently partially or fully hydrolysed by treament with a suitable reagent, for example, aqueous hydrochloric acid or trimethylsilyl bromide, in a suitable solvent at a suitable temperature between 0°C and 100°C.

**Reaction scheme 1**

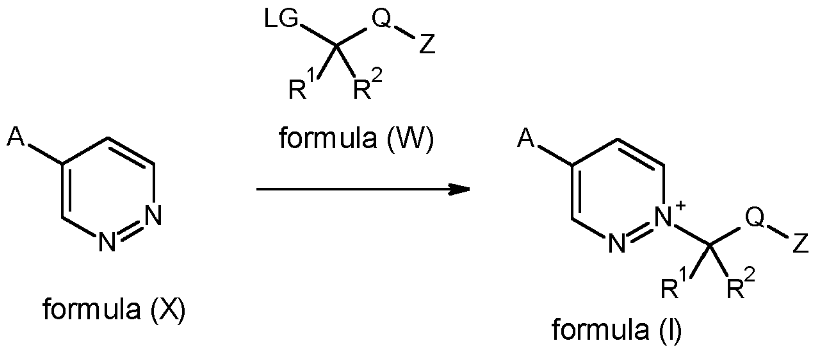


Additonally, compounds of Formula (I) may be prepared by reacting compounds of formula (X), wherein A is as defined for compounds of Formula (I), with a suitably activated electrophilic alkene of formula (B), wherein Z is $-S(O)_2OR^{10}$, or $-C(O)OR^{10}$ and $R^1$, $R^2$, $R^{1a}$, and $R^{10}$ are as defined for compounds of Formula (I), in a suitable solvent at a suitable temperature. Compounds of formula (B) are known in the literature, or may be prepared by known methods. Example reagents include, but are not limited to, acrylic acid, methacrylic acid, crotonic acid, 3,3-dimethylacrylic acid, methyl acrylate, ethene sulfonic acid, isopropyl ethylenesulfonate, and 2,2-dimethylpropyl ethenesulfonate. The direct products of these reactions, which may be described as esters of N-alkyl acids, which include, but are not limited to, esters of carboxylic acids and sulfonic acids, may be subsequently partially or fully hydrolysed by treament with a suitable reagent in a suitable solvent at a suitable temperature, as described in reaction scheme 2.

**Reaction scheme 2**

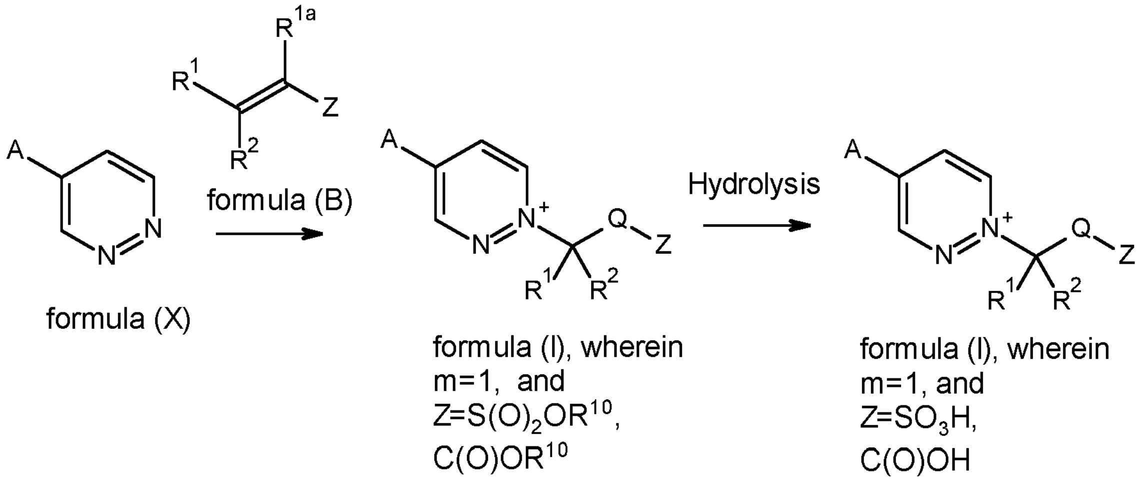


In a related reaction compounds of Formula (I), wherein Q is $C(R^{1a}R^{2b})$, m is 1, 2 or 3 and Z is - S(O)zOH, may be prepared by the reaction of compounds of formula (X), wherein A is as defined for compounds of Formula (I), with a cyclic alkylating agent of formula (E), (F) or (AF), wherein $Y^a$ is $C(R^{1a}R^{2b})$, and $R^1$, $R^2$, $R^{1a}$ and $R^{2b}$ are as defined for compounds of Formula (I), in a suitable solvent at a suitable temperature, as described in reaction scheme 3.

**Reaction scheme 3**

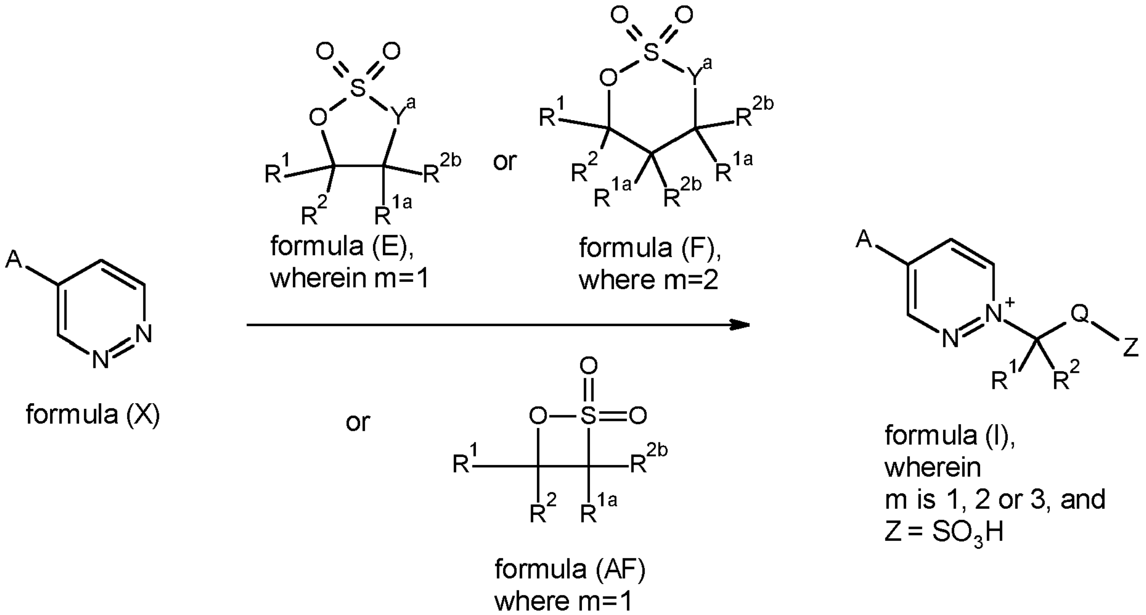


Suitable solvents and suitable temperatures are as previously described. An alkylating agent of formula (E) or (F) may include, but is not limited to, 1,3-propanesultone, 1,4-butanesultone, ethylenesulfate, 1,3-propylene sulfate and 1,2,3-oxathiazolidine 2,2-dioxide. Such alkylating agents and related compounds are either known in the literature or may be prepared by known literature methods.

A compound of Formula (I), wherein m is 0, and Z is -S(O)zOH, may be prepared from a compound of Formula (I), wherein m is 0, and Z is C(O)OR$^{10}$, by treatment with trimethylsilylchloro sulfonate in a suitable solvent at a suitable temperature, as described in reaction scheme 4. Preferred conditions include heating the carboxylate precursor in neat trimethylsilylchlorosulfonate at a temperature between 25°C and 150°C.

**Reaction scheme 4**

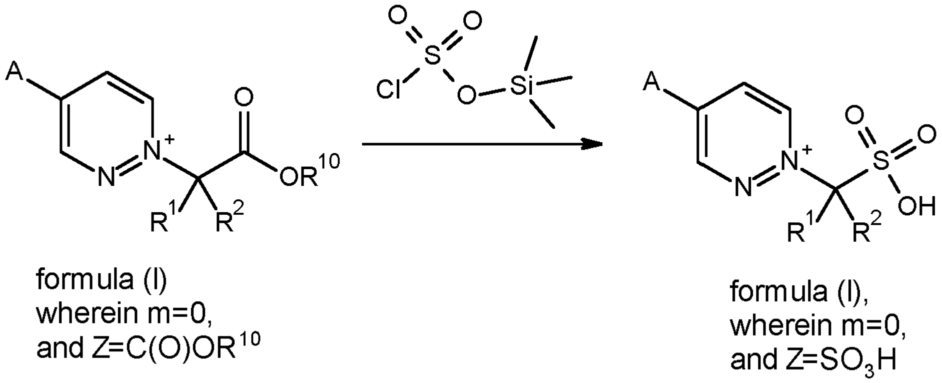


Furthermore, compounds of Formula (I) may be prepared by reacting compounds of formula (X), wherein A is as defined for compounds of Formula (I), with a suitable alcohol of formula (WW), wherein $R^1$, $R^2$, Q, and Z are as defined for compounds of Formula (I), under Mitsunobu-type conditions such as those reported by Petit et al, Tet. Lett. 2008, 49 (22), 3663. Suitable phosphines include triphenylphosphine, suitable azodicarboxylates include diisopropylazodicarboxylate and suitable acids include fluoroboric acid, triflic acid and bis(trifluoromethylsulfonyl)amine, as described in reaction scheme 5. Such alcohols are either known in the literature or may be prepared by known literature methods.

**Reaction scheme 5**

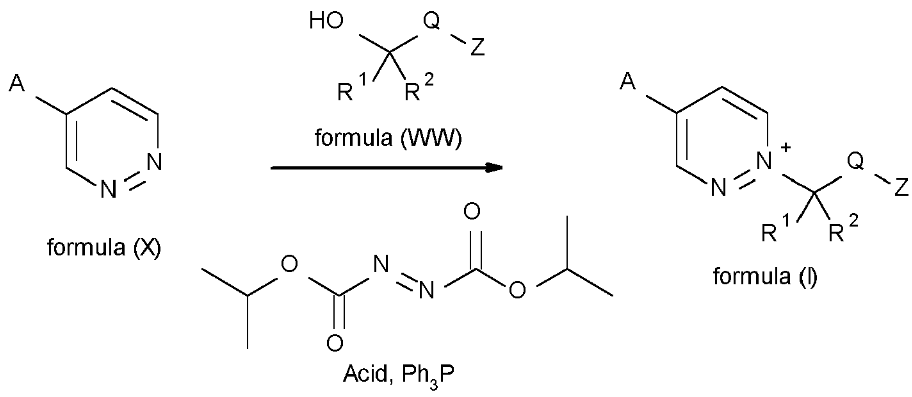


Compounds of Formula (I) may also be prepared by reacting compounds of formula (C), wherein Q, Z, $R^1$, $R^2$, and A are as defined for compounds of Formula (I), with a hydrazine of formula (D) in a suitable solvent or mixture of solvents, in the presence of a suitable acid at a suitable temperature, between -78°C and 150°C, as described in reaction scheme 6. Suitable solvents, or mixtures thereof, include, but are not limited to, alcohols, such as methanol, ethanol and isopropanol, water, aqueous hydrochloric acid, aqueous sulfuric acid, acetic acid and trifluoroacetic acid. Hydrazine compounds of formula (D), for example 2,2-dimethylpropyl 2-hydrazinoethanesulfonate, are either known in the literature or may be prepared by known literature procedures.

**Reaction scheme 6**

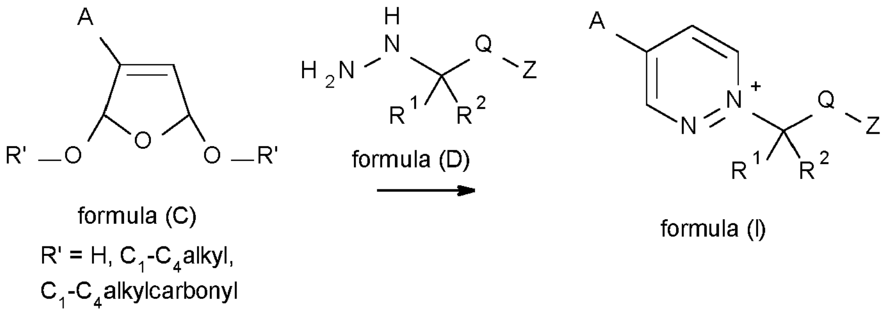


Compounds of formula (C) may be prepared by reacting compounds of formula (G), wherein A is as defined for compounds of Formula (I), with an oxidising agent in a suitable solvent at a suitable temperature, between -78°C and 150°C, optionally in the presence of a suitable base, as described in reaction scheme 7.

**Reaction scheme 7**

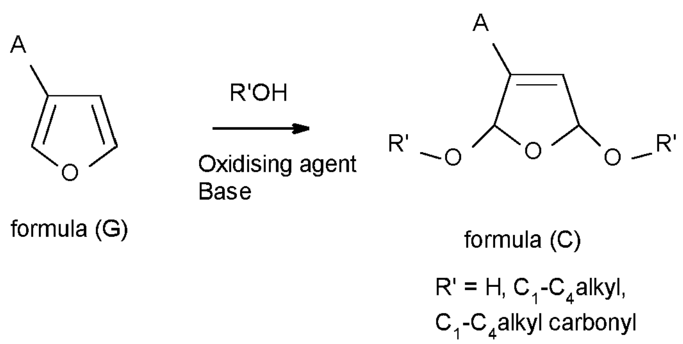


Suitable oxidising agents include, but are not limited to, bromine and suitable solvents include, but are not limited to alcohols such as methanol, ethanol and isopropanol. Suitable bases include, but are not limited to, sodium bicarbonate, sodium carbonate, potassium bicarbonate, potassium carbonate and potassium acetate. Similar reactions

are known in the literature (for example Hufford, D. L.; Tarbell, D. S.; Koszalka, T. R. J. Amer. Chem. Soc., 1952, 3014). Furans of formula (G) are known in the literature or may be prepared using literature methods. Example methods include, but are not limited to, transition metal cross-couplings such as Stille (for example Farina, V.; Krishnamurthy, V.; Scott, W. J. Organic Reactions, Vol. 50. 1997, and Gazzard, L. et al. J. Med. Chem., 2015, 5053), Suzuki-Miyaura (for example Ando, S.; Matsunaga, H.; Ishizuka, T. J. Org. Chem. 2017, 1266-1272, and Ernst, J. B.; Rakers, L.; Glorius, F. Synthesis, 2017, 260), Negishi (for example Yang, Y.; Oldenhius, N. J.; Buchwald, S. L. Angew. Chem. Int. Ed. 2013, 615, and Braendvang, M.; Gundersen, L. Bioorg. Med. Chem. 2005, 6360), and Kumada (for example Heravi, M. M.; Hajiabbasi, P. Monatsh. Chem., 2012, 1575). The coupling partners may be selected with reference to the specific cross-coupling reaction and target product. Transition metal catalysts, ligands, bases, solvents and temperatures may be selected with reference to the desired cross-coupling and are known in the literature. Cross-coupling reactions using pseudo halogens, including but not limited to, triflates, mesylates, tosylates and anisoles, may also be achieved under related conditions.

In another approach a compound of Formula (I), wherein Q, Z, $R^1$, $R^2$, and A are as defined for compounds of Formula (I), may be prepared from a compound of formula (R) and an oxidant, in a suitable solvent at a suitable temperature, as outlined in reaction scheme 8. Example oxidants include, but are not limited to, 2,3-dichloro-5,6-dicyano-1,4-benzoquinone, tetrachloro-p-benzoquinone, potassium permanganate, manganese dioxide, 2,2,6,6-tetramethyl-1-piperidinyloxy and bromine. Related reactions are known in the literature.

**Reaction scheme 8**

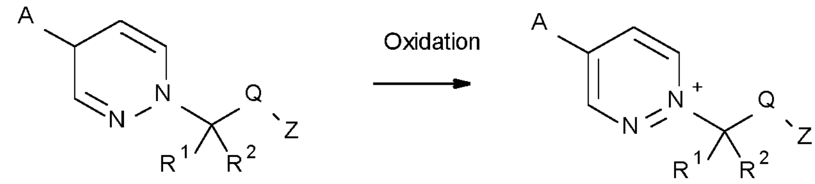


formula (R) formula (I)

A compound of formula (R), wherein Q, Z, $R^1$, $R^2$, and A are as defined for compounds of Formula (I), may be prepared from a compound of formula (S), wherein Q, Z, X, n, $R^1$, and $R^2$ are as defined for compounds of Formula (I), and an organometallic of formula (T), wherein A is as defined for compounds of Formula (I) and M" includes, but is not limited to, organomagnesium, organolithium, organocopper and organozinc reagents, in a suitable solvent at a suitable temperature, optionally in the presence of an additonal transition metal additive, as outlined in reaction scheme 9. Example conditions include treating a compound of formula (S) with a Grignard of formula (T), in the presence of 0.05-100 mol% copper iodide, in a solvent such as tetrahydrofuran at a temperature between -78°C and 100°C. Organometallics of formula (T) are known in the literature, or may be prepared by known literature methods. Compounds of formula (S) may be prepared by analogous reactions to those for the preparation of compounds of Formula (I) from a compound of formula (XX).

**Reaction scheme 9**

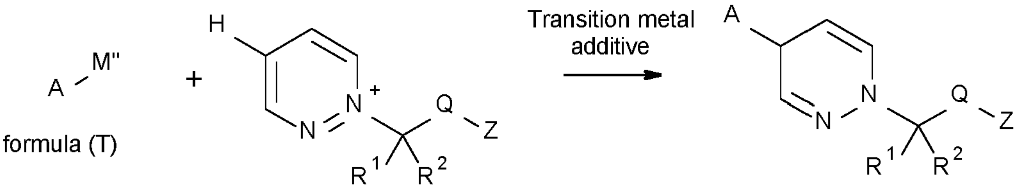


formula (T) formula (S) formula (R)

Biaryl pyridazines of formula (X) are known in the literature or may be prepared using literature methods. Example methods include, but are not limited to, the transition metal cross-coupling of compounds of formula (H) and formula (J), or alternatively compounds of formula (K) and formula (L), in which compounds of formula (J) and formula (L), wherein M' is either an organostannane, organoboronic acid or ester, organotrifluoroborate, organomagnesium, organocopper or organozinc, as outlined in reaction scheme 10. Hal is defined as a halogen or pseudo halogen, for example triflate, mesylate and tosylate. Such cross-couplings include Stille (for example Sauer, J.; Heldmann, D. K. Tetrahedron, 1998, 4297), Suzuki-Miyaura (for example Luebbers, T.; Flohr, A.; Jolidon, S.; David-Pierson, P.; Jacobsen, H.; Ozmen, L.; Baumann, K. Bioorg. Med. Chem. Lett., 2011, 6554), Negishi (for example Imahori, T.; Suzawa, K.;

Kondo, Y. Heterocycles, 2008, 1057), and Kumada (for example Heravi, M. M.; Hajiabbasi, P. Monatsh. Chem., 2012, 1575). The coupling partners may be selected with reference to the specific cross-coupling reaction and target product. Transition metal catalysts, ligands, bases, solvents and temperatures may be selected with reference to the desired cross-coupling and are known in the literature. Compounds of formula (H), formula (K) and formula (L) are known in the literature, or may be prepared by known literature methods.

**Reaction scheme 10**

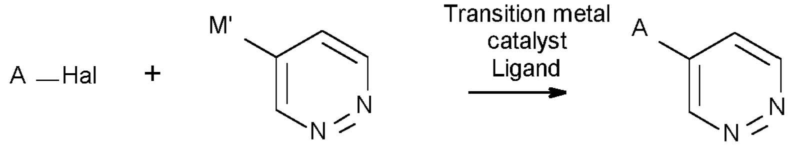


formula (H) formula (J) formula (X)

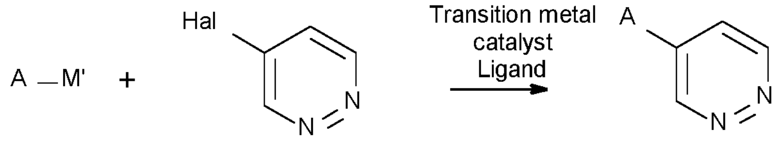


formula (L) formula (K) formula (X)

A compound of formula (J), wherein M' is either an organostannane, organoboronic acid or ester, organotrifluoroborate, organomagnesium, organocopper or organozinc, may be prepared from a compound of formula (XX), by metallation, as outlined in reaction scheme 11. Similar reactions are known in the literature (for example Ramphal et al, WO2015/153683, Unsinn et al., Organic Letters, 15(5), 1128-1131; 2013, Sadler et al., Organic & Biomolecular Chemistry, 12(37), 7318-7327; 2014. Alternatively, an organometallic of formula (J) may be prepared from compounds of formula (K), wherein Hal is defined as a halogen or pseudo halogen, for example triflate, mesylate and tosylate, as described in scheme 11. Example conditions to prepare an compound of formula (J) wherein M' is an organostannane, include treatment of a compound of formula (K) with lithium tributyl tin in an appropriate solvent at an appropriate temperature (for example see WO 2010/038465). Example conditions to prepare compound of formula (J) wherein M' is an organoboronic acid or ester, include treatment of a compound of formula (K) with bis(pinacolato)diboron, in the presence of an appropriate transition metal catalyst, appropriate ligand, appropriate base, in an appropriate solvent at an appropriate temperature (for example KR 2015135626). Compounds of formula (K) and formula (XX) are either known in the literature or can be prepared by known methods.

**Reaction scheme 11**

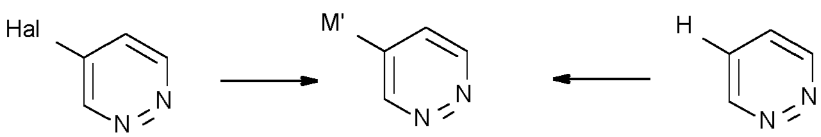

formula (K) formula (J) formula (XX)

Compositions of the invention also comprise, as component (B), at least one compound of Fromula (II) as described hereinbefore.

Compounds of Formula (II) may also used in the form of agronomically acceptable salts. Where a specific compound of Formula (II) is described as being suitable for use as component B, the skilled man will appreciate that this includes any suitable agronomically aceptable salt of that herbicide, for example any salt which may form with amines (for example ammonia, dimethylamine and triethylamine), alkali metal and alkaline earth metal bases or quaternary ammonium bases. Among the alkali metal and alkaline earth metal hydroxides, oxides, alkoxides and hydrogen carbonates and carbonates used as salt formers, emphasis is to be given to the hydroxides, alkoxides, oxides and carbonates

of lithium, sodium, potassium, magnesium and calcium, but especially those of sodium, magnesium and calcium. The corresponding trimethylsulfonium salt may also be used. The present invention also include the use of hydrates which may be formed during the salt formation for any compound of Formula (II).

Preferred substituents for compounds of Formula (II) are as follows.

Preferably $R^{B11}$ is H, $C_1$-$C_6$ alkyl or $C_1$-$C_6$haloalkyl, more preferably methyl, ethyl or $CHF_2$, and more preferably still, H or methyl.

Preferably $R^{B6}$ is H.

Preferably $Q^{B1}$ is either a phenyl ring or a pyridinyl ring, each of which is optionally substituted by 1 to 3 $R^4$. Preferably $Q^{B1}$ is a phenyl ring substituted by 1 to 2 $R^{B4}$.

Preferably $Q^{B2}$ is a phenyl ring, optionally substituted by 1 to 3 $R^{B5}$. More preferably $Q^{B1}$ is phenyl substituted by 1-3 $R^{B5}$.

Preferably each $R^{B4}$ is independently halogen, $C_1$-$C_4$ alkyl, $C_1$-$C_3$ haloalkyl, $C_1$-$C_3$alkoxy, or $C_1$-$C_3$haloalkoxy; more preferably chloro, fluoro, bromo, $C_1$-$C_2$haloalkyl, $C_1$-$C_2$haloalkoxy, or $C_1$-$C_2$alkoxy.

Preferably each $R^{B5}$ is independently halogen, $C_1$-$C_4$ alkyl, $C_1$-$C_3$ haloalkyl, $C_1$-$C_3$alkoxy, or $C_1$-$C_3$haloalkoxy; more preferably chloro, fluoro, bromo, $C_1$-$C_2$haloalkyl, $C_1$-$C_2$haloalkoxy, or $C_1$-$C_2$alkoxy; more preferably still fluoro.

Particularly preferred compounds of Formula (II) for use as component B in compositions of the invention are shown below in Table 1.

**Table 1 Compounds of Formula (II) for use in compositions described herein.**

| Compound No. | Name | Structure |
|---|---|---|
| 2.1 | N-(2-fluorophenyl)-2-oxo-4-[3-(trifluoromethyl) phenyl]pyrrolidine-3-carboxamide | 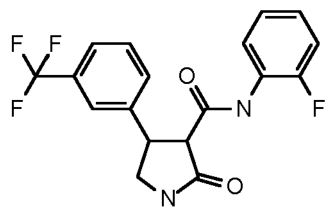 |
| 2.2 | N-(2,3-difluorophenyl)-2-oxo-4-[3-(trifluoromethyl) phenyl]pyrrolidine-3-carboxamide | 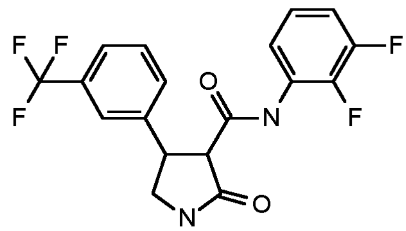 |
| 2.3 | 2-oxo-4-[3-(trifluoromethyl)phenyl]-N-(2,3,4-trifluorophenyl)pyrrolidine-3-carboxamide | 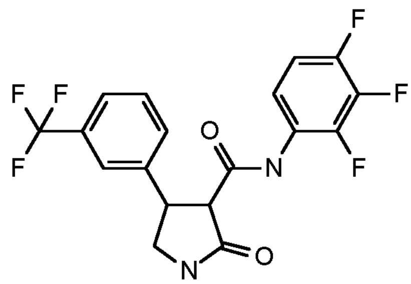 |
| 2.4 | N-(2-fluorophenyl)-1-methyl-2-oxo-4-[3-(trifluoromethyl)phenyl]pyrrolidine-3-carboxamide | 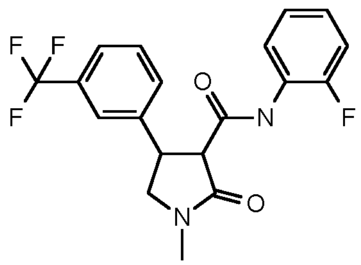 |

(continued)

| Compound No. | Name | Structure |
|---|---|---|
| 2.5 | N-(2-fluorophenyl)-2-oxo-4-[4-(trifluoromethyl) phenyl]pyrrolidine-3-carboxamide | 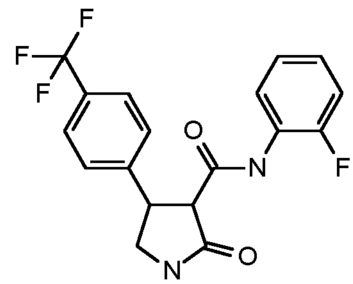 |
| 2.6 | N-(2-fluorophenyl)-1-methyl-2-oxo-4-[4-(trifluoromethyl)phenyl]pyrrolidine-3-carboxamide | 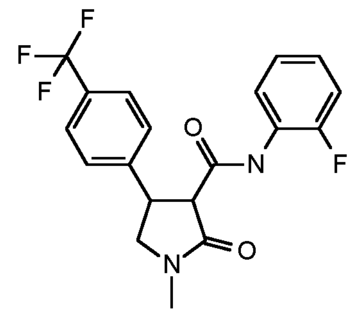 |
| 2.7 | N-(2,3-difluorophenyl)-2-oxo-4-[4-(trifluoromethyl) phenyl]pyrrolidine-3-carboxamide | 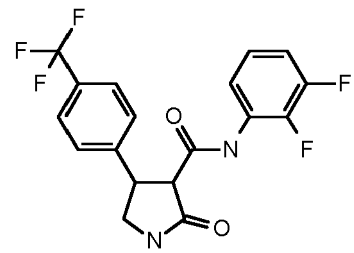 |
| 2.8 | N-(2,3-difluorophenyl)-1-methyl-2-oxo-4-[4-(trifluoromethyl)phenyl]pyrrolidine-3-carboxamide | 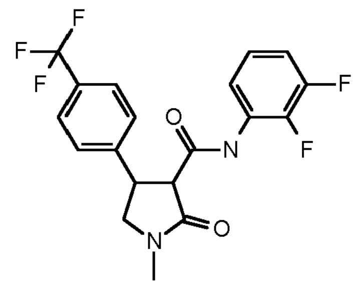 |
| 2.9 | 2-oxo-4-[4-(trifluoromethyl)phenyl]-N-(2,3,4-trifluorophenyl)pyrrolidine-3-carboxamide | 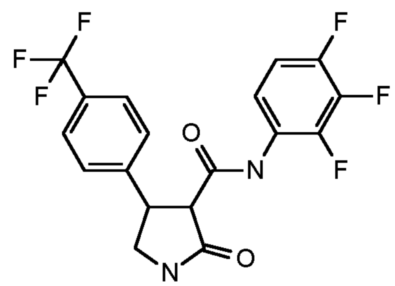 |

(continued)

| Compound No. | Name | Structure |
|---|---|---|
| 2.10 | N-(2-fluorophenyl)-4-(4-fluorophenyl)-1-methyl-2-oxo-pyrrolidine-3-carboxamide | 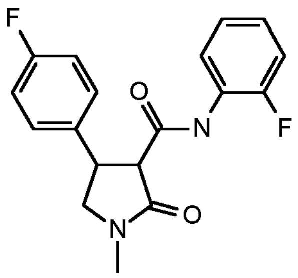 |
| 2.11 | N-(2,3-difluorophenyl)-4-(3,4-difluorophenyl)-2-oxo-pyrrolidine-3-carboxamide | 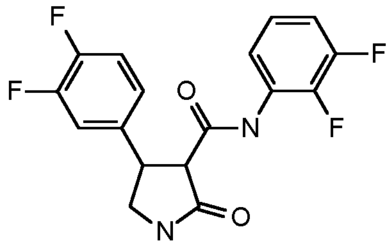 |
| 2.12 | 4-(3,4-difluorophenyl)-N-(2-fluorophenyl)-2-oxo-pyrrolidine-3-carboxamide | 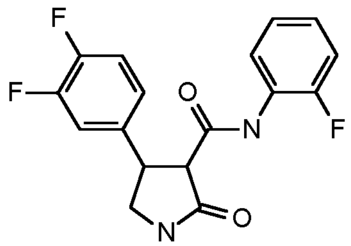 |
| 2.13 | N-(2,4-difluorophenyl)-4-(3,5-difluorophenyl)-2-oxo-pyrrolidine-3-carboxamide | 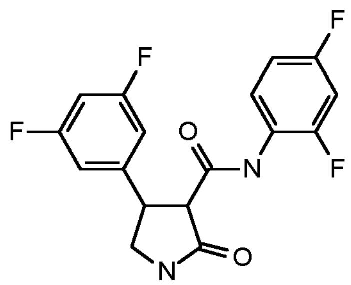 |
| 2.14 | N-(2,3-difluorophenyl)-4-(3-isopropylphenyl)-2-oxo-pyrrolidine-3-carboxamide | 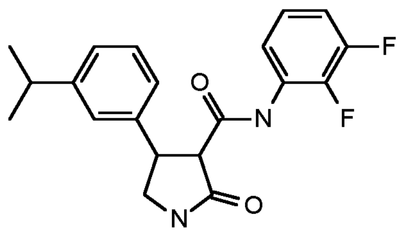 |
| 2.15 | N-(2,3-difluorophenyl)-2-oxo-4-[6-(trifluoromethyl)-3-pyridyl]pyrrolidine-3-carboxamide | 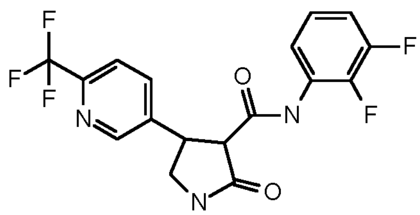 |

(continued)

| Compound No. | Name | Structure |
|---|---|---|
| 2.16 | 4-(3,5-difluorophenyl)-N-[3-fluoro-2-(trifluoromethyl)phenyl]-1-methyl-2-oxo-pyrrolidine-3-carboxamide | 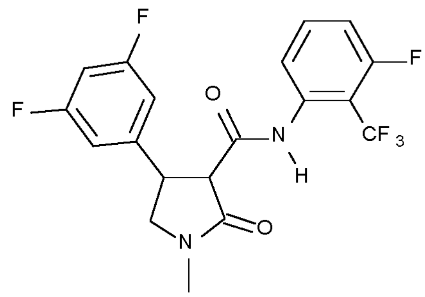 |
| 2.17 | N-(2,4-difluorophenyl)-4-(3,5-difluorophenyl)-1-methyl-2-oxo-pyrrolidine-3-carboxamide | 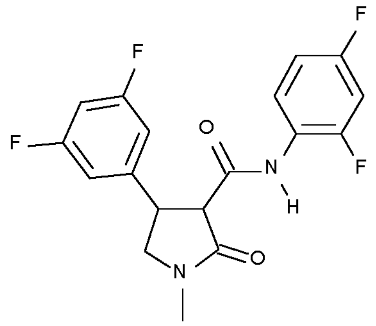 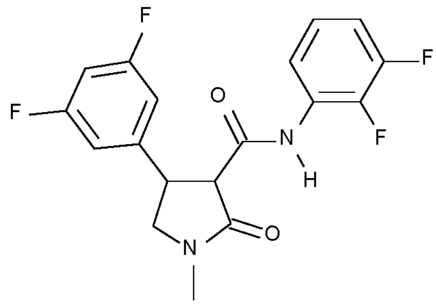 |
| 2.18 | N-(2,3-difluorophenyl)-4-(3,5-difluorophenyl)-1-methyl-2-oxo-pyrrolidine-3-carboxamide | 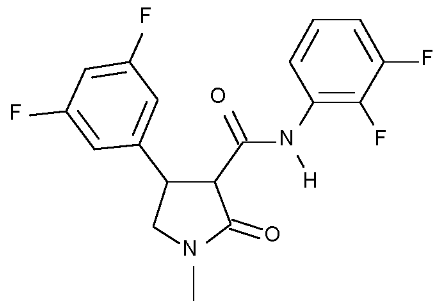 |

In one embodiment B is compound 2.1.

In one embodiment B is compound 2.2.

In one embodiment B is compound 2.3.

In one embodiment B is compound 2.4.

In one embodiment B is compound 2.5.

In one embodiment B is compound 2.6.

In one embodiment B is compound 2.7.

In one embodiment B is compound 2.8.

In one embodiment B is compound 2.9.

In one embodiment B is compound 2.10.

In one embodiment B is compound 2.11.

In one embodiment B is compound 2.12.

In one embodiment B is compound 2.13.

In one embodiment B is compound 2.14.

In one embodiment B is compound 2.15.

In one embodiment B is compound 2.16.

In one embodiment B is compound 2.17.

In one embodiment B is compound 2.18.

Compounds of formula (II) as described herein may be made as described in WO2015/084796 and WO 2016/094117.

Throughout this document the expression "composition" should be interpreted as meaning the various mixtures or combinations of components (A) and (B), for example in a single "ready-mix" form, in a combined spray mixture composed from separate formulations of the single active ingredient components, such as a "tank-mix", and in a combined use of the single active ingredients when applied in a sequential manner, i.e. one after the other with a reasonably short period, such as a few hours or days. The order of applying the components (A) and (B) is not essential for working the present invention.

The term "herbicide" as used herein means a compound that controls or modifies the growth of plants. The term "herbicidally effective amount" means the quantity of such a compound or combination of such compounds that is capable of producing a controlling or modifying effect on the growth of plants. Controlling or modifying effects include all deviation from natural development, for example killing, retardation, leaf burn, albinism, dwarfing and the like.

The term "locus" as used herein means fields in or on which plants are growing, or where seeds of cultivated plants are sown, or where seed will be placed into the soil. It includes soil, seeds, and seedlings, as well as established vegetation.

The term "plants" refers to all physical parts of a plant, including seeds, seedlings, saplings, roots, tubers, stems, stalks, foliage, and fruits.

The term "plant propagation material" denotes all generative parts of a plant, for example seeds or vegetative parts of plants such as cuttings and tubers. It includes seeds in the strict sense, as well as roots, fruits, tubers, bulbs, rhizomes, and parts of plants.

The term "safener" as used herein means a chemical that when used in combination with a herbicide reduces the undesirable effects of the herbicide on non-target organisms, for example, a safener protects crops from injury by herbicides but does not prevent the herbicide from killing the weeds.

Crops of useful plants in which the composition according to the invention can be used include perennial and annual crops, such as berry plants for example blackberries, blueberries, cranberries, raspberries and strawberries; cereals for example barley, maize (corn), millet, oats, rice, rye, sorghum triticale and wheat; fibre plants for example cotton, flax, hemp, jute and sisal; field crops for example sugar and fodder beet, coffee, hops, mustard, oilseed rape (canola), poppy, sugar cane, sunflower, tea and tobacco; fruit trees for example apple, apricot, avocado, banana, cherry, citrus, nectarine, peach, pear and plum; grasses for example Bermuda grass, bluegrass, bentgrass, centipede grass, fescue, ryegrass, St. Augustine grass and Zoysia grass; herbs such as basil, borage, chives, coriander, lavender, lovage, mint, oregano, parsley, rosemary, sage and thyme; legumes for example beans, lentils, peas and soya beans; nuts for example almond, cashew, ground nut, hazelnut, peanut, pecan, pistachio and walnut; palms for example oil palm; ornamentals for example flowers, shrubs and trees; other trees, for example cacao, coconut, olive and rubber; vegetables for example asparagus, aubergine, broccoli, cabbage, carrot, cucumber, garlic, lettuce, marrow, melon, okra, onion, pepper, potato, pumpkin, rhubarb, spinach and tomato; and vines for example grapes.

Crops are to be understood as being those which are naturally occurring, obtained by conventional methods of breeding, or obtained by genetic engineering. They include crops which contain so-called output traits (e.g. improved storage stability, higher nutritional value and improved flavour).

Crops are to be understood as also including those crops which have been rendered tolerant to herbicides or classes of herbicides (e.g. ALS-, GS-, EPSPS-, PPO-, ACCase- and HPPD-inhibitors) by conventional methods of breeding or by genetic engineering. An example of a crop that has been rendered tolerant to imidazolinones, e.g. imazamox, by conventional methods of breeding is Clearfield® summer rape (canola). Examples of crops that have been rendered tolerant to herbicides by genetic engineering methods include e.g. glyphosate- and glufosinate-resistant maize varieties commercially available under the trade names RoundupReady® and LibertyLink®.

Crops are also to be understood as being those which have been rendered resistant to harmful insects by genetic engineering methods, for example Bt maize (resistant to European corn borer), Bt cotton (resistant to cotton boll weevil) and also Bt potatoes (resistant to Colorado beetle). Examples of Bt maize are the Bt 176 maize hybrids of NK® (Syngenta Seeds). The Bt toxin is a protein that is formed naturally by *Bacillus thuringiensis* soil bacteria. Examples of toxins, or transgenic plants able to synthesise such toxins, are described in EP-A-451 878, EP-A-374 753, WO 93/07278, WO 95/34656, WO 03/052073 and EP-A-427 529. Examples of transgenic plants comprising one or more genes that

code for an insecticidal resistance and express one or more toxins are KnockOut® (maize), Yield Gard® (maize), NuCOTIN33B® (cotton), Bollgard® (cotton), NewLeaf® (potatoes), NatureGard® and Protexcta®. Plant crops or seed material thereof can be both resistant to herbicides and, at the same time, resistant to insect feeding ("stacked" transgenic events). For example, seed can have the ability to express an insecticidal Cry3 protein while at the same time being tolerant to glyphosate.

Compositions of the invention can typically be used to control a wide variety of monocotyledonous and dicotyledonous weed species. Examples of monocotyledonous species that can typically be controlled include *Alopecurus myosuroides, Avena fatua, Brachiaria plantaginea, Bromus tectorum, Cyperus esculentus, Digitaria sanguinalis, Echinochloa crus-galli, Lolium perenne, Lolium multiflorum, Panicum miliaceum, Poa annua, Setaria viridis, Setaria faberi and Sorghum bicolor.* Examples of dicotyledonous species that can be controlled include *Abutilon theophrasti, Amaranthus retroflexus, Bidens pilosa, Chenopodium album, Euphorbia heterophylla, Galium aparine, Ipomoea hederacea, Kochia scoparia, Polygonum convolvulus, Sida spinosa, Sinapis arvensis, Solan um nigrum, Stellaria media, Veronica persica and Xanthium strumarium.*

In all aspects of the invention, in any particular embodiment, the weeds, e.g. to be controlled and/or growth-inhibited, may be monocotyledonous or dicotyledonous weeds, which are tolerant or resistant to one or more other herbicides for example, HPPD inhibitor herbicides such as mesotrione, PSII inhibitor herbicides such as atrazine or EPSPS inhibitors such as glyphosate. Such weeds include, but are not limited to resistant Amaranthus biotypes.

Compositions of this invention can also be mixed with one or more further pesticides including herbicides [typically different to the herbicides of Formula (I) and those of component (B)] fungicides, insecticides, nematocides, bactericides, acaricides, growth regulators, chemosterilants, semiochemicals, repellents, attractants, pheromones, feeding stimulants or other biologically active compounds to form a multi-component pesticide giving an even broader spectrum of agricultural protection.

Similarly compositions of the invention (which includes those comprising one or more additional pesticide as described in the preceding paragraph) can further include one or more safeners. In particular, the following safeners are especially preferred: AD 67 (MON 4660), benoxacor, cloquintocet-mexyl, cyometrinil, cyprosulfamide, dichlormid, dicyclonon, dietholate, fenchlorazole-ethyl, fenclorim, flurazole, fluxofenim, furilazole, furilazome, isoxadifen-ethyl, mefenpyr-diethyl, mephenate, oxabetrinil, naphthalic anhydride (CAS RN 81-84-5), TI-35, N-isopropyl-4-(2-methoxybenzoylsulfamoyl)-benzamide (CAS RN 221668-34-4) and N-(2-methoxybenzoyl)-4-[(methylaminocarbonyl)amino]benzenesulfonamide. Such safeners may also be used in the form of esters or salts, as mentioned e.g. in The Pesticide Manual, 15th Ed. (BCPC), 2009. Thus, the reference to cloquintocet-mexyl also applies to cloquintocet and to a lithium, sodium, potassium, calcium, magnesium, aluminium, iron, ammonium, quaternary ammonium, sulfonium or phosphonium salt thereof as disclosed in WO02/34048 and the reference to fenchlorazole-ethyl also applies to fenchlorazole, etc.

The compositions of the invention can be applied before or after planting of the crops, before weeds emerge (pre-emergence application) or after weeds emerge (post-emergence application). Where a safener is combined with mixtures of the invention, it is preferred that the mixing ratio of compound of Formula (I) to safener is from 100:1 to 1:10, especially from 20:1 to 1:1.

It is possible that the safener and the compositions of the invention are applied simultaneously. For example, the safener and the composition of the invention might be applied to the locus pre-emergence or might be applied to the crop post-emergence. It is also possible that the safener and the composition of the invention are applied sequentially. For example, the safener might be applied before sowing the seeds as a seed treatment and the composition of the invention might be applied to the locus pre-emergence or might be applied to the crop post-emergence.

However, the skilled man will appreciate that compositions of the invention are particularly useful in non-selective burn-down applications, and as such may also be used to control volunteer or escape crop plants. In such situations, it is clearly not necessary to include a safener in a composition of the invention.

In general, the mixing ratio (by weight) of the compound of Formula (I) to the compound of component B is from 0.01:1 to 100:1, more preferably from 0.025:1 to 20:1, even more preferably from 1:30 to 20:1. Thus, the preferred ratio ranges for preferred compositions of the invention are given in Table 2 below.

**Table 2: Exemplar ratio ranges for specific compositions of the invention**

| Composition Number | (A) Compound of Formula (I) | (B) Compound of Formula (II) | Typical Weight Ratio | Preferred Weight Ratio | More Preferred Weight Ratio |
|---|---|---|---|---|---|
| M1 | 1.001 | 2.1 | 0.01:1 to 100:1 | 0.025:1 to 20:1 | 1:30 to 20:1 |
| M2 | 1.002 | 2.1 | 0.01:1 to 100:1 | 0.025:1 to 20:1 | 1:30 to 20:1 |

(continued)

| Composition Number | (A) Compound of Formula (I) | (B) Compound of Formula (II) | Typical Weight Ratio | Preferred Weight Ratio | More Preferred Weight Ratio |
|---|---|---|---|---|---|
| M3 | 1.003 | 2.1 | 0.01:1 to 100:1 | 0.025:1 to 20:1 | 1:30 to 20:1 |
| M4 | 1.004 | 2.1 | 0.01:1 to 100:1 | 0.025:1 to 20:1 | 1:30 to 20:1 |
| M5 | 1.005 | 2.1 | 0.01:1 to 100:1 | 0.025:1 to 20:1 | 1:30 to 20:1 |
| M6 | 1.006 | 2.1 | 0.01:1 to 100:1 | 0.025:1 to 20:1 | 1:30 to 20:1 |
| M7 | 1.007 | 2.1 | 0.01:1 to 100:1 | 0.025:1 to 20:1 | 1:30 to 20:1 |
| M8 | 1.008 | 2.1 | 0.01:1 to 100:1 | 0.025:1 to 20:1 | 1:30 to 20:1 |
| M9 | 1.009 | 2.1 | 0.01:1 to 100:1 | 0.025:1 to 20:1 | 1:30 to 20:1 |
| M10 | 1.010 | 2.1 | 0.01:1 to 100:1 | 0.025:1 to 20:1 | 1:30 to 20:1 |
| M11 | 1.011 | 2.1 | 0.01:1 to 100:1 | 0.025:1 to 20:1 | 1:30 to 20:1 |
| M12 | 1.012 | 2.1 | 0.01:1 to 100:1 | 0.025:1 to 20:1 | 1:30 to 20:1 |
| M13 | 1.013 | 2.1 | 0.01:1 to 100:1 | 0.025:1 to 20:1 | 1:30 to 20:1 |
| M14 | 1.014 | 2.1 | 0.01:1 to 100:1 | 0.025:1 to 20:1 | 1:30 to 20:1 |
| M15 | 1.015 | 2.1 | 0.01:1 to 100:1 | 0.025:1 to 20:1 | 1:30 to 20:1 |
| M16 | 1.016 | 2.1 | 0.01:1 to 100:1 | 0.025:1 to 20:1 | 1:30 to 20:1 |
| M17 | 1.017 | 2.1 | 0.01:1 to 100:1 | 0.025:1 to 20:1 | 1:30 to 20:1 |
| M18 | 1.018 | 2.1 | 0.01:1 to 100:1 | 0.025: 1 to 20:1 | 1:30 to 20:1 |
| M19 | 1.019 | 2.1 | 0.01:1 to 100:1 | 0.025: 1 to 20:1 | 1:30 to 20:1 |
| M20 | 1.020 | 2.1 | 0.01:1 to 100:1 | 0.025: 1 to 20:1 | 1:30 to 20:1 |
| M21 | 1.021 | 2.1 | 0.01:1 to 100:1 | 0.025: 1 to 20:1 | 1:30 to 20:1 |
| M22 | 1.022 | 2.1 | 0.01:1 to 100:1 | 0.025: 1 to 20:1 | 1:30 to 20:1 |
| M23 | 1.023 | 2.1 | 0.01:1 to 100:1 | 0.025: 1 to 20:1 | 1:30 to 20:1 |

(continued)

| Composition Number | (A) Compound of Formula (I) | (B) Compound of Formula (II) | Typical Weight Ratio | Preferred Weight Ratio | More Preferred Weight Ratio |
|---|---|---|---|---|---|
| M24 | 1.024 | 2.1 | 0.01:1 to 100: 1 | 0.025: 1 to 20:1 | 1:30 to 20:1 |
| M25 | 1.025 | 2.1 | 0.01:1 to 100: 1 | 0.025: 1 to 20:1 | 1:30 to 20:1 |
| M26 | 1.026 | 2.1 | 0.01:1 to 100: 1 | 0.025: 1 to 20:1 | 1:30 to 20:1 |
| M27 | 1.027 | 2.1 | 0.01:1 to 100: 1 | 0.025: 1 to 20:1 | 1:30 to 20:1 |
| M28 | 1.028 | 2.1 | 0.01:1 to 100: 1 | 0.025: 1 to 20:1 | 1:30 to 20:1 |
| M29 | 1.029 | 2.1 | 0.01:1 to 100: 1 | 0.025: 1 to 20:1 | 1:30 to 20:1 |
| M30 | 1.030 | 2.1 | 0.01:1 to 100: 1 | 0.025: 1 to 20:1 | 1:30 to 20:1 |
| M31 | 1.031 | 2.1 | 0.01:1 to 100: 1 | 0.025: 1 to 20:1 | 1:30 to 20:1 |
| M32 | 1.032 | 2.1 | 0.01:1 to 100: 1 | 0.025: 1 to 20:1 | 1:30 to 20:1 |
| M33 | 1.033 | 2.1 | 0.01:1 to 100: 1 | 0.025: 1 to 20:1 | 1:30 to 20:1 |
| M34 | 1.034 | 2.1 | 0.01:1 to 100: 1 | 0.025: 1 to 20:1 | 1:30 to 20:1 |
| M35 | 1.035 | 2.1 | 0.01:1 to 100: 1 | 0.025: 1 to 20:1 | 1:30 to 20:1 |
| M36 | 1.001 | 2.2 | 0.01:1 to 100: 1 | 0.025: 1 to 20:1 | 1:30 to 20:1 |
| M37 | 1.002 | 2.2 | 0.01:1 to 100: 1 | 0.025: 1 to 20:1 | 1:30 to 20:1 |
| M38 | 1.003 | 2.2 | 0.01:1 to 100: 1 | 0.025: 1 to 20:1 | 1:30 to 20:1 |
| M39 | 1.004 | 2.2 | 0.01:1 to 100: 1 | 0.025: 1 to 20:1 | 1:30 to 20:1 |
| M40 | 1.005 | 2.2 | 0.01:1 to 100: 1 | 0.025: 1 to 20:1 | 1:30 to 20:1 |
| M41 | 1.006 | 2.2 | 0.01:1 to 100: 1 | 0.025: 1 to 20:1 | 1:30 to 20:1 |
| M42 | 1.007 | 2.2 | 0.01:1 to 100: 1 | 0.025: 1 to 20:1 | 1:30 to 20:1 |
| M43 | 1.008 | 2.2 | 0.01:1 to 100: 1 | 0.025: 1 to 20:1 | 1:30 to 20:1 |
| M44 | 1.009 | 2.2 | 0.01:1 to 100: 1 | 0.025: 1 to 20:1 | 1:30 to 20:1 |

(continued)

| Composition Number | (A) Compound of Formula (I) | (B) Compound of Formula (II) | Typical Weight Ratio | Preferred Weight Ratio | More Preferred Weight Ratio |
|---|---|---|---|---|---|
| M45 | 1.010 | 2.2 | 0.01:1 to 100: 1 | 0.025: 1 to 20:1 | 1:30 to 20:1 |
| M46 | 1.011 | 2.2 | 0.01:1 to 100: 1 | 0.025: 1 to 20:1 | 1:30 to 20:1 |
| M47 | 1.012 | 2.2 | 0.01:1 to 100: 1 | 0.025: 1 to 20:1 | 1:30 to 20:1 |
| M48 | 1.013 | 2.2 | 0.01:1 to 100: 1 | 0.025: 1 to 20:1 | 1:30 to 20:1 |
| M49 | 1.014 | 2.2 | 0.01:1 to 100: 1 | 0.025: 1 to 20:1 | 1:30 to 20:1 |
| M50 | 1.015 | 2.2 | 0.01:1 to 100: 1 | 0.025: 1 to 20:1 | 1:30 to 20:1 |
| M51 | 1.016 | 2.2 | 0.01:1 to 100: 1 | 0.025: 1 to 20:1 | 1:30 to 20:1 |
| M52 | 1.017 | 2.2 | 0.01:1 to 100: 1 | 0.025: 1 to 20:1 | 1:30 to 20:1 |
| M53 | 1.018 | 2.2 | 0.01:1 to 100: 1 | 0.025: 1 to 20:1 | 1:30 to 20:1 |
| M54 | 1.019 | 2.2 | 0.01:1 to 100: 1 | 0.025: 1 to 20:1 | 1:30 to 20:1 |
| M55 | 1.020 | 2.2 | 0.01:1 to 100: 1 | 0.025: 1 to 20:1 | 1:30 to 20:1 |
| M56 | 1.021 | 2.2 | 0.01:1 to 100: 1 | 0.025: 1 to 20:1 | 1:30 to 20:1 |
| M57 | 1.022 | 2.2 | 0.01:1 to 100: 1 | 0.025: 1 to 20:1 | 1:30 to 20:1 |
| M58 | 1.023 | 2.2 | 0.01:1 to 100: 1 | 0.025: 1 to 20:1 | 1:30 to 20:1 |
| M59 | 1.024 | 2.2 | 0.01:1 to 100: 1 | 0.025: 1 to 20:1 | 1:30 to 20:1 |
| M60 | 1.025 | 2.2 | 0.01:1 to 100: 1 | 0.025: 1 to 20:1 | 1:30 to 20:1 |
| M61 | 1.026 | 2.2 | 0.01:1 to 100: 1 | 0.025: 1 to 20:1 | 1:30 to 20:1 |
| M62 | 1.027 | 2.2 | 0.01:1 to 100: 1 | 0.025: 1 to 20:1 | 1:30 to 20:1 |
| M63 | 1.028 | 2.2 | 0.01:1 to 100: 1 | 0.025: 1 to 20:1 | 1:30 to 20:1 |
| M64 | 1.029 | 2.2 | 0.01:1 to 100: 1 | 0.025: 1 to 20:1 | 1:30 to 20:1 |
| M65 | 1.030 | 2.2 | 0.01:1 to 100: 1 | 0.025: 1 to 20:1 | 1:30 to 20:1 |

(continued)

| Composition Number | (A) Compound of Formula (I) | (B) Compound of Formula (II) | Typical Weight Ratio | Preferred Weight Ratio | More Preferred Weight Ratio |
|---|---|---|---|---|---|
| M66 | 1.031 | 2.2 | 0.01:1 to 100: 1 | 0.025: 1 to 20:1 | 1:30 to 20:1 |
| M67 | 1.032 | 2.2 | 0.01:1 to 100: 1 | 0.025: 1 to 20:1 | 1:30 to 20:1 |
| M68 | 1.033 | 2.2 | 0.01:1 to 100: 1 | 0.025: 1 to 20:1 | 1:30 to 20:1 |
| M69 | 1.034 | 2.2 | 0.01:1 to 100: 1 | 0.025: 1 to 20:1 | 1:30 to 20:1 |
| M70 | 1.035 | 2.2 | 0.01:1 to 100: 1 | 0.025: 1 to 20:1 | 1:30 to 20:1 |
| M71 | 1.001 | 2.3 | 0.01:1 to 100: 1 | 0.025: 1 to 20:1 | 1:30 to 20:1 |
| M72 | 1.002 | 2.3 | 0.01:1 to 100: 1 | 0.025: 1 to 20:1 | 1:30 to 20:1 |
| M73 | 1.003 | 2.3 | 0.01:1 to 100: 1 | 0.025: 1 to 20:1 | 1:30 to 20:1 |
| M74 | 1.004 | 2.3 | 0.01:1 to 100: 1 | 0.025: 1 to 20:1 | 1:30 to 20:1 |
| M75 | 1.005 | 2.3 | 0.01:1 to 100: 1 | 0.025: 1 to 20:1 | 1:30 to 20:1 |
| M76 | 1.006 | 2.3 | 0.01:1 to 100: 1 | 0.025: 1 to 20:1 | 1:30 to 20:1 |
| M77 | 1.007 | 2.3 | 0.01:1 to 100: 1 | 0.025: 1 to 20:1 | 1:30 to 20:1 |
| M78 | 1.008 | 2.3 | 0.01:1 to 100: 1 | 0.025: 1 to 20:1 | 1:30 to 20:1 |
| M79 | 1.009 | 2.3 | 0.01:1 to 100: 1 | 0.025: 1 to 20:1 | 1:30 to 20:1 |
| M80 | 1.010 | 2.3 | 0.01:1 to 100: 1 | 0.025: 1 to 20:1 | 1:30 to 20:1 |
| M81 | 1.011 | 2.3 | 0.01:1 to 100: 1 | 0.025: 1 to 20:1 | 1:30 to 20:1 |
| M82 | 1.012 | 2.3 | 0.01:1 to 100: 1 | 0.025: 1 to 20:1 | 1:30 to 20:1 |
| M83 | 1.013 | 2.3 | 0.01:1 to 100: 1 | 0.025: 1 to 20:1 | 1:30 to 20:1 |
| M84 | 1.014 | 2.3 | 0.01:1 to 100: 1 | 0.025: 1 to 20:1 | 1:30 to 20:1 |
| M85 | 1.015 | 2.3 | 0.01:1 to 100: 1 | 0.025: 1 to 20:1 | 1:30 to 20:1 |
| M86 | 1.016 | 2.3 | 0.01:1 to 100: 1 | 0.025: 1 to 20:1 | 1:30 to 20:1 |

(continued)

| Composition Number | (A) Compound of Formula (I) | (B) Compound of Formula (II) | Typical Weight Ratio | Preferred Weight Ratio | More Preferred Weight Ratio |
|---|---|---|---|---|---|
| M87 | 1.017 | 2.3 | 0.01:1 to 100: 1 | 0.025: 1 to 20:1 | 1:30 to 20:1 |
| M88 | 1.018 | 2.3 | 0.01:1 to 100: 1 | 0.025: 1 to 20:1 | 1:30 to 20:1 |
| M89 | 1.019 | 2.3 | 0.01:1 to 100: 1 | 0.025: 1 to 20:1 | 1:30 to 20:1 |
| M90 | 1.020 | 2.3 | 0.01:1 to 100: 1 | 0.025: 1 to 20:1 | 1:30 to 20:1 |
| M91 | 1.021 | 2.3 | 0.01:1 to 100: 1 | 0.025: 1 to 20:1 | 1:30 to 20:1 |
| M92 | 1.022 | 2.3 | 0.01:1 to 100: 1 | 0.025: 1 to 20:1 | 1:30 to 20:1 |
| M93 | 1.023 | 2.3 | 0.01:1 to 100: 1 | 0.025: 1 to 20:1 | 1:30 to 20:1 |
| M94 | 1.024 | 2.3 | 0.01:1 to 100: 1 | 0.025: 1 to 20:1 | 1:30 to 20:1 |
| M95 | 1.025 | 2.3 | 0.01:1 to 100: 1 | 0.025: 1 to 20:1 | 1:30 to 20:1 |
| M96 | 1.026 | 2.3 | 0.01:1 to 100: 1 | 0.025: 1 to 20:1 | 1:30 to 20:1 |
| M97 | 1.027 | 2.3 | 0.01:1 to 100: 1 | 0.025: 1 to 20:1 | 1:30 to 20:1 |
| M98 | 1.028 | 2.3 | 0.01:1 to 100: 1 | 0.025: 1 to 20:1 | 1:30 to 20:1 |
| M99 | 1.029 | 2.3 | 0.01:1 to 100: 1 | 0.025: 1 to 20:1 | 1:30 to 20:1 |
| M100 | 1.030 | 2.3 | 0.01:1 to 100: 1 | 0.025: 1 to 20:1 | 1:30 to 20:1 |
| M101 | 1.031 | 2.3 | 0.01:1 to 100: 1 | 0.025: 1 to 20:1 | 1:30 to 20:1 |
| M102 | 1.032 | 2.3 | 0.01:1 to 100: 1 | 0.025: 1 to 20:1 | 1:30 to 20:1 |
| M103 | 1.033 | 2.3 | 0.01:1 to 100: 1 | 0.025: 1 to 20:1 | 1:30 to 20:1 |
| M104 | 1.034 | 2.3 | 0.01:1 to 100: 1 | 0.025: 1 to 20:1 | 1:30 to 20:1 |
| M105 | 1.035 | 2.3 | 0.01:1 to 100: 1 | 0.025: 1 to 20:1 | 1:30 to 20:1 |
| M106 | 1.001 | 2.4 | 0.01:1 to 100: 1 | 0.025: 1 to 20:1 | 1:30 to 20:1 |
| M107 | 1.002 | 2.4 | 0.01:1 to 100: 1 | 0.025: 1 to 20:1 | 1:30 to 20:1 |

(continued)

| Composition Number | (A) Compound of Formula (I) | (B) Compound of Formula (II) | Typical Weight Ratio | Preferred Weight Ratio | More Preferred Weight Ratio |
|---|---|---|---|---|---|
| M108 | 1.003 | 2.4 | 0.01:1 to 100: 1 | 0.025: 1 to 20:1 | 1:30 to 20:1 |
| M109 | 1.004 | 2.4 | 0.01:1 to 100: 1 | 0.025: 1 to 20:1 | 1:30 to 20:1 |
| M110 | 1.005 | 2.4 | 0.01:1 to 100: 1 | 0.025: 1 to 20:1 | 1:30 to 20:1 |
| M111 | 1.006 | 2.4 | 0.01:1 to 100: 1 | 0.025: 1 to 20:1 | 1:30 to 20:1 |
| M112 | 1.007 | 2.4 | 0.01:1 to 100: 1 | 0.025: 1 to 20:1 | 1:30 to 20:1 |
| M113 | 1.008 | 2.4 | 0.01:1 to 100: 1 | 0.025: 1 to 20:1 | 1:30 to 20:1 |
| M114 | 1.009 | 2.4 | 0.01:1 to 100: 1 | 0.025: 1 to 20:1 | 1:30 to 20:1 |
| M115 | 1.010 | 2.4 | 0.01:1 to 100: 1 | 0.025: 1 to 20:1 | 1:30 to 20:1 |
| M116 | 1.011 | 2.4 | 0.01:1 to 100: 1 | 0.025: 1 to 20:1 | 1:30 to 20:1 |
| M117 | 1.012 | 2.4 | 0.01:1 to 100: 1 | 0.025: 1 to 20:1 | 1:30 to 20:1 |
| M118 | 1.013 | 2.4 | 0.01:1 to 100: 1 | 0.025: 1 to 20:1 | 1:30 to 20:1 |
| M119 | 1.014 | 2.4 | 0.01:1 to 100: 1 | 0.025: 1 to 20:1 | 1:30 to 20:1 |
| M120 | 1.015 | 2.4 | 0.01:1 to 100: 1 | 0.025: 1 to 20:1 | 1:30 to 20:1 |
| M121 | 1.016 | 2.4 | 0.01:1 to 100: 1 | 0.025: 1 to 20:1 | 1:30 to 20:1 |
| M122 | 1.017 | 2.4 | 0.01:1 to 100: 1 | 0.025: 1 to 20:1 | 1:30 to 20:1 |
| M123 | 1.018 | 2.4 | 0.01:1 to 100: 1 | 0.025: 1 to 20:1 | 1:30 to 20:1 |
| M124 | 1.019 | 2.4 | 0.01:1 to 100: 1 | 0.025: 1 to 20:1 | 1:30 to 20:1 |
| M125 | 1.020 | 2.4 | 0.01:1 to 100: 1 | 0.025: 1 to 20:1 | 1:30 to 20:1 |
| M126 | 1.021 | 2.4 | 0.01:1 to 100: 1 | 0.025: 1 to 20:1 | 1:30 to 20:1 |
| M127 | 1.022 | 2.4 | 0.01:1 to 100: 1 | 0.025: 1 to 20:1 | 1:30 to 20:1 |
| M128 | 1.023 | 2.4 | 0.01:1 to 100: 1 | 0.025: 1 to 20:1 | 1:30 to 20:1 |

(continued)

| Composition Number | (A) Compound of Formula (I) | (B) Compound of Formula (II) | Typical Weight Ratio | Preferred Weight Ratio | More Preferred Weight Ratio |
|---|---|---|---|---|---|
| M129 | 1.024 | 2.4 | 0.01:1 to 100: 1 | 0.025: 1 to 20:1 | 1:30 to 20:1 |
| M130 | 1.025 | 2.4 | 0.01:1 to 100: 1 | 0.025: 1 to 20:1 | 1:30 to 20:1 |
| M131 | 1.026 | 2.4 | 0.01:1 to 100: 1 | 0.025: 1 to 20:1 | 1:30 to 20:1 |
| M132 | 1.027 | 2.4 | 0.01:1 to 100: 1 | 0.025: 1 to 20:1 | 1:30 to 20:1 |
| M133 | 1.028 | 2.4 | 0.01:1 to 100: 1 | 0.025: 1 to 20:1 | 1:30 to 20:1 |
| M134 | 1.029 | 2.4 | 0.01:1 to 100: 1 | 0.025: 1 to 20:1 | 1:30 to 20:1 |
| M135 | 1.030 | 2.4 | 0.01:1 to 100: 1 | 0.025: 1 to 20:1 | 1:30 to 20:1 |
| M136 | 1.031 | 2.4 | 0.01:1 to 100: 1 | 0.025: 1 to 20:1 | 1:30 to 20:1 |
| M137 | 1.032 | 2.4 | 0.01:1 to 100: 1 | 0.025: 1 to 20:1 | 1:30 to 20:1 |
| M138 | 1.033 | 2.4 | 0.01:1 to 100: 1 | 0.025: 1 to 20:1 | 1:30 to 20:1 |
| M139 | 1.034 | 2.4 | 0.01:1 to 100: 1 | 0.025: 1 to 20:1 | 1:30 to 20:1 |
| M140 | 1.035 | 2.4 | 0.01:1 to 100: 1 | 0.025: 1 to 20:1 | 1:30 to 20:1 |
| M141 | 1.001 | 2.5 | 0.01:1 to 100: 1 | 0.025: 1 to 20:1 | 1:30 to 20:1 |
| M142 | 1.002 | 2.5 | 0.01:1 to 100: 1 | 0.025: 1 to 20:1 | 1:30 to 20:1 |
| M143 | 1.003 | 2.5 | 0.01:1 to 100: 1 | 0.025: 1 to 20:1 | 1:30 to 20:1 |
| M144 | 1.004 | 2.5 | 0.01:1 to 100: 1 | 0.025: 1 to 20:1 | 1:30 to 20:1 |
| M145 | 1.005 | 2.5 | 0.01:1 to 100: 1 | 0.025: 1 to 20:1 | 1:30 to 20:1 |
| M146 | 1.006 | 2.5 | 0.01:1 to 100: 1 | 0.025: 1 to 20:1 | 1:30 to 20:1 |
| M147 | 1.007 | 2.5 | 0.01:1 to 100: 1 | 0.025: 1 to 20:1 | 1:30 to 20:1 |
| M148 | 1.008 | 2.5 | 0.01:1 to 100: 1 | 0.025: 1 to 20:1 | 1:30 to 20:1 |
| M149 | 1.009 | 2.5 | 0.01:1 to 100: 1 | 0.025: 1 to 20:1 | 1:30 to 20:1 |

(continued)

| Composition Number | (A) Compound of Formula (I) | (B) Compound of Formula (II) | Typical Weight Ratio | Preferred Weight Ratio | More Preferred Weight Ratio |
|---|---|---|---|---|---|
| M150 | 1.010 | 2.5 | 0.01:1 to 100: 1 | 0.025: 1 to 20:1 | 1:30 to 20:1 |
| M151 | 1.011 | 2.5 | 0.01:1 to 100: 1 | 0.025: 1 to 20:1 | 1:30 to 20:1 |
| M152 | 1.012 | 2.5 | 0.01:1 to 100: 1 | 0.025: 1 to 20:1 | 1:30 to 20:1 |
| M153 | 1.013 | 2.5 | 0.01:1 to 100: 1 | 0.025: 1 to 20:1 | 1:30 to 20:1 |
| M154 | 1.014 | 2.5 | 0.01:1 to 100: 1 | 0.025: 1 to 20:1 | 1:30 to 20:1 |
| M155 | 1.015 | 2.5 | 0.01:1 to 100: 1 | 0.025: 1 to 20:1 | 1:30 to 20:1 |
| M156 | 1.016 | 2.5 | 0.01:1 to 100: 1 | 0.025: 1 to 20:1 | 1:30 to 20:1 |
| M157 | 1.017 | 2.5 | 0.01:1 to 100: 1 | 0.025: 1 to 20:1 | 1:30 to 20:1 |
| M158 | 1.018 | 2.5 | 0.01:1 to 100: 1 | 0.025: 1 to 20:1 | 1:30 to 20:1 |
| M159 | 1.019 | 2.5 | 0.01:1 to 100: 1 | 0.025: 1 to 20:1 | 1:30 to 20:1 |
| M160 | 1.020 | 2.5 | 0.01:1 to 100: 1 | 0.025: 1 to 20:1 | 1:30 to 20:1 |
| M161 | 1.021 | 2.5 | 0.01:1 to 100: 1 | 0.025: 1 to 20:1 | 1:30 to 20:1 |
| M162 | 1.022 | 2.5 | 0.01:1 to 100: 1 | 0.025: 1 to 20:1 | 1:30 to 20:1 |
| M163 | 1.023 | 2.5 | 0.01:1 to 100: 1 | 0.025: 1 to 20:1 | 1:30 to 20:1 |
| M164 | 1.024 | 2.5 | 0.01:1 to 100: 1 | 0.025: 1 to 20:1 | 1:30 to 20:1 |
| M165 | 1.025 | 2.5 | 0.01:1 to 100: 1 | 0.025: 1 to 20:1 | 1:30 to 20:1 |
| M166 | 1.026 | 2.5 | 0.01:1 to 100: 1 | 0.025: 1 to 20:1 | 1:30 to 20:1 |
| M167 | 1.027 | 2.5 | 0.01:1 to 100: 1 | 0.025: 1 to 20:1 | 1:30 to 20:1 |
| M168 | 1.028 | 2.5 | 0.01:1 to 100: 1 | 0.025: 1 to 20:1 | 1:30 to 20:1 |
| M169 | 1.029 | 2.5 | 0.01:1 to 100: 1 | 0.025: 1 to 20:1 | 1:30 to 20:1 |
| M170 | 1.030 | 2.5 | 0.01:1 to 100: 1 | 0.025: 1 to 20:1 | 1:30 to 20:1 |

(continued)

| Composition Number | (A) Compound of Formula (I) | (B) Compound of Formula (II) | Typical Weight Ratio | Preferred Weight Ratio | More Preferred Weight Ratio |
|---|---|---|---|---|---|
| M171 | 1.031 | 2.5 | 0.01:1 to 100: 1 | 0.025: 1 to 20:1 | 1:30 to 20:1 |
| M172 | 1.032 | 2.5 | 0.01:1 to 100: 1 | 0.025: 1 to 20:1 | 1:30 to 20:1 |
| M173 | 1.033 | 2.5 | 0.01:1 to 100: 1 | 0.025: 1 to 20:1 | 1:30 to 20:1 |
| M174 | 1.034 | 2.5 | 0.01:1 to 100: 1 | 0.025: 1 to 20:1 | 1:30 to 20:1 |
| M175 | 1.035 | 2.5 | 0.01:1 to 100: 1 | 0.025: 1 to 20:1 | 1:30 to 20:1 |
| M176 | 1.001 | 2.6 | 0.01:1 to 100: 1 | 0.025: 1 to 20:1 | 1:30 to 20:1 |
| M177 | 1.002 | 2.6 | 0.01:1 to 100: 1 | 0.025: 1 to 20:1 | 1:30 to 20:1 |
| M178 | 1.003 | 2.6 | 0.01:1 to 100: 1 | 0.025: 1 to 20:1 | 1:30 to 20:1 |
| M179 | 1.004 | 2.6 | 0.01:1 to 100: 1 | 0.025: 1 to 20:1 | 1:30 to 20:1 |
| M180 | 1.005 | 2.6 | 0.01:1 to 100: 1 | 0.025: 1 to 20:1 | 1:30 to 20:1 |
| M181 | 1.006 | 2.6 | 0.01:1 to 100: 1 | 0.025: 1 to 20:1 | 1:30 to 20:1 |
| M182 | 1.007 | 2.6 | 0.01:1 to 100: 1 | 0.025: 1 to 20:1 | 1:30 to 20:1 |
| M183 | 1.008 | 2.6 | 0.01:1 to 100: 1 | 0.025: 1 to 20:1 | 1:30 to 20:1 |
| M184 | 1.009 | 2.6 | 0.01:1 to 100: 1 | 0.025: 1 to 20:1 | 1:30 to 20:1 |
| M185 | 1.010 | 2.6 | 0.01:1 to 100: 1 | 0.025: 1 to 20:1 | 1:30 to 20:1 |
| M186 | 1.011 | 2.6 | 0.01:1 to 100: 1 | 0.025: 1 to 20:1 | 1:30 to 20:1 |
| M187 | 1.012 | 2.6 | 0.01:1 to 100: 1 | 0.025: 1 to 20:1 | 1:30 to 20:1 |
| M188 | 1.013 | 2.6 | 0.01:1 to 100: 1 | 0.025: 1 to 20:1 | 1:30 to 20:1 |
| M189 | 1.014 | 2.6 | 0.01:1 to 100: 1 | 0.025: 1 to 20:1 | 1:30 to 20:1 |
| M190 | 1.015 | 2.6 | 0.01:1 to 100: 1 | 0.025: 1 to 20:1 | 1:30 to 20:1 |
| M191 | 1.016 | 2.6 | 0.01:1 to 100: 1 | 0.025: 1 to 20:1 | 1:30 to 20:1 |

(continued)

| Composition Number | (A) Compound of Formula (I) | (B) Compound of Formula (II) | Typical Weight Ratio | Preferred Weight Ratio | More Preferred Weight Ratio |
|---|---|---|---|---|---|
| M192 | 1.017 | 2.6 | 0.01:1 to 100: 1 | 0.025: 1 to 20:1 | 1:30 to 20:1 |
| M193 | 1.018 | 2.6 | 0.01:1 to 100: 1 | 0.025: 1 to 20:1 | 1:30 to 20:1 |
| M194 | 1.019 | 2.6 | 0.01:1 to 100: 1 | 0.025: 1 to 20:1 | 1:30 to 20:1 |
| M195 | 1.020 | 2.6 | 0.01:1 to 100: 1 | 0.025: 1 to 20:1 | 1:30 to 20:1 |
| M196 | 1.021 | 2.6 | 0.01:1 to 100: 1 | 0.025: 1 to 20:1 | 1:30 to 20:1 |
| M197 | 1.022 | 2.6 | 0.01:1 to 100: 1 | 0.025: 1 to 20:1 | 1:30 to 20:1 |
| M198 | 1.023 | 2.6 | 0.01:1 to 100: 1 | 0.025: 1 to 20:1 | 1:30 to 20:1 |
| M199 | 1.024 | 2.6 | 0.01:1 to 100: 1 | 0.025: 1 to 20:1 | 1:30 to 20:1 |
| M200 | 1.025 | 2.6 | 0.01:1 to 100: 1 | 0.025: 1 to 20:1 | 1:30 to 20:1 |
| M201 | 1.026 | 2.6 | 0.01:1 to 100: 1 | 0.025: 1 to 20:1 | 1:30 to 20:1 |
| M202 | 1.027 | 2.6 | 0.01:1 to 100: 1 | 0.025: 1 to 20:1 | 1:30 to 20:1 |
| M203 | 1.028 | 2.6 | 0.01:1 to 100: 1 | 0.025: 1 to 20:1 | 1:30 to 20:1 |
| M204 | 1.029 | 2.6 | 0.01:1 to 100: 1 | 0.025: 1 to 20:1 | 1:30 to 20:1 |
| M205 | 1.030 | 2.6 | 0.01:1 to 100: 1 | 0.025: 1 to 20:1 | 1:30 to 20:1 |
| M206 | 1.031 | 2.6 | 0.01:1 to 100: 1 | 0.025: 1 to 20:1 | 1:30 to 20:1 |
| M207 | 1.032 | 2.6 | 0.01:1 to 100: 1 | 0.025: 1 to 20:1 | 1:30 to 20:1 |
| M208 | 1.033 | 2.6 | 0.01:1 to 100: 1 | 0.025: 1 to 20:1 | 1:30 to 20:1 |
| M209 | 1.034 | 2.6 | 0.01:1 to 100: 1 | 0.025: 1 to 20:1 | 1:30 to 20:1 |
| M210 | 1.035 | 2.6 | 0.01:1 to 100: 1 | 0.025: 1 to 20:1 | 1:30 to 20:1 |
| M211 | 1.001 | 2.7 | 0.01:1 to 100: 1 | 0.025: 1 to 20:1 | 1:30 to 20:1 |
| M212 | 1.002 | 2.7 | 0.01:1 to 100: 1 | 0.025: 1 to 20:1 | 1:30 to 20:1 |

(continued)

| Composition Number | (A) Compound of Formula (I) | (B) Compound of Formula (II) | Typical Weight Ratio | Preferred Weight Ratio | More Preferred Weight Ratio |
|---|---|---|---|---|---|
| M213 | 1.003 | 2.7 | 0.01:1 to 100: 1 | 0.025: 1 to 20:1 | 1:30 to 20:1 |
| M214 | 1.004 | 2.7 | 0.01:1 to 100: 1 | 0.025: 1 to 20:1 | 1:30 to 20:1 |
| M215 | 1.005 | 2.7 | 0.01:1 to 100: 1 | 0.025: 1 to 20:1 | 1:30 to 20:1 |
| M216 | 1.006 | 2.7 | 0.01:1 to 100: 1 | 0.025: 1 to 20:1 | 1:30 to 20:1 |
| M217 | 1.007 | 2.7 | 0.01:1 to 100: 1 | 0.025: 1 to 20:1 | 1:30 to 20:1 |
| M218 | 1.008 | 2.7 | 0.01:1 to 100: 1 | 0.025: 1 to 20:1 | 1:30 to 20:1 |
| M219 | 1.009 | 2.7 | 0.01:1 to 100: 1 | 0.025: 1 to 20:1 | 1:30 to 20:1 |
| M220 | 1.010 | 2.7 | 0.01:1 to 100: 1 | 0.025: 1 to 20:1 | 1:30 to 20:1 |
| M221 | 1.011 | 2.7 | 0.01:1 to 100: 1 | 0.025: 1 to 20:1 | 1:30 to 20:1 |
| M222 | 1.012 | 2.7 | 0.01:1 to 100: 1 | 0.025: 1 to 20:1 | 1:30 to 20:1 |
| M223 | 1.013 | 2.7 | 0.01:1 to 100: 1 | 0.025: 1 to 20:1 | 1:30 to 20:1 |
| M224 | 1.014 | 2.7 | 0.01:1 to 100: 1 | 0.025: 1 to 20:1 | 1:30 to 20:1 |
| M225 | 1.015 | 2.7 | 0.01:1 to 100: 1 | 0.025: 1 to 20:1 | 1:30 to 20:1 |
| M226 | 1.016 | 2.7 | 0.01:1 to 100: 1 | 0.025: 1 to 20:1 | 1:30 to 20:1 |
| M227 | 1.017 | 2.7 | 0.01:1 to 100: 1 | 0.025: 1 to 20:1 | 1:30 to 20:1 |
| M228 | 1.018 | 2.7 | 0.01:1 to 100: 1 | 0.025: 1 to 20:1 | 1:30 to 20:1 |
| M229 | 1.019 | 2.7 | 0.01:1 to 100: 1 | 0.025: 1 to 20:1 | 1:30 to 20:1 |
| M230 | 1.020 | 2.7 | 0.01:1 to 100: 1 | 0.025: 1 to 20:1 | 1:30 to 20:1 |
| M231 | 1.021 | 2.7 | 0.01:1 to 100: 1 | 0.025: 1 to 20:1 | 1:30 to 20:1 |
| M232 | 1.022 | 2.7 | 0.01:1 to 100: 1 | 0.025: 1 to 20:1 | 1:30 to 20:1 |
| M233 | 1.023 | 2.7 | 0.01:1 to 100: 1 | 0.025: 1 to 20:1 | 1:30 to 20:1 |

(continued)

| Composition Number | (A) Compound of Formula (I) | (B) Compound of Formula (II) | Typical Weight Ratio | Preferred Weight Ratio | More Preferred Weight Ratio |
|---|---|---|---|---|---|
| M234 | 1.024 | 2.7 | 0.01:1 to 100: 1 | 0.025: 1 to 20:1 | 1:30 to 20:1 |
| M235 | 1.025 | 2.7 | 0.01:1 to 100: 1 | 0.025: 1 to 20:1 | 1:30 to 20:1 |
| M236 | 1.026 | 2.7 | 0.01:1 to 100: 1 | 0.025: 1 to 20:1 | 1:30 to 20:1 |
| M237 | 1.027 | 2.7 | 0.01:1 to 100: 1 | 0.025: 1 to 20:1 | 1:30 to 20:1 |
| M238 | 1.028 | 2.7 | 0.01:1 to 100: 1 | 0.025: 1 to 20:1 | 1:30 to 20:1 |
| M239 | 1.029 | 2.7 | 0.01:1 to 100: 1 | 0.025: 1 to 20:1 | 1:30 to 20:1 |
| M240 | 1.030 | 2.7 | 0.01:1 to 100: 1 | 0.025: 1 to 20:1 | 1:30 to 20:1 |
| M241 | 1.031 | 2.7 | 0.01:1 to 100: 1 | 0.025: 1 to 20:1 | 1:30 to 20:1 |
| M242 | 1.032 | 2.7 | 0.01:1 to 100: 1 | 0.025: 1 to 20:1 | 1:30 to 20:1 |
| M243 | 1.033 | 2.7 | 0.01:1 to 100: 1 | 0.025: 1 to 20:1 | 1:30 to 20:1 |
| M244 | 1.034 | 2.7 | 0.01:1 to 100: 1 | 0.025: 1 to 20:1 | 1:30 to 20:1 |
| M245 | 1.035 | 2.7 | 0.01:1 to 100: 1 | 0.025: 1 to 20:1 | 1:30 to 20:1 |
| M246 | 1.001 | 2.8 | 0.01:1 to 100: 1 | 0.025: 1 to 20:1 | 1:30 to 20:1 |
| M247 | 1.002 | 2.8 | 0.01:1 to 100: 1 | 0.025: 1 to 20:1 | 1:30 to 20:1 |
| M248 | 1.003 | 2.8 | 0.01:1 to 100: 1 | 0.025: 1 to 20:1 | 1:30 to 20:1 |
| M249 | 1.004 | 2.8 | 0.01:1 to 100: 1 | 0.025: 1 to 20:1 | 1:30 to 20:1 |
| M250 | 1.005 | 2.8 | 0.01:1 to 100: 1 | 0.025: 1 to 20:1 | 1:30 to 20:1 |
| M251 | 1.006 | 2.8 | 0.01:1 to 100: 1 | 0.025: 1 to 20:1 | 1:30 to 20:1 |
| M252 | 1.007 | 2.8 | 0.01:1 to 100: 1 | 0.025: 1 to 20:1 | 1:30 to 20:1 |
| M253 | 1.008 | 2.8 | 0.01:1 to 100: 1 | 0.025: 1 to 20:1 | 1:30 to 20:1 |
| M254 | 1.009 | 2.8 | 0.01:1 to 100: 1 | 0.025: 1 to 20:1 | 1:30 to 20:1 |

(continued)

| Composition Number | (A) Compound of Formula (I) | (B) Compound of Formula (II) | Typical Weight Ratio | Preferred Weight Ratio | More Preferred Weight Ratio |
|---|---|---|---|---|---|
| M255 | 1.010 | 2.8 | 0.01:1 to 100: 1 | 0.025: 1 to 20:1 | 1:30 to 20:1 |
| M256 | 1.011 | 2.8 | 0.01:1 to 100: 1 | 0.025: 1 to 20:1 | 1:30 to 20:1 |
| M257 | 1.012 | 2.8 | 0.01:1 to 100: 1 | 0.025: 1 to 20:1 | 1:30 to 20:1 |
| M258 | 1.013 | 2.8 | 0.01:1 to 100: 1 | 0.025: 1 to 20:1 | 1:30 to 20:1 |
| M259 | 1.014 | 2.8 | 0.01:1 to 100: 1 | 0.025: 1 to 20:1 | 1:30 to 20:1 |
| M260 | 1.015 | 2.8 | 0.01:1 to 100: 1 | 0.025: 1 to 20:1 | 1:30 to 20:1 |
| M261 | 1.016 | 2.8 | 0.01:1 to 100: 1 | 0.025: 1 to 20:1 | 1:30 to 20:1 |
| M262 | 1.017 | 2.8 | 0.01:1 to 100: 1 | 0.025: 1 to 20:1 | 1:30 to 20:1 |
| M263 | 1.018 | 2.8 | 0.01:1 to 100: 1 | 0.025: 1 to 20:1 | 1:30 to 20:1 |
| M264 | 1.019 | 2.8 | 0.01:1 to 100: 1 | 0.025: 1 to 20:1 | 1:30 to 20:1 |
| M265 | 1.020 | 2.8 | 0.01:1 to 100: 1 | 0.025: 1 to 20:1 | 1:30 to 20:1 |
| M266 | 1.021 | 2.8 | 0.01:1 to 100: 1 | 0.025: 1 to 20:1 | 1:30 to 20:1 |
| M267 | 1.022 | 2.8 | 0.01:1 to 100: 1 | 0.025: 1 to 20:1 | 1:30 to 20:1 |
| M268 | 1.023 | 2.8 | 0.01:1 to 100: 1 | 0.025: 1 to 20:1 | 1:30 to 20:1 |
| M269 | 1.024 | 2.8 | 0.01:1 to 100: 1 | 0.025: 1 to 20:1 | 1:30 to 20:1 |
| M270 | 1.025 | 2.8 | 0.01:1 to 100: 1 | 0.025: 1 to 20:1 | 1:30 to 20:1 |
| M271 | 1.026 | 2.8 | 0.01:1 to 100: 1 | 0.025: 1 to 20:1 | 1:30 to 20:1 |
| M272 | 1.027 | 2.8 | 0.01:1 to 100: 1 | 0.025: 1 to 20:1 | 1:30 to 20:1 |
| M273 | 1.028 | 2.8 | 0.01:1 to 100: 1 | 0.025: 1 to 20:1 | 1:30 to 20:1 |
| M274 | 1.029 | 2.8 | 0.01:1 to 100: 1 | 0.025: 1 to 20:1 | 1:30 to 20:1 |
| M275 | 1.030 | 2.8 | 0.01:1 to 100: 1 | 0.025: 1 to 20:1 | 1:30 to 20:1 |

(continued)

| Composition Number | (A) Compound of Formula (I) | (B) Compound of Formula (II) | Typical Weight Ratio | Preferred Weight Ratio | More Preferred Weight Ratio |
|---|---|---|---|---|---|
| M276 | 1.031 | 2.8 | 0.01:1 to 100: 1 | 0.025: 1 to 20:1 | 1:30 to 20:1 |
| M277 | 1.032 | 2.8 | 0.01:1 to 100: 1 | 0.025: 1 to 20:1 | 1:30 to 20:1 |
| M278 | 1.033 | 2.8 | 0.01:1 to 100: 1 | 0.025: 1 to 20:1 | 1:30 to 20:1 |
| M279 | 1.034 | 2.8 | 0.01:1 to 100: 1 | 0.025: 1 to 20:1 | 1:30 to 20:1 |
| M280 | 1.035 | 2.8 | 0.01:1 to 100: 1 | 0.025: 1 to 20:1 | 1:30 to 20:1 |
| M281 | 1.001 | 2.9 | 0.01:1 to 100: 1 | 0.025: 1 to 20:1 | 1:30 to 20:1 |
| M282 | 1.002 | 2.9 | 0.01:1 to 100: 1 | 0.025: 1 to 20:1 | 1:30 to 20:1 |
| M283 | 1.003 | 2.9 | 0.01:1 to 100: 1 | 0.025: 1 to 20:1 | 1:30 to 20:1 |
| M284 | 1.004 | 2.9 | 0.01:1 to 100: 1 | 0.025: 1 to 20:1 | 1:30 to 20:1 |
| M285 | 1.005 | 2.9 | 0.01:1 to 100: 1 | 0.025: 1 to 20:1 | 1:30 to 20:1 |
| M286 | 1.006 | 2.9 | 0.01:1 to 100: 1 | 0.025: 1 to 20:1 | 1:30 to 20:1 |
| M287 | 1.007 | 2.9 | 0.01:1 to 100: 1 | 0.025: 1 to 20:1 | 1:30 to 20:1 |
| M288 | 1.008 | 2.9 | 0.01:1 to 100: 1 | 0.025: 1 to 20:1 | 1:30 to 20:1 |
| M289 | 1.009 | 2.9 | 0.01:1 to 100: 1 | 0.025: 1 to 20:1 | 1:30 to 20:1 |
| M290 | 1.010 | 2.9 | 0.01:1 to 100: 1 | 0.025: 1 to 20:1 | 1:30 to 20:1 |
| M291 | 1.011 | 2.9 | 0.01:1 to 100: 1 | 0.025: 1 to 20:1 | 1:30 to 20:1 |
| M292 | 1.012 | 2.9 | 0.01:1 to 100: 1 | 0.025: 1 to 20:1 | 1:30 to 20:1 |
| M293 | 1.013 | 2.9 | 0.01:1 to 100: 1 | 0.025: 1 to 20:1 | 1:30 to 20:1 |
| M294 | 1.014 | 2.9 | 0.01:1 to 100: 1 | 0.025: 1 to 20:1 | 1:30 to 20:1 |
| M295 | 1.015 | 2.9 | 0.01:1 to 100: 1 | 0.025: 1 to 20:1 | 1:30 to 20:1 |
| M296 | 1.016 | 2.9 | 0.01:1 to 100: 1 | 0.025: 1 to 20:1 | 1:30 to 20:1 |

(continued)

| Composition Number | (A) Compound of Formula (I) | (B) Compound of Formula (II) | Typical Weight Ratio | Preferred Weight Ratio | More Preferred Weight Ratio |
|---|---|---|---|---|---|
| M297 | 1.017 | 2.9 | 0.01:1 to 100: 1 | 0.025: 1 to 20:1 | 1:30 to 20:1 |
| M298 | 1.018 | 2.9 | 0.01:1 to 100: 1 | 0.025: 1 to 20:1 | 1:30 to 20:1 |
| M299 | 1.019 | 2.9 | 0.01:1 to 100: 1 | 0.025: 1 to 20:1 | 1:30 to 20:1 |
| M300 | 1.020 | 2.9 | 0.01:1 to 100: 1 | 0.025: 1 to 20:1 | 1:30 to 20:1 |
| M301 | 1.021 | 2.9 | 0.01:1 to 100: 1 | 0.025: 1 to 20:1 | 1:30 to 20:1 |
| M302 | 1.022 | 2.9 | 0.01:1 to 100: 1 | 0.025: 1 to 20:1 | 1:30 to 20:1 |
| M303 | 1.023 | 2.9 | 0.01:1 to 100: 1 | 0.025: 1 to 20:1 | 1:30 to 20:1 |
| M304 | 1.024 | 2.9 | 0.01:1 to 100: 1 | 0.025: 1 to 20:1 | 1:30 to 20:1 |
| M305 | 1.025 | 2.9 | 0.01:1 to 100: 1 | 0.025: 1 to 20:1 | 1:30 to 20:1 |
| M306 | 1.026 | 2.9 | 0.01:1 to 100: 1 | 0.025: 1 to 20:1 | 1:30 to 20:1 |
| M307 | 1.027 | 2.9 | 0.01:1 to 100: 1 | 0.025: 1 to 20:1 | 1:30 to 20:1 |
| M308 | 1.028 | 2.9 | 0.01:1 to 100: 1 | 0.025: 1 to 20:1 | 1:30 to 20:1 |
| M309 | 1.029 | 2.9 | 0.01:1 to 100: 1 | 0.025: 1 to 20:1 | 1:30 to 20:1 |
| M310 | 1.030 | 2.9 | 0.01:1 to 100: 1 | 0.025: 1 to 20:1 | 1:30 to 20:1 |
| M311 | 1.031 | 2.9 | 0.01:1 to 100: 1 | 0.025: 1 to 20:1 | 1:30 to 20:1 |
| M312 | 1.032 | 2.9 | 0.01:1 to 100: 1 | 0.025: 1 to 20:1 | 1:30 to 20:1 |
| M313 | 1.033 | 2.9 | 0.01:1 to 100: 1 | 0.025: 1 to 20:1 | 1:30 to 20:1 |
| M314 | 1.034 | 2.9 | 0.01:1 to 100: 1 | 0.025: 1 to 20:1 | 1:30 to 20:1 |
| M315 | 1.035 | 2.9 | 0.01:1 to 100: 1 | 0.025: 1 to 20:1 | 1:30 to 20:1 |
| M316 | 1.001 | 2.10 | 0.01:1 to 100: 1 | 0.025: 1 to 20:1 | 1:30 to 20:1 |
| M317 | 1.002 | 2.10 | 0.01:1 to 100: 1 | 0.025: 1 to 20:1 | 1:30 to 20:1 |

(continued)

| Composition Number | (A) Compound of Formula (I) | (B) Compound of Formula (II) | Typical Weight Ratio | Preferred Weight Ratio | More Preferred Weight Ratio |
|---|---|---|---|---|---|
| M318 | 1.003 | 2.10 | 0.01:1 to 100: 1 | 0.025: 1 to 20:1 | 1:30 to 20:1 |
| M319 | 1.004 | 2.10 | 0.01:1 to 100: 1 | 0.025: 1 to 20:1 | 1:30 to 20:1 |
| M320 | 1.005 | 2.10 | 0.01:1 to 100: 1 | 0.025: 1 to 20:1 | 1:30 to 20:1 |
| M321 | 1.006 | 2.10 | 0.01:1 to 100: 1 | 0.025: 1 to 20:1 | 1:30 to 20:1 |
| M322 | 1.007 | 2.10 | 0.01:1 to 100: 1 | 0.025: 1 to 20:1 | 1:30 to 20:1 |
| M323 | 1.008 | 2.10 | 0.01:1 to 100: 1 | 0.025: 1 to 20:1 | 1:30 to 20:1 |
| M324 | 1.009 | 2.10 | 0.01:1 to 100: 1 | 0.025: 1 to 20:1 | 1:30 to 20:1 |
| M325 | 1.010 | 2.10 | 0.01:1 to 100: 1 | 0.025: 1 to 20:1 | 1:30 to 20:1 |
| M326 | 1.011 | 2.10 | 0.01:1 to 100: 1 | 0.025: 1 to 20:1 | 1:30 to 20:1 |
| M327 | 1.012 | 2.10 | 0.01:1 to 100: 1 | 0.025: 1 to 20:1 | 1:30 to 20:1 |
| M328 | 1.013 | 2.10 | 0.01:1 to 100: 1 | 0.025: 1 to 20:1 | 1:30 to 20:1 |
| M329 | 1.014 | 2.10 | 0.01:1 to 100: 1 | 0.025: 1 to 20:1 | 1:30 to 20:1 |
| M330 | 1.015 | 2.10 | 0.01:1 to 100: 1 | 0.025: 1 to 20:1 | 1:30 to 20:1 |
| M331 | 1.016 | 2.10 | 0.01:1 to 100: 1 | 0.025: 1 to 20:1 | 1:30 to 20:1 |
| M332 | 1.017 | 2.10 | 0.01:1 to 100: 1 | 0.025: 1 to 20:1 | 1:30 to 20:1 |
| M333 | 1.018 | 2.10 | 0.01:1 to 100: 1 | 0.025: 1 to 20:1 | 1:30 to 20:1 |
| M334 | 1.019 | 2.10 | 0.01:1 to 100: 1 | 0.025: 1 to 20:1 | 1:30 to 20:1 |
| M335 | 1.020 | 2.10 | 0.01:1 to 100: 1 | 0.025: 1 to 20:1 | 1:30 to 20:1 |
| M336 | 1.021 | 2.10 | 0.01:1 to 100: 1 | 0.025: 1 to 20:1 | 1:30 to 20:1 |
| M337 | 1.022 | 2.10 | 0.01:1 to 100: 1 | 0.025: 1 to 20:1 | 1:30 to 20:1 |
| M338 | 1.023 | 2.10 | 0.01:1 to 100: 1 | 0.025: 1 to 20:1 | 1:30 to 20:1 |

(continued)

| Composition Number | (A) Compound of Formula (I) | (B) Compound of Formula (II) | Typical Weight Ratio | Preferred Weight Ratio | More Preferred Weight Ratio |
|---|---|---|---|---|---|
| M339 | 1.024 | 2.10 | 0.01:1 to 100: 1 | 0.025: 1 to 20:1 | 1:30 to 20:1 |
| M340 | 1.025 | 2.10 | 0.01:1 to 100: 1 | 0.025: 1 to 20:1 | 1:30 to 20:1 |
| M341 | 1.026 | 2.10 | 0.01:1 to 100: 1 | 0.025: 1 to 20:1 | 1:30 to 20:1 |
| M342 | 1.027 | 2.10 | 0.01:1 to 100: 1 | 0.025: 1 to 20:1 | 1:30 to 20:1 |
| M343 | 1.028 | 2.10 | 0.01:1 to 100: 1 | 0.025: 1 to 20:1 | 1:30 to 20:1 |
| M344 | 1.029 | 2.10 | 0.01:1 to 100: 1 | 0.025: 1 to 20:1 | 1:30 to 20:1 |
| M345 | 1.030 | 2.10 | 0.01:1 to 100: 1 | 0.025: 1 to 20:1 | 1:30 to 20:1 |
| M346 | 1.031 | 2.10 | 0.01:1 to 100: 1 | 0.025: 1 to 20:1 | 1:30 to 20:1 |
| M347 | 1.032 | 2.10 | 0.01:1 to 100: 1 | 0.025: 1 to 20:1 | 1:30 to 20:1 |
| M348 | 1.033 | 2.10 | 0.01:1 to 100: 1 | 0.025: 1 to 20:1 | 1:30 to 20:1 |
| M349 | 1.034 | 2.10 | 0.01:1 to 100: 1 | 0.025: 1 to 20:1 | 1:30 to 20:1 |
| M350 | 1.035 | 2.10 | 0.01:1 to 100: 1 | 0.025: 1 to 20:1 | 1:30 to 20:1 |
| M351 | 1.001 | 2.11 | 0.01:1 to 100: 1 | 0.025: 1 to 20:1 | 1:30 to 20:1 |
| M352 | 1.002 | 2.11 | 0.01:1 to 100: 1 | 0.025: 1 to 20:1 | 1:30 to 20:1 |
| M353 | 1.003 | 2.11 | 0.01:1 to 100: 1 | 0.025: 1 to 20:1 | 1:30 to 20:1 |
| M354 | 1.004 | 2.11 | 0.01:1 to 100: 1 | 0.025: 1 to 20:1 | 1:30 to 20:1 |
| M355 | 1.005 | 2.11 | 0.01:1 to 100: 1 | 0.025: 1 to 20:1 | 1:30 to 20:1 |
| M356 | 1.006 | 2.11 | 0.01:1 to 100: 1 | 0.025: 1 to 20:1 | 1:30 to 20:1 |
| M357 | 1.007 | 2.11 | 0.01:1 to 100: 1 | 0.025: 1 to 20:1 | 1:30 to 20:1 |
| M358 | 1.008 | 2.11 | 0.01:1 to 100: 1 | 0.025: 1 to 20:1 | 1:30 to 20:1 |
| M359 | 1.009 | 2.11 | 0.01:1 to 100: 1 | 0.025: 1 to 20:1 | 1:30 to 20:1 |

(continued)

| Composition Number | (A) Compound of Formula (I) | (B) Compound of Formula (II) | Typical Weight Ratio | Preferred Weight Ratio | More Preferred Weight Ratio |
|---|---|---|---|---|---|
| M360 | 1.010 | 2.11 | 0.01:1 to 100: 1 | 0.025: 1 to 20:1 | 1:30 to 20:1 |
| M361 | 1.011 | 2.11 | 0.01:1 to 100: 1 | 0.025: 1 to 20:1 | 1:30 to 20:1 |
| M362 | 1.012 | 2.11 | 0.01:1 to 100: 1 | 0.025: 1 to 20:1 | 1:30 to 20:1 |
| M363 | 1.013 | 2.11 | 0.01:1 to 100: 1 | 0.025: 1 to 20:1 | 1:30 to 20:1 |
| M364 | 1.014 | 2.11 | 0.01:1 to 100: 1 | 0.025: 1 to 20:1 | 1:30 to 20:1 |
| M365 | 1.015 | 2.11 | 0.01:1 to 100: 1 | 0.025: 1 to 20:1 | 1:30 to 20:1 |
| M366 | 1.016 | 2.11 | 0.01:1 to 100: 1 | 0.025: 1 to 20:1 | 1:30 to 20:1 |
| M367 | 1.017 | 2.11 | 0.01:1 to 100: 1 | 0.025: 1 to 20:1 | 1:30 to 20:1 |
| M368 | 1.018 | 2.11 | 0.01:1 to 100: 1 | 0.025: 1 to 20:1 | 1:30 to 20:1 |
| M369 | 1.019 | 2.11 | 0.01:1 to 100: 1 | 0.025: 1 to 20:1 | 1:30 to 20:1 |
| M370 | 1.020 | 2.11 | 0.01:1 to 100: 1 | 0.025: 1 to 20:1 | 1:30 to 20:1 |
| M371 | 1.021 | 2.11 | 0.01:1 to 100: 1 | 0.025: 1 to 20:1 | 1:30 to 20:1 |
| M372 | 1.022 | 2.11 | 0.01:1 to 100: 1 | 0.025: 1 to 20:1 | 1:30 to 20:1 |
| M373 | 1.023 | 2.11 | 0.01:1 to 100: 1 | 0.025: 1 to 20:1 | 1:30 to 20:1 |
| M374 | 1.024 | 2.11 | 0.01:1 to 100: 1 | 0.025: 1 to 20:1 | 1:30 to 20:1 |
| M375 | 1.025 | 2.11 | 0.01:1 to 100: 1 | 0.025: 1 to 20:1 | 1:30 to 20:1 |
| M376 | 1.026 | 2.11 | 0.01:1 to 100: 1 | 0.025: 1 to 20:1 | 1:30 to 20:1 |
| M377 | 1.027 | 2.11 | 0.01:1 to 100: 1 | 0.025: 1 to 20:1 | 1:30 to 20:1 |
| M378 | 1.028 | 2.11 | 0.01:1 to 100: 1 | 0.025: 1 to 20:1 | 1:30 to 20:1 |
| M379 | 1.029 | 2.11 | 0.01:1 to 100: 1 | 0.025: 1 to 20:1 | 1:30 to 20:1 |
| M380 | 1.030 | 2.11 | 0.01:1 to 100: 1 | 0.025: 1 to 20:1 | 1:30 to 20:1 |

(continued)

| Composition Number | (A) Compound of Formula (I) | (B) Compound of Formula (II) | Typical Weight Ratio | Preferred Weight Ratio | More Preferred Weight Ratio |
|---|---|---|---|---|---|
| M381 | 1.031 | 2.11 | 0.01:1 to 100: 1 | 0.025: 1 to 20:1 | 1:30 to 20:1 |
| M382 | 1.032 | 2.11 | 0.01:1 to 100: 1 | 0.025: 1 to 20:1 | 1:30 to 20:1 |
| M383 | 1.033 | 2.11 | 0.01:1 to 100: 1 | 0.025: 1 to 20:1 | 1:30 to 20:1 |
| M384 | 1.034 | 2.11 | 0.01:1 to 100: 1 | 0.025: 1 to 20:1 | 1:30 to 20:1 |
| M385 | 1.035 | 2.11 | 0.01:1 to 100: 1 | 0.025: 1 to 20:1 | 1:30 to 20:1 |
| M386 | 1.001 | 2.12 | 0.01:1 to 100: 1 | 0.025: 1 to 20:1 | 1:30 to 20:1 |
| M387 | 1.002 | 2.12 | 0.01:1 to 100: 1 | 0.025: 1 to 20:1 | 1:30 to 20:1 |
| M388 | 1.003 | 2.12 | 0.01:1 to 100: 1 | 0.025: 1 to 20:1 | 1:30 to 20:1 |
| M389 | 1.004 | 2.12 | 0.01:1 to 100: 1 | 0.025: 1 to 20:1 | 1:30 to 20:1 |
| M390 | 1.005 | 2.12 | 0.01:1 to 100: 1 | 0.025: 1 to 20:1 | 1:30 to 20:1 |
| M391 | 1.006 | 2.12 | 0.01:1 to 100: 1 | 0.025: 1 to 20:1 | 1:30 to 20:1 |
| M392 | 1.007 | 2.12 | 0.01:1 to 100: 1 | 0.025: 1 to 20:1 | 1:30 to 20:1 |
| M393 | 1.008 | 2.12 | 0.01:1 to 100: 1 | 0.025: 1 to 20:1 | 1:30 to 20:1 |
| M394 | 1.009 | 2.12 | 0.01:1 to 100: 1 | 0.025: 1 to 20:1 | 1:30 to 20:1 |
| M395 | 1.010 | 2.12 | 0.01:1 to 100: 1 | 0.025: 1 to 20:1 | 1:30 to 20:1 |
| M396 | 1.011 | 2.12 | 0.01:1 to 100: 1 | 0.025: 1 to 20:1 | 1:30 to 20:1 |
| M397 | 1.012 | 2.12 | 0.01:1 to 100: 1 | 0.025: 1 to 20:1 | 1:30 to 20:1 |
| M398 | 1.013 | 2.12 | 0.01:1 to 100: 1 | 0.025: 1 to 20:1 | 1:30 to 20:1 |
| M399 | 1.014 | 2.12 | 0.01:1 to 100: 1 | 0.025: 1 to 20:1 | 1:30 to 20:1 |
| M400 | 1.015 | 2.12 | 0.01:1 to 100: 1 | 0.025: 1 to 20:1 | 1:30 to 20:1 |
| M401 | 1.016 | 2.12 | 0.01:1 to 100: 1 | 0.025: 1 to 20:1 | 1:30 to 20:1 |

(continued)

| Composition Number | (A) Compound of Formula (I) | (B) Compound of Formula (II) | Typical Weight Ratio | Preferred Weight Ratio | More Preferred Weight Ratio |
|---|---|---|---|---|---|
| M402 | 1.017 | 2.12 | 0.01:1 to 100: 1 | 0.025: 1 to 20:1 | 1:30 to 20:1 |
| M403 | 1.018 | 2.12 | 0.01:1 to 100: 1 | 0.025: 1 to 20:1 | 1:30 to 20:1 |
| M404 | 1.019 | 2.12 | 0.01:1 to 100: 1 | 0.025: 1 to 20:1 | 1:30 to 20:1 |
| M405 | 1.020 | 2.12 | 0.01:1 to 100: 1 | 0.025: 1 to 20:1 | 1:30 to 20:1 |
| M406 | 1.021 | 2.12 | 0.01:1 to 100: 1 | 0.025: 1 to 20:1 | 1:30 to 20:1 |
| M407 | 1.022 | 2.12 | 0.01:1 to 100: 1 | 0.025: 1 to 20:1 | 1:30 to 20:1 |
| M408 | 1.023 | 2.12 | 0.01:1 to 100: 1 | 0.025: 1 to 20:1 | 1:30 to 20:1 |
| M409 | 1.024 | 2.12 | 0.01:1 to 100: 1 | 0.025: 1 to 20:1 | 1:30 to 20:1 |
| M410 | 1.025 | 2.12 | 0.01:1 to 100: 1 | 0.025: 1 to 20:1 | 1:30 to 20:1 |
| M411 | 1.026 | 2.12 | 0.01:1 to 100: 1 | 0.025: 1 to 20:1 | 1:30 to 20:1 |
| M412 | 1.027 | 2.12 | 0.01:1 to 100: 1 | 0.025: 1 to 20:1 | 1:30 to 20:1 |
| M413 | 1.028 | 2.12 | 0.01:1 to 100: 1 | 0.025: 1 to 20:1 | 1:30 to 20:1 |
| M414 | 1.029 | 2.12 | 0.01:1 to 100: 1 | 0.025: 1 to 20:1 | 1:30 to 20:1 |
| M415 | 1.030 | 2.12 | 0.01:1 to 100: 1 | 0.025: 1 to 20:1 | 1:30 to 20:1 |
| M416 | 1.031 | 2.12 | 0.01:1 to 100: 1 | 0.025: 1 to 20:1 | 1:30 to 20:1 |
| M417 | 1.032 | 2.12 | 0.01:1 to 100: 1 | 0.025: 1 to 20:1 | 1:30 to 20:1 |
| M418 | 1.033 | 2.12 | 0.01:1 to 100: 1 | 0.025: 1 to 20:1 | 1:30 to 20:1 |
| M419 | 1.034 | 2.12 | 0.01:1 to 100: 1 | 0.025: 1 to 20:1 | 1:30 to 20:1 |
| M420 | 1.035 | 2.12 | 0.01:1 to 100: 1 | 0.025: 1 to 20:1 | 1:30 to 20:1 |
| M421 | 1.001 | 2.13 | 0.01:1 to 100: 1 | 0.025: 1 to 20:1 | 1:30 to 20:1 |
| M422 | 1.002 | 2.13 | 0.01:1 to 100: 1 | 0.025: 1 to 20:1 | 1:30 to 20:1 |

(continued)

| Composition Number | (A) Compound of Formula (I) | (B) Compound of Formula (II) | Typical Weight Ratio | Preferred Weight Ratio | More Preferred Weight Ratio |
|---|---|---|---|---|---|
| M423 | 1.003 | 2.13 | 0.01:1 to 100: 1 | 0.025: 1 to 20:1 | 1:30 to 20:1 |
| M424 | 1.004 | 2.13 | 0.01:1 to 100: 1 | 0.025: 1 to 20:1 | 1:30 to 20:1 |
| M425 | 1.005 | 2.13 | 0.01:1 to 100: 1 | 0.025: 1 to 20:1 | 1:30 to 20:1 |
| M426 | 1.006 | 2.13 | 0.01:1 to 100: 1 | 0.025: 1 to 20:1 | 1:30 to 20:1 |
| M427 | 1.007 | 2.13 | 0.01:1 to 100: 1 | 0.025: 1 to 20:1 | 1:30 to 20:1 |
| M428 | 1.008 | 2.13 | 0.01:1 to 100: 1 | 0.025: 1 to 20:1 | 1:30 to 20:1 |
| M429 | 1.009 | 2.13 | 0.01:1 to 100: 1 | 0.025: 1 to 20:1 | 1:30 to 20:1 |
| M430 | 1.010 | 2.13 | 0.01:1 to 100: 1 | 0.025: 1 to 20:1 | 1:30 to 20:1 |
| M431 | 1.011 | 2.13 | 0.01:1 to 100: 1 | 0.025: 1 to 20:1 | 1:30 to 20:1 |
| M432 | 1.012 | 2.13 | 0.01:1 to 100: 1 | 0.025: 1 to 20:1 | 1:30 to 20:1 |
| M433 | 1.013 | 2.13 | 0.01:1 to 100: 1 | 0.025: 1 to 20:1 | 1:30 to 20:1 |
| M434 | 1.014 | 2.13 | 0.01:1 to 100: 1 | 0.025: 1 to 20:1 | 1:30 to 20:1 |
| M435 | 1.015 | 2.13 | 0.01:1 to 100: 1 | 0.025: 1 to 20:1 | 1:30 to 20:1 |
| M436 | 1.016 | 2.13 | 0.01:1 to 100: 1 | 0.025: 1 to 20:1 | 1:30 to 20:1 |
| M437 | 1.017 | 2.13 | 0.01:1 to 100: 1 | 0.025: 1 to 20:1 | 1:30 to 20:1 |
| M438 | 1.018 | 2.13 | 0.01:1 to 100: 1 | 0.025: 1 to 20:1 | 1:30 to 20:1 |
| M439 | 1.019 | 2.13 | 0.01:1 to 100: 1 | 0.025: 1 to 20:1 | 1:30 to 20:1 |
| M440 | 1.020 | 2.13 | 0.01:1 to 100: 1 | 0.025: 1 to 20:1 | 1:30 to 20:1 |
| M441 | 1.021 | 2.13 | 0.01:1 to 100: 1 | 0.025: 1 to 20:1 | 1:30 to 20:1 |
| M442 | 1.022 | 2.13 | 0.01:1 to 100: 1 | 0.025: 1 to 20:1 | 1:30 to 20:1 |
| M443 | 1.023 | 2.13 | 0.01:1 to 100: 1 | 0.025: 1 to 20:1 | 1:30 to 20:1 |

(continued)

| Composition Number | (A) Compound of Formula (I) | (B) Compound of Formula (II) | Typical Weight Ratio | Preferred Weight Ratio | More Preferred Weight Ratio |
|---|---|---|---|---|---|
| M444 | 1.024 | 2.13 | 0.01:1 to 100: 1 | 0.025: 1 to 20:1 | 1:30 to 20:1 |
| M445 | 1.025 | 2.13 | 0.01:1 to 100: 1 | 0.025: 1 to 20:1 | 1:30 to 20:1 |
| M446 | 1.026 | 2.13 | 0.01:1 to 100: 1 | 0.025: 1 to 20:1 | 1:30 to 20:1 |
| M447 | 1.027 | 2.13 | 0.01:1 to 100: 1 | 0.025: 1 to 20:1 | 1:30 to 20:1 |
| M448 | 1.028 | 2.13 | 0.01:1 to 100: 1 | 0.025: 1 to 20:1 | 1:30 to 20:1 |
| M449 | 1.029 | 2.13 | 0.01:1 to 100: 1 | 0.025: 1 to 20:1 | 1:30 to 20:1 |
| M450 | 1.030 | 2.13 | 0.01:1 to 100: 1 | 0.025: 1 to 20:1 | 1:30 to 20:1 |
| M451 | 1.031 | 2.13 | 0.01:1 to 100: 1 | 0.025: 1 to 20:1 | 1:30 to 20:1 |
| M452 | 1.032 | 2.13 | 0.01:1 to 100: 1 | 0.025: 1 to 20:1 | 1:30 to 20:1 |
| M453 | 1.033 | 2.13 | 0.01:1 to 100: 1 | 0.025: 1 to 20:1 | 1:30 to 20:1 |
| M454 | 1.034 | 2.13 | 0.01:1 to 100: 1 | 0.025: 1 to 20:1 | 1:30 to 20:1 |
| M455 | 1.035 | 2.13 | 0.01:1 to 100: 1 | 0.025: 1 to 20:1 | 1:30 to 20:1 |
| M456 | 1.001 | 2.14 | 0.01:1 to 100: 1 | 0.025: 1 to 20:1 | 1:30 to 20:1 |
| M457 | 1.002 | 2.14 | 0.01:1 to 100: 1 | 0.025: 1 to 20:1 | 1:30 to 20:1 |
| M458 | 1.003 | 2.14 | 0.01:1 to 100: 1 | 0.025: 1 to 20:1 | 1:30 to 20:1 |
| M459 | 1.004 | 2.14 | 0.01:1 to 100: 1 | 0.025: 1 to 20:1 | 1:30 to 20:1 |
| M460 | 1.005 | 2.14 | 0.01:1 to 100: 1 | 0.025: 1 to 20:1 | 1:30 to 20:1 |
| M461 | 1.006 | 2.14 | 0.01:1 to 100: 1 | 0.025: 1 to 20:1 | 1:30 to 20:1 |
| M462 | 1.007 | 2.14 | 0.01:1 to 100: 1 | 0.025: 1 to 20:1 | 1:30 to 20:1 |
| M463 | 1.008 | 2.14 | 0.01:1 to 100: 1 | 0.025: 1 to 20:1 | 1:30 to 20:1 |
| M464 | 1.009 | 2.14 | 0.01:1 to 100: 1 | 0.025: 1 to 20:1 | 1:30 to 20:1 |

(continued)

| Composition Number | (A) Compound of Formula (I) | (B) Compound of Formula (II) | Typical Weight Ratio | Preferred Weight Ratio | More Preferred Weight Ratio |
|---|---|---|---|---|---|
| M465 | 1.010 | 2.14 | 0.01:1 to 100: 1 | 0.025: 1 to 20:1 | 1:30 to 20:1 |
| M466 | 1.011 | 2.14 | 0.01:1 to 100: 1 | 0.025: 1 to 20:1 | 1:30 to 20:1 |
| M467 | 1.012 | 2.14 | 0.01:1 to 100: 1 | 0.025: 1 to 20:1 | 1:30 to 20:1 |
| M468 | 1.013 | 2.14 | 0.01:1 to 100: 1 | 0.025: 1 to 20:1 | 1:30 to 20:1 |
| M469 | 1.014 | 2.14 | 0.01:1 to 100: 1 | 0.025: 1 to 20:1 | 1:30 to 20:1 |
| M470 | 1.015 | 2.14 | 0.01:1 to 100: 1 | 0.025: 1 to 20:1 | 1:30 to 20:1 |
| M471 | 1.016 | 2.14 | 0.01:1 to 100: 1 | 0.025: 1 to 20:1 | 1:30 to 20:1 |
| M472 | 1.017 | 2.14 | 0.01:1 to 100: 1 | 0.025: 1 to 20:1 | 1:30 to 20:1 |
| M473 | 1.018 | 2.14 | 0.01:1 to 100: 1 | 0.025: 1 to 20:1 | 1:30 to 20:1 |
| M474 | 1.019 | 2.14 | 0.01:1 to 100: 1 | 0.025: 1 to 20:1 | 1:30 to 20:1 |
| M475 | 1.020 | 2.14 | 0.01:1 to 100: 1 | 0.025: 1 to 20:1 | 1:30 to 20:1 |
| M476 | 1.021 | 2.14 | 0.01:1 to 100: 1 | 0.025: 1 to 20:1 | 1:30 to 20:1 |
| M477 | 1.022 | 2.14 | 0.01:1 to 100: 1 | 0.025: 1 to 20:1 | 1:30 to 20:1 |
| M478 | 1.023 | 2.14 | 0.01:1 to 100: 1 | 0.025: 1 to 20:1 | 1:30 to 20:1 |
| M479 | 1.024 | 2.14 | 0.01:1 to 100: 1 | 0.025: 1 to 20:1 | 1:30 to 20:1 |
| M480 | 1.025 | 2.14 | 0.01:1 to 100: 1 | 0.025: 1 to 20:1 | 1:30 to 20:1 |
| M481 | 1.026 | 2.14 | 0.01:1 to 100: 1 | 0.025: 1 to 20:1 | 1:30 to 20:1 |
| M482 | 1.027 | 2.14 | 0.01:1 to 100: 1 | 0.025: 1 to 20:1 | 1:30 to 20:1 |
| M483 | 1.028 | 2.14 | 0.01:1 to 100: 1 | 0.025: 1 to 20:1 | 1:30 to 20:1 |
| M484 | 1.029 | 2.14 | 0.01:1 to 100: 1 | 0.025: 1 to 20:1 | 1:30 to 20:1 |
| M485 | 1.030 | 2.14 | 0.01:1 to 100: 1 | 0.025: 1 to 20:1 | 1:30 to 20:1 |

(continued)

| Composition Number | (A) Compound of Formula (I) | (B) Compound of Formula (II) | Typical Weight Ratio | Preferred Weight Ratio | More Preferred Weight Ratio |
|---|---|---|---|---|---|
| M486 | 1.031 | 2.14 | 0.01:1 to 100: 1 | 0.025: 1 to 20:1 | 1:30 to 20:1 |
| M487 | 1.032 | 2.14 | 0.01:1 to 100: 1 | 0.025: 1 to 20:1 | 1:30 to 20:1 |
| M488 | 1.033 | 2.14 | 0.01:1 to 100: 1 | 0.025: 1 to 20:1 | 1:30 to 20:1 |
| M489 | 1.034 | 2.14 | 0.01:1 to 100: 1 | 0.025: 1 to 20:1 | 1:30 to 20:1 |
| M490 | 1.035 | 2.14 | 0.01:1 to 100: 1 | 0.025: 1 to 20:1 | 1:30 to 20:1 |
| M491 | 1.001 | 2.15 | 0.01:1 to 100: 1 | 0.025: 1 to 20:1 | 1:30 to 20:1 |
| M492 | 1.002 | 2.15 | 0.01:1 to 100: 1 | 0.025: 1 to 20:1 | 1:30 to 20:1 |
| M493 | 1.003 | 2.15 | 0.01:1 to 100: 1 | 0.025: 1 to 20:1 | 1:30 to 20:1 |
| M494 | 1.004 | 2.15 | 0.01:1 to 100: 1 | 0.025: 1 to 20:1 | 1:30 to 20:1 |
| M495 | 1.005 | 2.15 | 0.01:1 to 100: 1 | 0.025: 1 to 20:1 | 1:30 to 20:1 |
| M496 | 1.006 | 2.15 | 0.01:1 to 100: 1 | 0.025: 1 to 20:1 | 1:30 to 20:1 |
| M497 | 1.007 | 2.15 | 0.01:1 to 100: 1 | 0.025: 1 to 20:1 | 1:30 to 20:1 |
| M498 | 1.008 | 2.15 | 0.01:1 to 100: 1 | 0.025: 1 to 20:1 | 1:30 to 20:1 |
| M499 | 1.009 | 2.15 | 0.01:1 to 100: 1 | 0.025: 1 to 20:1 | 1:30 to 20:1 |
| M500 | 1.010 | 2.15 | 0.01:1 to 100: 1 | 0.025: 1 to 20:1 | 1:30 to 20:1 |
| M501 | 1.011 | 2.15 | 0.01:1 to 100: 1 | 0.025: 1 to 20:1 | 1:30 to 20:1 |
| M502 | 1.012 | 2.15 | 0.01:1 to 100: 1 | 0.025: 1 to 20:1 | 1:30 to 20:1 |
| M503 | 1.013 | 2.15 | 0.01:1 to 100: 1 | 0.025: 1 to 20:1 | 1:30 to 20:1 |
| M504 | 1.014 | 2.15 | 0.01:1 to 100: 1 | 0.025: 1 to 20:1 | 1:30 to 20:1 |
| M505 | 1.015 | 2.15 | 0.01:1 to 100: 1 | 0.025: 1 to 20:1 | 1:30 to 20:1 |
| M506 | 1.016 | 2.15 | 0.01:1 to 100: 1 | 0.025: 1 to 20:1 | 1:30 to 20:1 |

(continued)

| Composition Number | (A) Compound of Formula (I) | (B) Compound of Formula (II) | Typical Weight Ratio | Preferred Weight Ratio | More Preferred Weight Ratio |
|---|---|---|---|---|---|
| M507 | 1.017 | 2.15 | 0.01:1 to 100: 1 | 0.025: 1 to 20:1 | 1:30 to 20:1 |
| M508 | 1.018 | 2.15 | 0.01:1 to 100: 1 | 0.025: 1 to 20:1 | 1:30 to 20:1 |
| M509 | 1.019 | 2.15 | 0.01:1 to 100: 1 | 0.025: 1 to 20:1 | 1:30 to 20:1 |
| M510 | 1.020 | 2.15 | 0.01:1 to 100: 1 | 0.025: 1 to 20:1 | 1:30 to 20:1 |
| M511 | 1.021 | 2.15 | 0.01:1 to 100: 1 | 0.025: 1 to 20:1 | 1:30 to 20:1 |
| M512 | 1.022 | 2.15 | 0.01:1 to 100: 1 | 0.025: 1 to 20:1 | 1:30 to 20:1 |
| M513 | 1.023 | 2.15 | 0.01:1 to 100: 1 | 0.025: 1 to 20:1 | 1:30 to 20:1 |
| M514 | 1.024 | 2.15 | 0.01:1 to 100: 1 | 0.025: 1 to 20:1 | 1:30 to 20:1 |
| M515 | 1.025 | 2.15 | 0.01:1 to 100: 1 | 0.025: 1 to 20:1 | 1:30 to 20:1 |
| M516 | 1.026 | 2.15 | 0.01:1 to 100: 1 | 0.025: 1 to 20:1 | 1:30 to 20:1 |
| M517 | 1.027 | 2.15 | 0.01:1 to 100: 1 | 0.025: 1 to 20:1 | 1:30 to 20:1 |
| M518 | 1.028 | 2.15 | 0.01:1 to 100: 1 | 0.025: 1 to 20:1 | 1:30 to 20:1 |
| M519 | 1.029 | 2.15 | 0.01:1 to 100: 1 | 0.025: 1 to 20:1 | 1:30 to 20:1 |
| M520 | 1.030 | 2.15 | 0.01:1 to 100: 1 | 0.025: 1 to 20:1 | 1:30 to 20:1 |
| M521 | 1.031 | 2.15 | 0.01:1 to 100: 1 | 0.025: 1 to 20:1 | 1:30 to 20:1 |
| M522 | 1.032 | 2.15 | 0.01:1 to 100: 1 | 0.025: 1 to 20:1 | 1:30 to 20:1 |
| M523 | 1.033 | 2.15 | 0.01:1 to 100: 1 | 0.025: 1 to 20:1 | 1:30 to 20:1 |
| M524 | 1.034 | 2.15 | 0.01:1 to 100: 1 | 0.025: 1 to 20:1 | 1:30 to 20:1 |
| M525 | 1.035 | 2.15 | 0.01:1 to 100: 1 | 0.025: 1 to 20:1 | 1:30 to 20:1 |
| M526 | 1.001 | 2.16 | 0.01:1 to 100: 1 | 0.025: 1 to 20:1 | 1:30 to 20:1 |
| M527 | 1.002 | 2.16 | 0.01:1 to 100: 1 | 0.025: 1 to 20:1 | 1:30 to 20:1 |

(continued)

| Composition Number | (A) Compound of Formula (I) | (B) Compound of Formula (II) | Typical Weight Ratio | Preferred Weight Ratio | More Preferred Weight Ratio |
|---|---|---|---|---|---|
| M528 | 1.003 | 2.16 | 0.01:1 to 100: 1 | 0.025: 1 to 20:1 | 1:30 to 20:1 |
| M529 | 1.004 | 2.16 | 0.01:1 to 100: 1 | 0.025: 1 to 20:1 | 1:30 to 20:1 |
| M530 | 1.005 | 2.16 | 0.01:1 to 100: 1 | 0.025: 1 to 20:1 | 1:30 to 20:1 |
| M531 | 1.006 | 2.16 | 0.01:1 to 100: 1 | 0.025: 1 to 20:1 | 1:30 to 20:1 |
| M532 | 1.007 | 2.16 | 0.01:1 to 100: 1 | 0.025: 1 to 20:1 | 1:30 to 20:1 |
| M533 | 1.008 | 2.16 | 0.01:1 to 100: 1 | 0.025: 1 to 20:1 | 1:30 to 20:1 |
| M534 | 1.009 | 2.16 | 0.01:1 to 100: 1 | 0.025: 1 to 20:1 | 1:30 to 20:1 |
| M535 | 1.010 | 2.16 | 0.01:1 to 100: 1 | 0.025: 1 to 20:1 | 1:30 to 20:1 |
| M536 | 1.011 | 2.16 | 0.01:1 to 100: 1 | 0.025: 1 to 20:1 | 1:30 to 20:1 |
| M537 | 1.012 | 2.16 | 0.01:1 to 100: 1 | 0.025: 1 to 20:1 | 1:30 to 20:1 |
| M538 | 1.013 | 2.16 | 0.01:1 to 100: 1 | 0.025: 1 to 20:1 | 1:30 to 20:1 |
| M539 | 1.014 | 2.16 | 0.01:1 to 100: 1 | 0.025: 1 to 20:1 | 1:30 to 20:1 |
| M540 | 1.015 | 2.16 | 0.01:1 to 100: 1 | 0.025: 1 to 20:1 | 1:30 to 20:1 |
| M541 | 1.016 | 2.16 | 0.01:1 to 100: 1 | 0.025: 1 to 20:1 | 1:30 to 20:1 |
| M542 | 1.017 | 2.16 | 0.01:1 to 100: 1 | 0.025: 1 to 20:1 | 1:30 to 20:1 |
| M543 | 1.018 | 2.16 | 0.01:1 to 100: 1 | 0.025: 1 to 20:1 | 1:30 to 20:1 |
| M544 | 1.019 | 2.16 | 0.01:1 to 100: 1 | 0.025: 1 to 20:1 | 1:30 to 20:1 |
| M545 | 1.020 | 2.16 | 0.01:1 to 100: 1 | 0.025: 1 to 20:1 | 1:30 to 20:1 |
| M546 | 1.021 | 2.16 | 0.01:1 to 100: 1 | 0.025: 1 to 20:1 | 1:30 to 20:1 |
| M547 | 1.022 | 2.16 | 0.01:1 to 100: 1 | 0.025: 1 to 20:1 | 1:30 to 20:1 |
| M548 | 1.023 | 2.16 | 0.01:1 to 100: 1 | 0.025: 1 to 20:1 | 1:30 to 20:1 |

(continued)

| Composition Number | (A) Compound of Formula (I) | (B) Compound of Formula (II) | Typical Weight Ratio | Preferred Weight Ratio | More Preferred Weight Ratio |
|---|---|---|---|---|---|
| M549 | 1.024 | 2.16 | 0.01:1 to 100: 1 | 0.025: 1 to 20:1 | 1:30 to 20:1 |
| M550 | 1.025 | 2.16 | 0.01:1 to 100: 1 | 0.025: 1 to 20:1 | 1:30 to 20:1 |
| M551 | 1.026 | 2.16 | 0.01:1 to 100: 1 | 0.025: 1 to 20:1 | 1:30 to 20:1 |
| M552 | 1.027 | 2.16 | 0.01:1 to 100: 1 | 0.025: 1 to 20:1 | 1:30 to 20:1 |
| M553 | 1.028 | 2.16 | 0.01:1 to 100: 1 | 0.025: 1 to 20:1 | 1:30 to 20:1 |
| M554 | 1.029 | 2.16 | 0.01:1 to 100: 1 | 0.025: 1 to 20:1 | 1:30 to 20:1 |
| M555 | 1.030 | 2.16 | 0.01:1 to 100: 1 | 0.025: 1 to 20:1 | 1:30 to 20:1 |
| M556 | 1.031 | 2.16 | 0.01:1 to 100: 1 | 0.025: 1 to 20:1 | 1:30 to 20:1 |
| M557 | 1.032 | 2.16 | 0.01:1 to 100: 1 | 0.025: 1 to 20:1 | 1:30 to 20:1 |
| M558 | 1.033 | 2.16 | 0.01:1 to 100: 1 | 0.025: 1 to 20:1 | 1:30 to 20:1 |
| M559 | 1.034 | 2.16 | 0.01:1 to 100: 1 | 0.025: 1 to 20:1 | 1:30 to 20:1 |
| M560 | 1.035 | 2.16 | 0.01:1 to 100: 1 | 0.025: 1 to 20:1 | 1:30 to 20:1 |
| M561 | 1.001 | 2.17 | 0.01:1 to 100: 1 | 0.025: 1 to 20:1 | 1:30 to 20:1 |
| M562 | 1.002 | 2.17 | 0.01:1 to 100: 1 | 0.025: 1 to 20:1 | 1:30 to 20:1 |
| M563 | 1.003 | 2.17 | 0.01:1 to 100: 1 | 0.025: 1 to 20:1 | 1:30 to 20:1 |
| M564 | 1.004 | 2.17 | 0.01:1 to 100: 1 | 0.025: 1 to 20:1 | 1:30 to 20:1 |
| M565 | 1.005 | 2.17 | 0.01:1 to 100: 1 | 0.025: 1 to 20:1 | 1:30 to 20:1 |
| M566 | 1.006 | 2.17 | 0.01:1 to 100: 1 | 0.025: 1 to 20:1 | 1:30 to 20:1 |
| M567 | 1.007 | 2.17 | 0.01:1 to 100: 1 | 0.025: 1 to 20:1 | 1:30 to 20:1 |
| M568 | 1.008 | 2.17 | 0.01:1 to 100: 1 | 0.025: 1 to 20:1 | 1:30 to 20:1 |
| M569 | 1.009 | 2.17 | 0.01:1 to 100: 1 | 0.025: 1 to 20:1 | 1:30 to 20:1 |

(continued)

| Composition Number | (A) Compound of Formula (I) | (B) Compound of Formula (II) | Typical Weight Ratio | Preferred Weight Ratio | More Preferred Weight Ratio |
|---|---|---|---|---|---|
| M570 | 1.010 | 2.17 | 0.01:1 to 100: 1 | 0.025: 1 to 20:1 | 1:30 to 20:1 |
| M571 | 1.011 | 2.17 | 0.01:1 to 100: 1 | 0.025: 1 to 20:1 | 1:30 to 20:1 |
| M572 | 1.012 | 2.17 | 0.01:1 to 100: 1 | 0.025: 1 to 20:1 | 1:30 to 20:1 |
| M573 | 1.013 | 2.17 | 0.01:1 to 100: 1 | 0.025: 1 to 20:1 | 1:30 to 20:1 |
| M574 | 1.014 | 2.17 | 0.01:1 to 100: 1 | 0.025: 1 to 20:1 | 1:30 to 20:1 |
| M575 | 1.015 | 2.17 | 0.01:1 to 100: 1 | 0.025: 1 to 20:1 | 1:30 to 20:1 |
| M576 | 1.016 | 2.17 | 0.01:1 to 100: 1 | 0.025: 1 to 20:1 | 1:30 to 20:1 |
| M577 | 1.017 | 2.17 | 0.01:1 to 100: 1 | 0.025: 1 to 20:1 | 1:30 to 20:1 |
| M578 | 1.018 | 2.17 | 0.01:1 to 100: 1 | 0.025: 1 to 20:1 | 1:30 to 20:1 |
| M579 | 1.019 | 2.17 | 0.01:1 to 100: 1 | 0.025: 1 to 20:1 | 1:30 to 20:1 |
| M580 | 1.020 | 2.17 | 0.01:1 to 100: 1 | 0.025: 1 to 20:1 | 1:30 to 20:1 |
| M581 | 1.021 | 2.17 | 0.01:1 to 100: 1 | 0.025: 1 to 20:1 | 1:30 to 20:1 |
| M582 | 1.022 | 2.17 | 0.01:1 to 100: 1 | 0.025: 1 to 20:1 | 1:30 to 20:1 |
| M583 | 1.023 | 2.17 | 0.01:1 to 100: 1 | 0.025: 1 to 20:1 | 1:30 to 20:1 |
| M584 | 1.024 | 2.17 | 0.01:1 to 100: 1 | 0.025: 1 to 20:1 | 1:30 to 20:1 |
| M585 | 1.025 | 2.17 | 0.01:1 to 100: 1 | 0.025: 1 to 20:1 | 1:30 to 20:1 |
| M586 | 1.026 | 2.17 | 0.01:1 to 100: 1 | 0.025: 1 to 20:1 | 1:30 to 20:1 |
| M587 | 1.027 | 2.17 | 0.01:1 to 100: 1 | 0.025: 1 to 20:1 | 1:30 to 20:1 |
| M588 | 1.028 | 2.17 | 0.01:1 to 100: 1 | 0.025: 1 to 20:1 | 1:30 to 20:1 |
| M589 | 1.029 | 2.17 | 0.01:1 to 100: 1 | 0.025: 1 to 20:1 | 1:30 to 20:1 |
| M590 | 1.030 | 2.17 | 0.01:1 to 100: 1 | 0.025: 1 to 20:1 | 1:30 to 20:1 |

(continued)

| Composition Number | (A) Compound of Formula (I) | (B) Compound of Formula (II) | Typical Weight Ratio | Preferred Weight Ratio | More Preferred Weight Ratio |
|---|---|---|---|---|---|
| M591 | 1.031 | 2.17 | 0.01:1 to 100: 1 | 0.025: 1 to 20:1 | 1:30 to 20:1 |
| M592 | 1.032 | 2.17 | 0.01:1 to 100: 1 | 0.025: 1 to 20:1 | 1:30 to 20:1 |
| M593 | 1.033 | 2.17 | 0.01:1 to 100: 1 | 0.025: 1 to 20:1 | 1:30 to 20:1 |
| M594 | 1.034 | 2.17 | 0.01:1 to 100: 1 | 0.025: 1 to 20:1 | 1:30 to 20:1 |
| M595 | 1.035 | 2.17 | 0.01:1 to 100: 1 | 0.025: 1 to 20:1 | 1:30 to 20:1 |
| M596 | 1.001 | 2.18 | 0.01:1 to 100: 1 | 0.025: 1 to 20:1 | 1:30 to 20:1 |
| M597 | 1.002 | 2.18 | 0.01:1 to 100: 1 | 0.025: 1 to 20:1 | 1:30 to 20:1 |
| M598 | 1.003 | 2.18 | 0.01:1 to 100: 1 | 0.025: 1 to 20:1 | 1:30 to 20:1 |
| M599 | 1.004 | 2.18 | 0.01:1 to 100: 1 | 0.025: 1 to 20:1 | 1:30 to 20:1 |
| M600 | 1.005 | 2.18 | 0.01:1 to 100: 1 | 0.025: 1 to 20:1 | 1:30 to 20:1 |
| M601 | 1.006 | 2.18 | 0.01:1 to 100: 1 | 0.025: 1 to 20:1 | 1:30 to 20:1 |
| M602 | 1.007 | 2.18 | 0.01:1 to 100: 1 | 0.025: 1 to 20:1 | 1:30 to 20:1 |
| M603 | 1.008 | 2.18 | 0.01:1 to 100: 1 | 0.025: 1 to 20:1 | 1:30 to 20:1 |
| M604 | 1.009 | 2.18 | 0.01:1 to 100: 1 | 0.025: 1 to 20:1 | 1:30 to 20:1 |
| M605 | 1.010 | 2.18 | 0.01:1 to 100: 1 | 0.025: 1 to 20:1 | 1:30 to 20:1 |
| M606 | 1.011 | 2.18 | 0.01:1 to 100: 1 | 0.025: 1 to 20:1 | 1:30 to 20:1 |
| M607 | 1.012 | 2.18 | 0.01:1 to 100: 1 | 0.025: 1 to 20:1 | 1:30 to 20:1 |
| M608 | 1.013 | 2.18 | 0.01:1 to 100: 1 | 0.025: 1 to 20:1 | 1:30 to 20:1 |
| M609 | 1.014 | 2.18 | 0.01:1 to 100: 1 | 0.025: 1 to 20:1 | 1:30 to 20:1 |
| M610 | 1.015 | 2.18 | 0.01:1 to 100: 1 | 0.025: 1 to 20:1 | 1:30 to 20:1 |
| M611 | 1.016 | 2.18 | 0.01:1 to 100: 1 | 0.025: 1 to 20:1 | 1:30 to 20:1 |

(continued)

| Composition Number | (A) Compound of Formula (I) | (B) Compound of Formula (II) | Typical Weight Ratio | Preferred Weight Ratio | More Preferred Weight Ratio |
|---|---|---|---|---|---|
| M612 | 1.017 | 2.18 | 0.01:1 to 100: 1 | 0.025: 1 to 20:1 | 1:30 to 20:1 |
| M613 | 1.018 | 2.18 | 0.01:1 to 100: 1 | 0.025: 1 to 20:1 | 1:30 to 20:1 |
| M614 | 1.019 | 2.18 | 0.01:1 to 100: 1 | 0.025: 1 to 20:1 | 1:30 to 20:1 |
| M615 | 1.020 | 2.18 | 0.01:1 to 100: 1 | 0.025: 1 to 20:1 | 1:30 to 20:1 |
| M616 | 1.021 | 2.18 | 0.01:1 to 100: 1 | 0.025: 1 to 20:1 | 1:30 to 20:1 |
| M617 | 1.022 | 2.18 | 0.01:1 to 100: 1 | 0.025: 1 to 20:1 | 1:30 to 20:1 |
| M618 | 1.023 | 2.18 | 0.01:1 to 100: 1 | 0.025: 1 to 20:1 | 1:30 to 20:1 |
| M619 | 1.024 | 2.18 | 0.01:1 to 100: 1 | 0.025: 1 to 20:1 | 1:30 to 20:1 |
| M620 | 1.025 | 2.18 | 0.01:1 to 100: 1 | 0.025: 1 to 20:1 | 1:30 to 20:1 |
| M621 | 1.026 | 2.18 | 0.01:1 to 100: 1 | 0.025: 1 to 20:1 | 1:30 to 20:1 |
| M622 | 1.027 | 2.18 | 0.01:1 to 100: 1 | 0.025: 1 to 20:1 | 1:30 to 20:1 |
| M623 | 1.028 | 2.18 | 0.01:1 to 100: 1 | 0.025: 1 to 20:1 | 1:30 to 20:1 |
| M624 | 1.029 | 2.18 | 0.01:1 to 100: 1 | 0.025: 1 to 20:1 | 1:30 to 20:1 |
| M625 | 1.030 | 2.18 | 0.01:1 to 100: 1 | 0.025: 1 to 20:1 | 1:30 to 20:1 |
| M626 | 1.031 | 2.18 | 0.01:1 to 100: 1 | 0.025: 1 to 20:1 | 1:30 to 20:1 |
| M627 | 1.032 | 2.18 | 0.01:1 to 100: 1 | 0.025: 1 to 20:1 | 1:30 to 20:1 |
| M628 | 1.033 | 2.18 | 0.01:1 to 100: 1 | 0.025: 1 to 20:1 | 1:30 to 20:1 |
| M629 | 1.034 | 2.18 | 0.01:1 to 100: 1 | 0.025: 1 to 20:1 | 1:30 to 20:1 |
| M630 | 1.035 | 2.18 | 0.01:1 to 100: 1 | 0.025: 1 to 20:1 | 1:30 to 20:1 |

The skilled man will appreciate that the most preferred ratio range of A:B for any one of composition numbers M1 to M630 described in Table 2 above is from 1:30 to 20:1, and that each one of composition numbers M1 to M630 described in Table 2 may used at any one of the following individualised ratios: 1:30, 1:15, 2:15, 3:20, 1:6, 1:5, 1:4, 4:15, 3:10, 1:3, 5:14, 3:8, 2:5, 8:15, 3:5, 5:7, 3:4, 4:5, 1:2, 1:1, 16:15, 6:5, 4:3, 10:7, 3:2, 8:5, 5:3, 2:1, 12:5, 8:3, 20:7, 16:5, 10:3, 4:1, 8:1, 12:1, 16:1 and 20:1.

When applied in a composition of the invention component (A) is typically applied at a rate of 25 to 2000 g ha, more particularly 25, 50, 75, 100, 125, 150, 200, 250, 300, 400, 500, 600, 750, 800, 1000, 1250, 1500, 1800, or 2000 g/ha. Such rates of component (A) are applied typically in association with 5 to 2000g/ha of component B, and more specifically in association with 5, 10, 15, 20, 25, 50, 75, 100, 120, 125, 140, 150, 200, 240, 250, 300, 400, 480, 500, 600, 750, 1000, 1250, 1500, 1800, or 2000g/ha of component (B). The Examples described herein illustrate but do not limit the range of rates of components A and B that may be employed in the invention.

The amount of a composition according to the invention to be applied, will depend on various factors, such as the compounds employed; the subject of the treatment, such as, for example plants, soil or seeds; the type of treatment, such as, for example spraying, dusting or seed dressing; or the application time. In agricultural practice the application rates of the composition according to the invention depend on the type of effect desired, and typically range from 30 to 4000 g of total composition per hectare, and more commonly between 30 and 2000g/ha. The application is generally made by spraying the composition, typically by tractor mounted sprayer for large areas, but other methods such as dusting (for powders), drip or drench can also be used.

The compositions of the invention can advantageously be used in the below-mentioned formulations (in which case "active ingredient" relates to the respective mixture of compound of Formula (I) with a compound of component B or, when a safener is also used, the respective mixture of the compound of Formula (I) with the compound of component B and the safener).

The individual components of the composition of the invention may be utilised as the technical active ingredient as produced. More typically however, the compositions according to the invention may be formulated in various ways using formulation adjuvants, such as carriers, solvents and surface-active substances. The formulations can be in various physical forms, e.g. in the form of dusting powders, gels, wettable powders, water-dispersible granules, water-dispersible tablets, effervescent pellets, emulsifiable concentrates, microemulsifiable concentrates, oil-in-water emulsions, oil-flowables, aqueous dispersions, oily dispersions, suspo-emulsions, capsule suspensions, emulsifiable granules, soluble liquids, water-soluble concentrates (with water or a water-miscible organic solvent as carrier), impregnated polymer films or in other forms known e.g. from the Manual on Development and Use of FAO and WHO Specifications for Pesticides, United Nations, First Edition, Second Revision (2010). Such formulations can either be used directly or diluted prior to use. The dilutions can be made, for example, with water, liquid fertilisers, micronutrients, biological organisms, oil or solvents.

The formulations can be prepared e.g. by mixing the active ingredient with the formulation adjuvants in order to obtain compositions in the form of finely divided solids, granules, solutions, dispersions or emulsions. The active ingredients can also be formulated with other adjuvants, such as finely divided solids, mineral oils, oils of vegetable or animal origin, modified oils of vegetable or animal origin, organic solvents, water, surface-active substances or combinations thereof.

The active ingredients can also be contained in very fine microcapsules. Microcapsules contain the active ingredients in a porous carrier. This enables the active ingredients to be released into the environment in controlled amounts (e.g. slow-release). Microcapsules usually have a diameter of from 0.1 to 500 microns. They contain active ingredients in an amount of about from 25 to 95 % by weight of the capsule weight. The active ingredients can be in the form of a monolithic solid, in the form of fine particles in solid or liquid dispersion or in the form of a suitable solution. The encapsulating membranes can comprise, for example, natural or synthetic rubbers, cellulose, styrene/butadiene copolymers, polyacrylonitrile, polyacrylate, polyesters, polyamides, polyureas, polyurethane or chemically modified polymers and starch xanthates or other polymers that are known to the person skilled in the art. Alternatively, very fine microcapsules can be formed in which the active ingredient is contained in the form of finely divided particles in a solid matrix of base substance, but the microcapsules are not themselves encapsulated.

The formulation adjuvants that are suitable for the preparation of the compositions according to the invention are known *per se.* As liquid carriers there may be used: water, toluene, xylene, petroleum ether, vegetable oils, acetone, methyl ethyl ketone, cyclohexanone, acid anhydrides, acetonitrile, acetophenone, amyl acetate, 2-butanone, butylene carbonate, chlorobenzene, cyclohexane, cyclohexanol, alkyl esters of acetic acid, diacetone alcohol, 1,2-dichloropropane, diethanolamine, p-diethylbenzene, diethylene glycol, diethylene glycol abietate, diethylene glycol butyl ether, diethylene glycol ethyl ether, diethylene glycol methyl ether, *N,N*-dimethylformamide, dimethyl sulfoxide, 1,4-dioxane, dipropylene glycol, dipropylene glycol methyl ether, dipropylene glycol dibenzoate, diproxitol, alkylpyrrolidone, ethyl acetate, 2-ethylhexanol, ethylene carbonate, 1,1,1-trichloroethane, 2-heptanone, alpha-pinene, d-limonene, ethyl lactate, ethylene glycol, ethylene glycol butyl ether, ethylene glycol methyl ether, gamma-butyrolactone, glycerol, glycerol acetate, glycerol diacetate, glycerol triacetate, hexadecane, hexylene glycol, isoamyl acetate, isobornyl acetate, isooctane, isophorone, isopropylbenzene, isopropyl myristate, lactic acid, laurylamine, mesityl oxide, methoxypropanol, methyl isoamyl ketone, methyl isobutyl ketone, methyl laurate, methyl octanoate, methyl oleate, methylene chloride, m-xylene, *n*-hexane, *n*-octylamine, octadecanoic acid, octylamine acetate, oleic acid, oleylamine, o-xylene, phenol, polyethylene glycol, propionic acid, propyl lactate, propylene carbonate, propylene glycol, propylene glycol methyl ether, p-xylene, toluene, triethyl phosphate, triethylene glycol, xylenesulfonic acid, paraffin, mineral oil, trichloroethylene, perchloroethylene, ethyl acetate, amyl acetate, butyl acetate, propylene glycol methyl ether, diethylene glycol methyl ether, methanol, ethanol, isopropanol, and alcohols of higher molecular weight, such as amyl alcohol, tetrahydrofurfuryl alcohol, hexanol, octanol, ethylene glycol, propylene glycol, glycerol, *N*-methyl-2-pyrrolidone and the like.

Suitable solid carriers are, for example, talc, titanium dioxide, pyrophyllite clay, silica, attapulgite clay, kieselguhr, limestone, calcium carbonate, bentonite, calcium montmorillonite, cottonseed husks, wheat flour, soybean flour, pumice, wood flour, ground walnut shells, lignin and similar substances.

A large number of surface-active substances can advantageously be used in both solid and liquid formulations, especially in those formulations which can be diluted with a carrier prior to use. Surface-active substances may be anionic, cationic, non-ionic or polymeric and they can be used as emulsifiers, wetting agents or suspending agents or for other purposes. Typical surface-active substances include, for example, salts of alkyl sulfates, such as diethanolammonium lauryl sulfate; salts of alkylarylsulfonates, such as calcium dodecylbenzenesulfonate; alkylphenol/alkylene oxide addition products, such as nonylphenol ethoxylate; alcohol/alkylene oxide addition products, such as tridecylalcohol ethoxylate; soaps, such as sodium stearate; salts of alkylnaphthalenesulfonates, such as sodium dibutylnaphthalenesulfonate; dialkyl esters of sulfosuccinate salts, such as sodium di(2-ethylhexyl)sulfosuccinate; sorbitol esters, such as sorbitol oleate; quaternary amines, such as lauryltrimethylammonium chloride, polyethylene glycol esters of fatty acids, such as polyethylene glycol stearate; block copolymers of ethylene oxide and propylene oxide; and salts of mono and di-alkylphosphate esters; and also further substances described e.g. in McCutcheon's Detergents and Emulsifiers Annual, MC Publishing Corp., Ridgewood New Jersey (1981).

Further adjuvants that can be used in pesticidal formulations include crystallisation inhibitors, viscosity modifiers, suspending agents, dyes, anti-oxidants, foaming agents, light absorbers, mixing auxiliaries, antifoams, complexing agents, neutralising or pH-modifying substances and buffers, corrosion inhibitors, fragrances, wetting agents, take-up enhancers, micronutrients, plasticisers, glidants, lubricants, dispersants, thickeners, antifreezes, microbicides, and liquid and solid fertilisers.

The formulations according to the invention can include an additive comprising an oil of vegetable or animal origin, a mineral oil, alkyl esters of such oils or mixtures of such oils and oil derivatives. The amount of oil additive in the composition according to the invention is generally from 0.01 to 10 %, based on the mixture to be applied. For example, the oil additive can be added to a spray tank in the desired concentration after a spray mixture has been prepared. Preferred oil additives comprise mineral oils or an oil of vegetable origin, for example rapeseed oil, olive oil or sunflower oil, emulsified vegetable oil, alkyl esters of oils of vegetable origin, for example the methyl derivatives, or an oil of animal origin, such as fish oil or beef tallow. Preferred oil additives comprise alkyl esters of $C_8C_{22}$ fatty acids, especially the methyl derivatives of $C_{12}$-$C_{18}$ fatty acids, for example the methyl esters of lauric acid, palmitic acid and oleic acid (methyl laurate, methyl palmitate and methyl oleate, respectively). Many oil derivatives are known from the Compendium of Herbicide Adjuvants, 10th Edition, Southern Illinois University, 2010.

The formulations generally comprise from 0.1 to 99 % by weight, especially from 0.1 to 95 % by weight, of compounds (A) and (B) and from 1 to 99.9 % by weight of a formulation adjuvant which preferably includes from 0 to 25 % by weight of a surface-active substance. Whereas commercial products may preferably be formulated as concentrates, the end user will normally employ dilute formulations.

The rates of application vary within wide limits and depend on the nature of the soil, the method of application, the crop plant, the pest to be controlled, the prevailing climatic conditions, and other factors governed by the method of application, the time of application and the target crop. As a general guideline compounds may be applied at a rate of from 1 to 2000 l/ha, especially from 10 to 1000 l/ha.

Preferred formulations can have the following compositions (weight %), wherein the term "active ingredient" refers to the total weight % of the combination of all active ingredients in the composition:

Emulsifiable concentrates:

| | |
|---|---|
| active ingredient: | 1 to 95 %, preferably 60 to 90 % |
| surface-active agent: | 1 to 30 %, preferably 5 to 20 % |
| liquid carrier: | 1 to 80 %, preferably 1 to 35 % |

Dusts:

| | |
|---|---|
| active ingredient: | 0.1 to 10 %, preferably 0.1 to 5 % |
| solid carrier: | 99.9 to 90 %, preferably 99.9 to 99 % |

Suspension concentrates:

| | |
|---|---|
| active ingredient: | 5 to 75 %, preferably 10 to 50 % |
| water: | 94 to 24 %, preferably 88 to 30 % |
| surface-active agent: | 1 to 40 %, preferably 2 to 30 % |

Wettable powders:

| | |
|---|---|
| active ingredient: | 0.5 to 90 %, preferably 1 to 80 % |
| surface-active agent: | 0.5 to 20 %, preferably 1 to 15 % |
| solid carrier: | 5 to 95 %, preferably 15 to 90 % |

Granules:

| | |
|---|---|
| active ingredient: | 0.1 to 30 %, preferably 0.1 to 15 % |
| solid carrier: | 99.5 to 70 %, preferably 97 to 85 % |

Various aspects and embodiments of the present invention will now be illustrated in more detail by way of example. It will be appreciated that modification of detail may be made without departing from the scope of the invention.

**EXAMPLES**

**FORMULATION EXAMPLES**

| **Wettable powders** | a) | b) | c) |
|---|---|---|---|
| active ingredients | 25 % | 50 % | 75 % |
| sodium lignosulfonate | 5 % | 5 % | - |
| sodium lauryl sulphate | 3 % | - | 5 % |
| sodium diisobutylnaphthalenesulfonate | - | 6 % | 10 % |
| phenol polyethylene glycol ether | - | 2 % | - |
| (7-8 mol of ethylene oxide) | | | |
| highly dispersed silicic acid | 5 % | 10 % | 10 % |
| Kaolin | 62 % | 27 % | - |

The combination is thoroughly mixed with the adjuvants and the mixture is thoroughly ground in a suitable mill, affording wettable powders that can be diluted with water to give suspensions of the desired concentration.

| **Powders for dry seed treatment** | a) | b) | c) |
|---|---|---|---|
| active ingredients | 25 % | 50 % | 75 % |
| light mineral oil | 5 % | 5 % | 5 % |
| highly dispersed silicic acid | 5 % | 5 % | - |
| Kaolin | 65 % | 40 % | - |
| Talcum | - | | 20 |

The combination is thoroughly mixed with the adjuvants and the mixture is thoroughly ground in a suitable mill, affording powders that can be used directly for seed treatment.

| **Emulsifiable concentrate** | |
|---|---|
| active ingredients | 10 % |
| octylphenol polyethylene glycol ether | 3 % |
| (4-5 mol of ethylene oxide) | |
| calcium dodecylbenzenesulfonate | 3 % |
| castor oil polyglycol ether (35 mol of ethylene oxide) | 4 % |
| Cyclohexanone | 30 % |
| xylene mixture | 50 % |

Emulsions of any required dilution, which can be used in plant protection, can be obtained from this concentrate by dilution with water.

| **Dusts** | a) | b) | c) |
|---|---|---|---|
| Active ingredients | 5 % | 6 % | 4 % |
| Talcum | 95 % | - | - |
| Kaolin | - | 94 % | - |
| mineral filler | - | - | 96 % |

Ready-for-use dusts are obtained by mixing the combination with the carrier and grinding the mixture in a suitable mill. Such powders can also be used for dry dressings for seed.

| **Extruded granules** | |
|---|---|
| Active ingredients | 15 % |
| sodium lignosulfonate | 2 % |
| Carboxymethylcellulose | 1 % |
| Kaolin | 82 % |

The combination is mixed and ground with the adjuvants, and the mixture is moistened with water. The mixture is extruded and then dried in a stream of air.

| **Coated granules** | |
|---|---|
| Active ingredients | 8 % |
| polyethylene glycol (mol. wt. 200) | 3 % |
| Kaolin | 89 % |

The finely ground combination is uniformly applied, in a mixer, to the kaolin moistened with polyethylene glycol. Non-dusty coated granules are obtained in this manner.

| **Suspension concentrate** | |
|---|---|
| active ingredients | 40 % |
| propylene glycol | 10 % |
| nonylphenol polyethylene glycol ether (15 mol of ethylene oxide) | 6 % |
| Sodium lignosulfonate | 10 % |

(continued)

| Suspension concentrate | |
|---|---|
| Carboxymethylcellulose | 1 % |
| silicone oil (in the form of a 75 % emulsion in water) | 1 % |
| Water | 32 % |

The finely ground combination is intimately mixed with the adjuvants, giving a suspension concentrate from which suspensions of any desired dilution can be obtained by dilution with water. Using such dilutions, living plants as well as plant propagation material can be treated and protected against infestation by microorganisms, by spraying, pouring or immersion.

| Flowable concentrate for seed treatment | |
|---|---|
| active ingredients | 40 % |
| propylene glycol | 5 % |
| copolymer butanol PO/EO | 2 % |
| Tristyrenephenole with 10-20 moles EO | 2 % |
| 1,2-benzisothiazolin-3-one (in the form of a 20% solution in water) | 0.5 % |
| monoazo-pigment calcium salt | 5 % |
| Silicone oil (in the form of a 75 % emulsion in water) | 0.2 % |
| Water | 45.3 % |

The finely ground combination is intimately mixed with the adjuvants, giving a suspension concentrate from which suspensions of any desired dilution can be obtained by dilution with water. Using such dilutions, living plants as well as plant propagation material can be treated and protected against infestation by microorganisms, by spraying, pouring or immersion.

**Slow Release Capsule Suspension**

28 Parts of the combination are mixed with 2 parts of an aromatic solvent and 7 parts of toluene diisocyanate/polymethylene-polyphenylisocyanate-mixture (8:1). This mixture is emulsified in a mixture of 1.2 parts of polyvinylalcohol, 0.05 parts of a defoamer and 51.6 parts of water until the desired particle size is achieved. To this emulsion a mixture of 2.8 parts 1,6-diaminohexane in 5.3 parts of water is added. The mixture is agitated until the polymerization reaction is completed. The obtained capsule suspension is stabilized by adding 0.25 parts of a thickener and 3 parts of a dispersing agent. The capsule suspension formulation contains 28% of the active ingredients. The medium capsule diameter is 8-15 microns. The resulting formulation is applied to seeds as an aqueous suspension in an apparatus suitable for that purpose.

**List of Abbreviations:**

| | |
|---|---|
| Boc | = *tert*-butyloxycarbonyl |
| br | = broad |
| $CDCl_3$ | = chloroform-d |
| $CD_3OD$ | = methanol-d |
| °C | = degrees Celsius |
| $D_2O$ | = water-d |
| DCM | = dichloromethane |
| d | = doublet |
| dd | = double doublet |
| dt | = double triplet |

| | |
|---|---|
| DMSO | = dimethylsulfoxide |
| EtOAc | = ethyl acetate |
| h | = hour(s) |
| HCl | = hydrochloric acid |
| HPLC | = high-performance liquid chromatography (description of the apparatus and the methods used for HPLC are given below) |
| m | = multiplet |
| M | = molar |
| min | = minutes |
| MHz | = mega hertz |
| mL | = millilitre |
| mp | = melting point |
| ppm | = parts per million |
| q | = quartet |
| quin | = quintet |
| rt | = room temperature |
| s | = singlet |
| t | = triplet |
| THF | = tetrahydrofuran |
| LC/MS | = Liquid Chromatography Mass Spectrometry |

**Preparative Reverse Phase HPLC Method:**

Compounds purified by mass directed preparative HPLC using ES+/ES- on a Waters FractionLynx Autopurification system comprising a 2767 injector/collector with a 2545 gradient pump, two 515 isocratic pumps, SFO, 2998 photodiode array (Wavelength range (nm): 210 to 400), 2424 ELSD and QDa mass spectrometer. A Waters Atlantis T3 5micron 19×10mm guard column was used with a Waters Atlantis T3 OBD, 5micron 30x100mm prep column.

**Ionisation method:** Electrospray positive and negative: Cone (V) 20.00, Source Temperature (°C) 120, Cone Gas Flow (L/Hr.) 50
Mass range (Da): positive 100 to 800, negative 115 to 800.

The preparative HPLC was conducted using an 11.4 minute run time (not using at column dilution, bypassed with the column selector), according to the following gradient table:

| Time (mins) | Solvent A (%) | Solvent B (%) | Flow (ml / min) |
|---|---|---|---|
| 0.00 | 100 | 0 | 35 |
| 2.00 | 100 | 0 | 35 |
| 2.01 | 100 | 0 | 35 |
| 7.0 | 90 | 10 | 35 |
| 7.3 | 0 | 100 | 35 |
| 9.2 | 0 | 100 | 35 |
| 9.8 | 99 | 1 | 35 |
| 11.35 | 99 | 1 | 35 |
| 11.40 | 99 | 1 | 35 |
| 515 pump 0ml/min Acetonitrile (ACD)<br>515 pump 1ml/min 90% Methanol/10% Water (make up pump)<br>Solvent A: Water with 0.05% Trifluoroacetic Acid<br>Solvent B: Acetonitrile with 0.05% Trifluoroacetic Acid | | | |

**PREPARATION EXAMPLES FOR COMPOUNDS OF FORMULA (I)**

**EXAMPLE 1: Preparation of 2-(4-pyrimidin-2-ylpyridazin-1-ium-1-yl)ethanesulfonate (compound 1.001)**

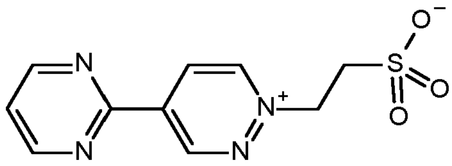

**Step 1: Preparation of tributyl(pyridazin-4-yl)stannane**

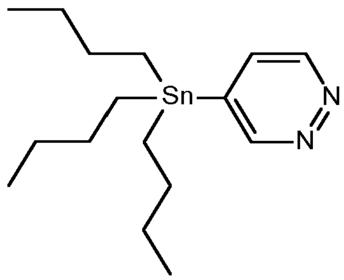

To a solution of lithium diisopropylamide (1M solution in tetrahydrofuran, 125 mL) at -78°C under nitrogen was added a solution of pyridazine (10g) and tri-n-butyltin chloride (44.6g) in THF (100 mL) drop wise. The reaction mixture was stirred at -78°C for 1 hour. The reaction mixture was warmed to room temperature and quenched with saturated aqueous ammonium chloride (100 mL) and extracted with ethyl acetate (3×150 mL). The organic layer was dried over sodium sulfate, concentrated and purified by chromatography on silica eluting with 30% ethyl acetate in hexanes to afford tributyl(pyridazin-4-yl)stannane as a pale brown liquid.

$^1H$ NMR (400MHz, $CDCl_3$) 9.17 (t, 1H) 9.02 (dd, 1H) 7.54 (dd, 1H) 1.57-1.49 (m, 6H) 1.37-1.29 (m, 6H) 1.19-1.13 (m, 6H) 0.92-0.86 (m, 9H).

**Step 2: Preparation of 2-pyridazin-4-ylpyrimidine**

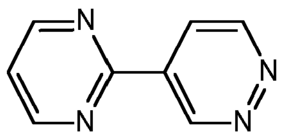

A solution of 2-bromopyrimidine (2.50g) and tributyl(pyridazin-4-yl)stannane (5.80g) in tetrahydrofuran (25 mL) was degassed with argon for 20 min. Tetrakis (triphenylphosphine) palladium (0) (1.80g) was added to the reaction mixture at room temperature and then irradiated in a microwave at 120°C for 30 minutes. The reaction mixture was poured into water and extracted with ethyl acetate (100 mL). The organic layer was concentrated and purified by chromatography on silica eluting with 80% ethyl acetate in hexanes to give 2-pyridazin-4-ylpyrimidine as a beige solid.

$^1H$ NMR (400MHz, $CDCl_3$) 10.17 (dd, 1H) 9.39 (dd, 1H) 8.92 (d, 2H) 8.43 (dd, 1H) 7.39 (t, 1H).

**Step 3: Preparation of 2-(4-pyrimidin-2-ylpyridazin-1-ium-1-yl)ethanesulfonate (1.001)**

A mixture of 2-pyridazin-4-ylpyrimidine (0.120g) and sodium 2-bromoethanesulfonate (0.196g) was stirred in water (2.3 mL) at 100°C for 42 hours. The reaction mixture was concentrated and purified by preparative reverse phase HPLC to give 2-(4-pyrimidin-2-ylpyridazin-1-ium-1-yl)ethanesulfonate as a beige solid.

$^1H$ NMR (400MHz, $D_2O$) 10.19 (d, 1H) 9.84 (d, 1H) 9.20 (dd, 1H) 8.99 (d, 2H) 7.64 (t, 1H) 5.27-5.18 (m, 2H) 3.71-3.63 (m, 2H).

**EXAMPLE 2: Preparation of 4-pyridazin-4-ylpyrimidine**

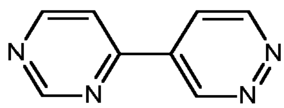

A microwave vial was charged with tributyl(pyridazin-4-yl)stannane (0.387g), 4-chloropyrimidine (0.100g), palladium (0) tetrakis(triphenylphosphine) (0.101g), cesium fluoride (0.265g), cuprous iodide (0.00665g) and 1,4-dioxane (4.37 mL) and heated to 140°C under microwave conditions for 1 hour. The reaction mixture was concentrated and purified by chromatography on silica eluting with a gradient from 0 to 70% acetonitrile in dichloromethane to give 4-pyridazin-4-ylpyrimidine as an orange solid.
$^1H$ NMR (400MHz, $CDCl_3$) 9.90-9.83 (m, 1H) 9.41 (dd, 2H) 8.97 (d, 1H) 8.21-8.13 (m, 1H) 7.89 (dd, 1H).

**EXAMPLE 3: Preparation of methyl 2-(4-pyrimidin-2-ylpyridazin-1-ium-1-yl)acetate bromide (compound 2.001)**

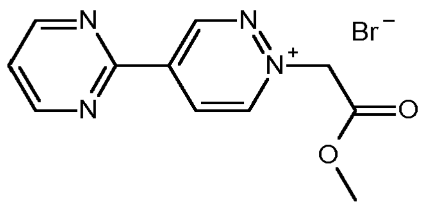

Methyl bromoacetate (0.755g) was added drop wise to a solution of 2-pyridazin-4-ylpyrimidine (0.505g) in acetone (6.4mL) and heated at 60°C for 24 hours. The reaction mixture was concentrated and the residue triturated with dichloromethane. The resulting solid was filtered, washed with acetone and dried to give methyl 2-(4-pyrimidin-2-ylpyridazin-1-ium-1-yl)acetate bromide as a brown solid.
$^1H$ NMR (400MHz, $D_2O$) 10.22 (d, 1H) 9.84 (d, 1H) 9.30 (dd, 1H) 9.01 (d, 2H) 7.66 (t, 1H) 5.84 (s, 2H) 3.79 (s, 3H).

**EXAMPLE 4: Preparation of (4-pyrimidin-2-ylpyridazin-1-ium-1-yl)methanesulfonate (compound 2.002)**

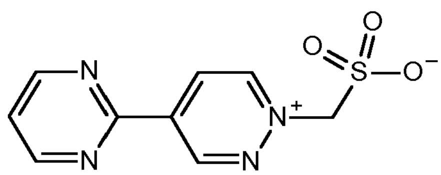

Methyl 2-(4-pyrimidin-2-ylpyridazin-1-ium-1-yl)acetate bromide (0.420g) was stirred in trimethylsilyl chlorosulfonate (4.96g) at 80°C for 66 hours. The reaction mixture was carefully quenched with water, concentrated and purified by preparative reverse phase HPLC to give (4-pyrimidin-2-ylpyridazin-1-ium-1-yl)methanesulfonate as a pale brown solid.
$^1H$ NMR (400MHz, $D_2O$) 10.26 (brs, 1H) 9.94 (brd, 1H) 9.27-9.39 (m, 1H) 8.96-9.14 (m, 2H) 7.56-7.73 (m, 1H) 5.97 (s, 2H).

**EXAMPLE 5: Preparation of 3-(4-pyrimidin-2-ylpyridazin-1-ium-1-yl)propane-1-sulfonate (compound 1.003)**

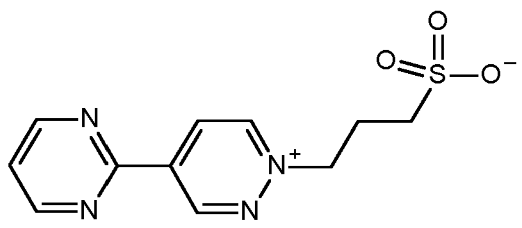

To a solution of 2-pyridazin-4-ylpyrimidine (0.200g) in 1,4-dioxane (3.79mL) was added 1,3-propanesultone (0.189g). The mixture was stirred at 90°C for 44 hours. The resulting solid was filtered off and washed with acetone. The solid was purified by preparative reverse phase HPLC to give 3-(4-pyrimidin-2-ylpyridazin-1-ium-1-yl)propane-1-sulfonate.

$^1$H NMR (400MHz, $D_2O$) 10.18 (d, 1H) 9.80 (d, 1H) 9.19 (dd, 1H) 9.00 (d, 2H) 7.64 (t, 1H) 5.01 (t, 2H) 2.98 (t, 2H) 2.53 (quin, 2H).

**EXAMPLE 6: Preparation of 3-(4-pyrazin-2-ylpyridazin-1-ium-1-yl)propanoic acid 2,2,2-trifluoroacetate (compound 1.005)**

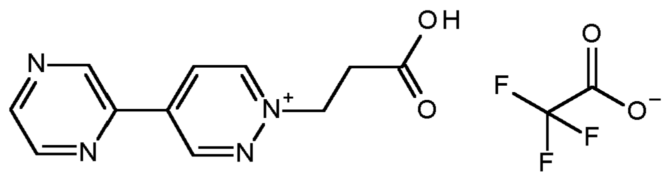

**Step 1: Preparation of 2-pyridazin-4-ylpyrazine**

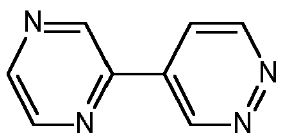

A mixture of tributyl(pyridazin-4-yl)stannane (3.87g), 2-chloropyrazine (1.00g), palladium (0) tetrakis(triphenylphosphine) (1.03g) and 1,4-dioxane (43.7 mL) was heated to 140°C under microwave conditions for 1 hour. The reaction mixture was concentrated and purified on silica using a gradient of 0% to 50% acetonitrile in dichloromethane to give 2-pyridazin-4-ylpyrazine as an off white solid.

$^1$H NMR (400MHz, $CDCl_3$) 9.87 (dd, 1H) 9.39 (dd, 1H) 9.19 (d, 1H) 8.81-8.75 (m, 1H) 8.72 (d, 1H) 8.11 (dd, 1H).

**Step 2: Preparation of methyl 3-(4-pyrazin-2-ylpyridazin-1-ium-1-yl)propanoate bromide**

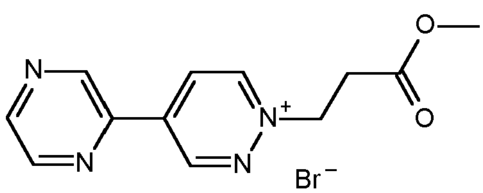

Methyl 3-bromopropanoate (0.518 mL) was added to a solution of 2-pyridazin-4-ylpyrazine (0.250g) in acetonitrile (15.8 mL). The reaction mixture was heated to 80°C for 24 hours. The reaction mixture was concentrated and the residue taken up in water and washed with dichloromethane. The aqueous phase was concentrated to give crude

methyl 3-(4-pyrazin-2-ylpyridazin-1-ium-1-yl)propanoate bromide (as a 1:1 mixture with 3-(5-pyrazin-2-ylpyridazin-1-ium-1-yl)propanoic acid bromide) as a brown gum, which was used crude in subsequent reactions.

**Step 3: Preparation of 3-(4-pyrazin-2-ylpyridazin-1-ium-1-yl)propanoic acid 2,2,2-trifluoroacetate (1.005)**

The crude mixture of methyl 3-(4-pyrazin-2-ylpyridazin-1-ium-1-yl)propanoate bromide (0.515g) and conc. hydrochloric acid (11.1 mL) was heated to 80°C for 4 hours. The reaction mixture was cooled and allowed to stand overnight. The reaction mixture was concentrated and purified by preparative reverse phase HPLC to give 3-(4-pyrazin-2-ylpyridazin-1-ium-1-yl)propanoic acid 2,2,2-trifluoroacetate as a brown gum.

$^1$H NMR (400MHz, $CD_3OD$) 10.28 (d, 1H) 10.00 (d, 1H) 9.62 (d, 1H) 9.28 (dd, 1H) 8.96-8.93 (m, 1H) 8.90 (d, 1H) 5.19-5.12 (t, 2H) 3.28 (t, 2H).

**EXAMPLE 7: Preparation** of **2-(4-pyridazin-4-ylpyridazin-1-ium-1-yl)ethanesulfonate (compound 1.006)**

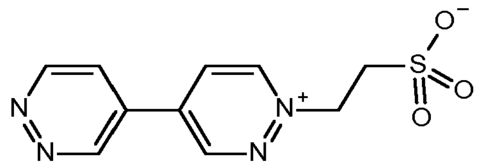

**Step 1: Preparation of 2,2-dimethylpropyl 2-(2-tert-butoxycarbonylhydrazino)ethanesulfonate**

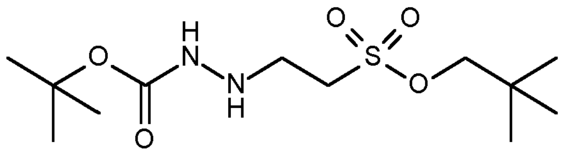

Boc-hydrazide (1,00g) was added to a solution of 2,2-dimethylpropyl ethenesulfonate (1.35g) in methanol (10.1 mL) and heated to 70°C for 24 hours. The reaction was concentrated to give 2,2-dimethylpropyl 2-(2-tert-butoxycarbonylhydrazino)ethanesulfonate as a thick yellow liquid.

$^1$H NMR (400MHz, $CDCl_3$) 3.90 (s, 2H) 3.38-3.30 (m, 4H) 1.50-1.43 (s, 9H) 1.00-0.97 (s, 9H).

**Step 2: Preparation of [2-(2,2-dimethylpropoxysulfonyl)ethylamino]ammonium chloride**

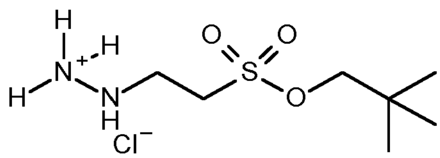

A mixture of 2,2-dimethylpropyl 2-(2-tert-butoxycarbonylhydrazino)ethanesulfonate (1.00g) and 3M methanolic hydrogen chloride (24.2 mL) was heated to 70°C for 7 hours. The reaction mixture was concentrated to give [2-(2,2-dimethylpropoxysulfonyl)ethylamino]ammonium chloride as a pink gum that solidified on standing.

$^1$H NMR (400MHz, $CD_3OD$) 3.95 (s, 2H) 3.59-3.53 (m, 2H) 3.44-3.39 (m, 2H) 1.00 (s, 9H) sample contained ~20% methanol and was used as such.

**Step 3: Preparation of 4-(3-furyl)pyridazine**

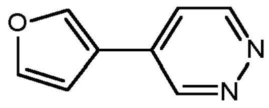

To a mixture of 4-bromopyridazin-1-ium bromide (2.50g), sodium carbonate (2.2g), degassed toluene (17.3 mL) and 1,1'-bis(diphenylphosphino)ferrocenepalladium (II) dichloride (0.634g) was added a solution of 3-furylboronic acid (1.00g) in ethanol (17.3 mL). The mixture was heated to 80°C under nitrogen atmosphere for 24 hours. The reaction mixture was filtered through celite and concentrated. The residue was partitioned between water and dichloromethane then extracted with further dichloromethane. The combined organic layers were washed with brine and dried with magnesium sulfate. The concentrated filtrate was purified on silica eluting with a gradient of 0-100% ethyl acetate in isohexane to give 4-(3-furyl)pyridazine as a dark red semi-solid.

$^1H$ NMR (400 MHz, $CD_3OD$) 9.45 (s, 1H) 9.03-9.16 (m, 1H) 8.36 (s, 1H) 7.86 (dd, 1 H) 7.71 (t, 1H) 7.04 (d, 1H).

**Step 4: Preparation of 4-(2,5-dimethoxy-2,5-dihydrofuran-3-yl)pyridazine**

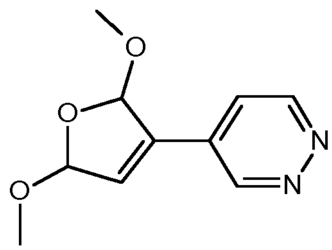

A mixture of 4-(3-furyl)pyridazine (0.025g) and sodium bicarbonate (0.14g) in methanol (0.5 mL) was cooled to -10°C and bromine (0.069g) was added drop wise. After 30 minutes the reaction was quenched with 1:1 sat. aqueous sodium bicarbonate and 1M aqueous sodium thiosulfate (3 mL). The aqueous layer was extracted with ethyl acetate. The organic layer was concentrated to give crude 4-(2,5-dimethoxy-2,5-dihydrofuran-3-yl)pyridazine.

$^1H$ NMR (400 MHz, $CD_3OD$) 9.42-9.41 (m, 1H) 9.20-9.19 (m, 1H) 7.85 (dt, 1H) 7.02-6.94 (m, 1H) 6.08-5.77 (m, 2H) 3.46 (d, 3H) 3.42 (d, 3H).

**Step 5: Preparation of 2-(4-pyridazin-4-ylpyridazin-1-ium-1-yl)ethanesulfonate 1.006**

A mixture of 4-(2,5-dimethoxy-2,5-dihydrofuran-3-yl)pyridazine (0.500g) and [2-(2,2-dimethylpropoxysulfonyl)ethylamino]ammonium chloride (0.658g) was heated in aqueous 3M hydrochloric acid (12mL) at 60°C for 2 hours. The reaction mixture was concentrated and purified by preparative reverse phase HPLC to give 2-(4-pyridazin-4-ylpyridazin-1-ium-1-yl)ethanesulfonate as a brown solid.

$^1H$ NMR (400MHz, $D_2O$) 9.80-9.97 (m, 2H) 9.62-9.75 (m, 1H) 9.35-9.50 (m, 1H) 8.97 (dd, 1H) 8.19-8.42 (m, 1H) 5.20-5.29 (m, 2H) 3.59-3.73 (m, 2H).

**EXAMPLE 8: Preparation of 3-(4-pyrazin-2-ylpyridazin-1-ium-1-yl)propanoic acid chloride (compound 1.012)**

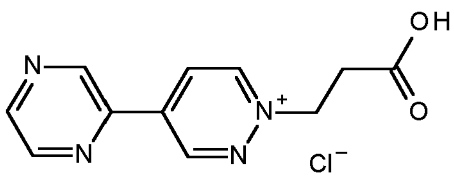

A column packed with ion exchange resin (5.84g, Discovery DSC-SCX) was washed with water (3 column volumes). The 3-(4-pyrazin-2-ylpyridazin-1-ium-1-yl)propanoic acid 2,2,2-trifluoroacetate (0.292g) dissolved in a minimum amount of water was loaded onto the column. The column was first eluted with water (3 column volumes) and then

eluted with 2M hydrochloric acid (3 column volumes). The collected washings were concentrated to give 3-(4-pyrazin-2-ylpyridazin-1-ium-1-yl)propanoic acid chloride as a yellow solid.

$^1H$ NMR (400MHz, $D_2O$) 10.03 (d, 1H) 9.80 (d, 1H) 9.35 (d, 1H) 9.05 (dd, 1H) 8.87-8.82 (m, 1H) 8.76 (d, 1H) 5.08 (t, 2H) 3.22 (t, 2H).

**EXAMPLE 9: Preparation of methyl 3-(4-pyrazin-2-ylpyridazin-1-ium-1-yl)propanoate chloride (compound 1.013)**

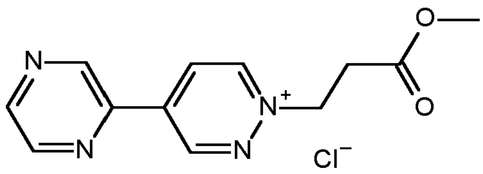

A column packed with ion exchange resin (1.6g, Discovery DSC-SCX) was washed with methanol (3 column volumes). The 3-(4-pyrazin-2-ylpyridazin-1-ium-1-yl)propanoic acid 2,2,2-trifluoroacetate (0.081g) dissolved in a minimum amount of methanol was loaded onto the column. The column was first eluted with methanol (3 column volumes) and then eluted with 3M methanolic hydrochloric acid (3 column volumes). The collected washings were concentrated to give methyl 3-(4-pyrazin-2-ylpyridazin-1-ium-1-yl)propanoate chloride as a blue gum.

$^1H$ NMR (400MHz, $CD_3OD$) 10.30-10.26 (m, 1H) 10.04-10.00 (m, 1H) 9.66-9.64 (m, 1H) 9.33-9.30 (m, 1H) 8.97-8.93 (m, 1H) 8.91-8.88 (m, 1H) 5.25-5.14 (m, 2H) 3.71-3.68 (m, 3H) 3.35-3.27 (m, 2H).

**EXAMPLE 10: Preparation of 3-(4-pyrimidin-2-ylpyridazin-1-ium-1-yl)propanoic acid bromide (compound 1.021)**

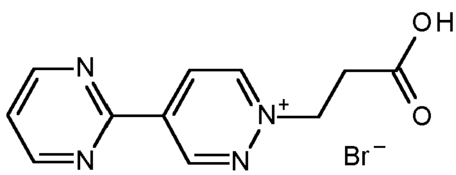

A mixture of methyl 3-(4-pyrimidin-2-ylpyridazin-1-ium-1-yl)propanoate 2,2,2-trifluoroacetate (0.2g), concentrated hydrogen bromide (1 mL, 48 mass%) and water (5 mL) was heated to 80°C for 4 hours and left to cool overnight. After a further 4 hours heating at 80°C the reaction mixture was concentrated and the resulting yellow gum was triturated with acetone to give 3-(4-pyrimidin-2-ylpyridazin-1-ium-1-yl)propanoic acid bromide as a cream solid.

$^1H$ NMR (400MHz, $D_2O$) 10.16 (d, 1H) 9.86 (d, 1H) 9.21-9.15 (m, 1H) 8.99 (d, 2H) 7.64 (t, 1H) 5.11 (t, 2H) 3.24 (t, 2H).

**EXAMPLE 11: Preparation of 1-(4-pyrimidin-2-ylpyridazin-1-ium-1-yl)propane-2-sulfonate (compound 1.026)**

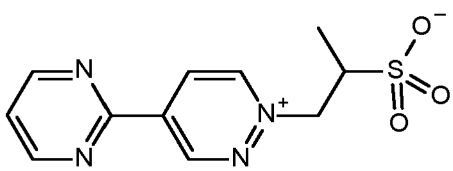

**Step 1: Preparation of methyl 2-(2,2-dimethylpropoxysulfonyl)acetate**

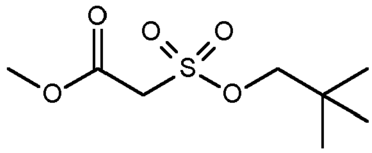

Methyl 2-chlorosulfonylacetate (0.5g) was added drop wise to a cooled (ice bath) solution of 2,2-dimethylpropan-1-ol (0.306g) and pyridine (0.284 mL) in dichloromethane (14.5 mL). The reaction mixture was stirred cold for a further 2 hours then partitioned with aqueous sat. ammonium chloride. The aqueous phase was extracted with further dichloromethane (x2). The combined organic extracts were concentrated and passed through a plug of silica eluting with diethyl ether. The filtrate was concentrated to give methyl 2-(2,2-dimethylpropoxysulfonyl)acetate as a yellow liquid.

$^1H$ NMR (400MHz, $CDCl_3$) 4.11 (s, 2H) 4.00 (s, 2H) 3.84 (s, 3H) 1.01 (s, 9H).

**Step 2: Preparation of methyl 2-(2,2-dimethylpropoxysulfonyl)propanoate**

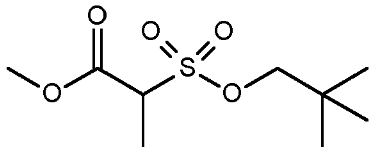

A mixture of sodium hydride (60% in mineral oil, 0.039g) in tetrahydrofuran (4.46 mL) was cooled (ice bath) to 0°C under nitrogen atmosphere. To this was added a solution of methyl 2-(2,2-dimethylpropoxysulfonyl)acetate (0.2g) in tetrahydrofuran (1.78 mL) and stirred at this temperature for 5 minutes. Iodomethane (0.067 mL) was added and the reaction was allowed to warm to room temperature and stirred for 1 hour. The reaction mixture was partitioned between 2M hydrochloric acid and ethyl acetate. The aqueous layer was extracted with further ethyl acetate (x2). The combined organic extracts were dried with magnesium sulfate and concentrated to give methyl 2-(2,2-dimethylpropoxysulfonyl)propanoate as a yellow liquid.

$^1H$ NMR (400MHz, $CDCl_3$) 4.12-4.09 (m, 1H) 3.97 (d, 2H) 3.83 (s, 3H) 1.69 (d, 3H) 0.99 (s, 9H).

**Step 3: Preparation of 2,2-dimethylpropyl 1-hydroxypropane-2-sulfonate**

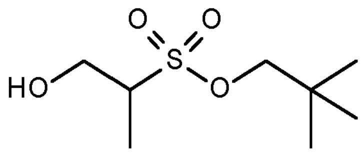

To a cooled (ice bath) solution of methyl 2-(2,2-dimethylpropoxysulfonyl)propanoate (1g) in dichloromethane (126 mL) was added dropwise, under nitrogen atmosphere, diisobutylaluminum hydride (1M in dichloromethane, 10.5 mL) maintaining the temperature below 5°C during the addition. The reaction mixture was stirred at 0°C for 1 hour. Propan-2-ol (12.6 mL) was added and the reaction mixture was stirred at 0°C for 1 hour and then allowed to warm to room temperature. The reaction mixture was partitioned between 2M aqueous hydrochloric acid and dichloromethane. The organic phase was dried with magnesium sulfate, concentrated and chromatographed on silica using a gradient from 0 to 100% EtOAc in isohexane to give 2,2-dimethylpropyl 1-hydroxypropane-2-sulfonate as a colourless liquid.

$^1H$ NMR (400MHz, $CDCl_3$) 4.03-3.84 (m, 4H) 3.43-3.33 (m, 1H) 2.60-2.52 (m, 1H) 1.45 (d, 3H) 1.00 (s, 9H).

**Step 4: Preparation of 1-hydroxypropane-2-sulfonic acid**

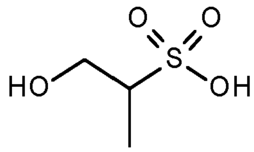

A mixture of 2,2-dimethylpropyl 1-hydroxypropane-2-sulfonate (0.25g) and 6M aqueous hydrochloric acid (9.51 mL) was heated to 95°C for 4 hours. The reaction mixture was cooled and concentrated by freeze drying.

$^1H$ NMR (400MHz, $D_2O$) 3.88-3.78 (m, 1H) 3.56-3.47 (m, 1H) 2.98-2.89 (m, 1H) 1.18 (d, 3H).

**Step 5: Preparation of 1-(4-pyrimidin-2-ylpyridazin-1-ium-1-yl)propane-2-sulfonate 1.026**

To a cooled (ice bath) solution of 2-pyridazin-4-ylpyrimidine (0.1g) in dry acetonitrile (6.32 mL) was added 1,1,1-trifluoro-N-(trifluoromethylsulfonyl)methanesulfonamide (0.131 mL) and the reaction mixture was stirred at room temperature for 15 minutes. To this mixture was added triphenylphosphine (0.332g) and a solution of 1-hydroxypropane-2-sulfonic acid (0.133g) in acetonitrile (0.5mL), followed by drop wise addition of diisopropyl azodicarboxylate (0.25 mL). The reaction mixture was heated at 80°C for 170 hours. The reaction mixture was concentrated and partitioned between water and diethyl ether. The aqueous layer was concentrated and purified by preparative reverse phase HPLC to give1-(4-pyrimidin-2-ylpyridazin-1-ium-1-yl)propane-2-sulfonate as a white solid.

$^1H$ NMR (400MHz, $D_2O$) 10.20-10.18 (m, 1H) 9.81 (dd, 1H) 9.19 (dd, 1H) 9.00 (d, 2H) 7.65 (t, 1H) 5.10-5.07 (m, 2H) 3.84-3.74 (m, 1H) 1.39 (d, 3H).

**EXAMPLE 12: Preparation of 3-(4-pyrimidin-2-ylpyridazin-1-ium-1-yl)butanoic acid 2,2,2-trifluoroacetate (compound 2.003)**

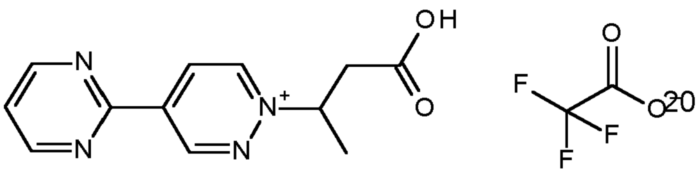

To a mixture of 2-pyridazin-4-ylpyrimidine (0.5g) in water (10 mL) was added but-2-enoic acid (0.816g). The mixture was heated at reflux for 40 hours. The reaction mixture was concentrated and the resulting solid was triturated with tert-butylmethylether and acetone. The solid was purified by preparative reverse phase HPLC to give 3-(4-pyrimidin-2-ylpyridazin-1-ium-1-yl)butanoic acid 2,2,2-trifluoroacetate.

$^1H$ NMR (400MHz, $D_2O$) 10.22 (d, 1H) 9.92 (d, 1H) 9.18-9.26 (m, 1H) 8.99-9.05 (m, 2H) 7.68 (t, 1H) 5.49-5.60 (m, 1H) 3.39 (dd, 1H) 3.10-3.21 (m, 1H) 1.71 (d, 3H).

**EXAMPLE 13: Preparation of 3-bromo-N-methylsulfonyl-propanamide**

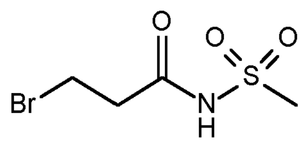

To a solution of methanesulfonamide (0.5g) in toluene (25.8 mL) was added 3-bromopropionyl chloride (1.77g) drop wise at room temperature. The reaction mixture was heated at 110°C for 4 hours. The reaction was cooled in ice and the resulting solid was filtered and washed with cold toluene to give 3-bromo-N-methylsulfonyl-propanamide as a colourless solid.

$^1H$ NMR (400MHz, $CDCl_3$) 8.28 (br s, 1H) 3.62 (t, 2H) 3.34 (s, 3H) 2.94 (t, 2H).

**EXAMPLE 14: Preparation of 2-hydroxy-3-(4-pyrimidin-2-ylpyridazin-1-ium-1-yl)propane-1-sulfonate (compound 2.004)**

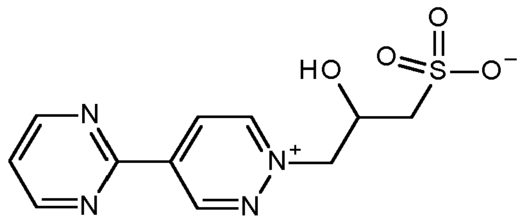

A mixture of 2-pyridazin-4-ylpyrimidine (0.3g), water (6 mL) and sodium 3-chloro-2-hydroxypropane-1-sulfonate (0.45g) was heated at reflux for 3 days. The reaction mixture was concentrated and the resulting solid was washed with t-butylmethyl ether and acetone. The solid was purified by preparative reverse phase HPLC to give 2-hydroxy-3-(4-pyrimidin-2-ylpyridazin-1-ium-1-yl)propane-1-sulfonate, 2.004.

$^1H$ NMR (400MHz, $D_2O$) 10.24 (d, 1H) 9.80 (d, 1H) 9.25 (dd, 1H) 9.04 (d, 2H) 7.68 (t, 1H) 5.21 (dd, 1H) 4.93 (dd, 1H) 4.64-4.71 (m, 1H) 3.19-3.36 (m, 2H).

**EXAMPLE 15: Preparation of 3-(4-pyrimidin-2-ylpyridazin-1-ium-1-yl)propanoic acid 2,2,2-trifluoroacetate (compound 1.023) A125**

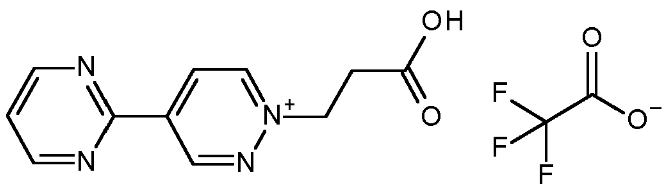

3-(4-pyrimidin-2-ylpyridazin-1-ium-1-yl)propanoic acid chloride (0.119g) was stirred in 2,2,2-trifluoroacetic acid (4 mL) at room temperature for two hours. The reaction mixture was concentrated and freeze dried to give 3-(4-pyrimidin-2-ylpyridazin-1-ium-1-yl)propanoic acid 2,2,2-trifluoroacetate, A125, as a pale yellow gum, which solidified on standing.

$^1H$ NMR (400MHz, $D_2O$) 10.18-10.13 (m, 1H) 9.87-9.82 (m, 1H) 9.20-9.14 (m, 1H) 8.98 (d, 2H) 7.63 (s, 1H) 5.10 (s, 2H) 3.24 (t, 2H).

**EXAMPLE 16: Preparation of 3-methyl-3-(4-pyrimidin-2-ylpyridazin-1-ium-1-yl)butanoic acid 2,2,2-trifluoroacetate (compound 1.025)**

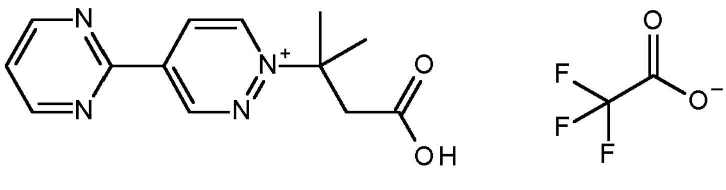

A mixture of 2-pyridazin-4-ylpyrimidine (1g), 3,3-dimethylacrylic acid (1.96g), 2,2,2-trifluoroacetic acid (5 mL) and water (5 mL) was heated at 100°C under microwave conditions for 18 hours. The reaction mixture was concentrated and the resulting solid was washed with diethyl ether (5x10 mL). The solid was purified by preparative reverse phase HPLC to give 3-methyl-3-(4-pyrimidin-2-ylpyridazin-1-ium-1-yl)butanoic acid 2,2,2-trifluoroacetate, 1.025.

$^1H$ NMR (400MHz, $D_2O$) 10.18 (m, 1H) 9.97 (m, 1H) 9.21 (m, 1H) 8.98 (m, 2H) 7.61 (m, 1H) 3.36 (s, 2H) 1.94 (s, 6H).

**EXAMPLE 17: Preparation of 3-(4-pyridazin-3-ylpyridazin-1-ium-1-yl)propanoic acid chloride (compound 1.027)**

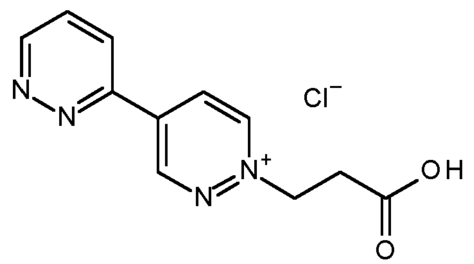

**Step 1: Preparation of 3-pyridazin-4-ylpyridazine**

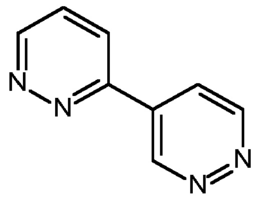

A microwave vial, under nitrogen atmosphere, was charged with tributyl(pyridazin-4-yl)stannane (0.697g), 3-bromopyridazine (0.25g), palladium (0) tetrakis(triphenylphosphine) (0.185g) and 1,4-dioxane (7.86 mL) and heated at 140°C in the microwave for 1 hour. The reaction mixture was concentrated and purified on silica using a gradient of 0% to 50% acetonitrile in dichloromethane to give 3-pyridazin-4-ylpyridazine as an orange solid.

1H NMR (400MHz, $CDCl_3$) 9.94-9.89 (m, 1H) 9.42 (dd, 1H) 9.35 (dd, 1H) 8.24 (dd, 1H) 8.09 (dd, 1H) 7.79-7.72 (m, 1H).

**Step 2: Preparation of 3-(4-pyridazin-3-ylpyridazin-1-ium-1-yl)propanoic acid 2,2,2-trifluoroacetate (compound 2.005)**

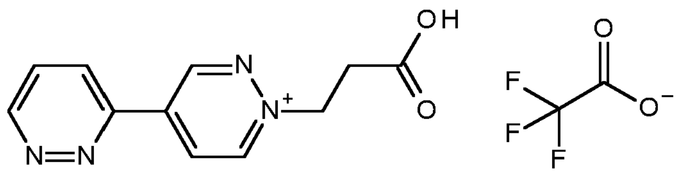

A mixture of 3-pyridazin-4-ylpyridazine (0.25g), water (15 mL) and 3-bromopropanoic acid (0.363g) was heated at 100°C for 25 hours. The mixture was concentrated and purified by preparative reverse phase HPLC (trifluoroacetic acid is present in the eluent) to give 3-(4-pyridazin-3-ylpyridazin-1-ium-1-yl)propanoic acid 2,2,2-trifluoroacetate, 2.005.

1H NMR (400MHz, $D_2O$) 10.11 (d, 1H) 9.88 (d, 1H) 9.32 (dd, 1H) 9.10 (dd, 1H) 8.50 (dd, 1H) 7.99 (dd, 1H) 5.13 (t, 2H) 3.26 (t, 2H) (one CO2H proton missing).

**Step 3: Preparation of 3-(4-pyridazin-1-ium-3-ylpyridazin-1-ium-1-yl)propanoic acid dichloride (compound 1.034)**

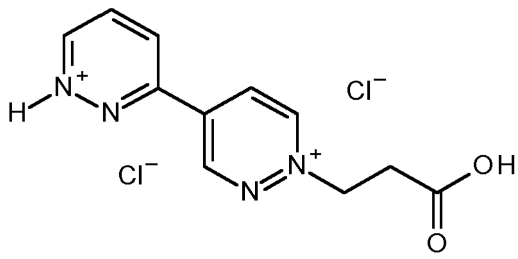

A mixture of 3-(4-pyridazin-3-ylpyridazin-1-ium-1-yl)propanoic acid 2,2,2-trifluoroacetate (6.56g) and 2M aqueous hydrochloric acid (114 mL) was stirred at room temperature for 3 hours. The mixture was concentrated and the residue was taken up in a small amount of water and freeze dried. The resulting glassy yellow solid was stirred in acetone (105 mL) overnight. The solid material was collected by filtration, washed with further acetone and dried under vacuum to give 3-(4-pyridazin-1-ium-3-ylpyridazin-1-ium-1-yl)propanoic acid dichloride, 1.034, as a beige solid.
1H NMR (400MHz, $D_2O$) 10.11 (d, 1H) 9.88 (d, 1H) 9.36 (brd, 1H) 9.10 (dd, 1H) 8.48-8.56 (m, 1H) 7.92-8.07 (m, 1H) 4.98-5.20 (m, 2H) 3.18-3.32 (m, 2H) (one $CO_2H$ proton missing)

**Step 4: Preparation of 3-(4-pyridazin-3-ylpyridazin-1-ium-1-yl)propanoic acid chloride (compound 1.027)**

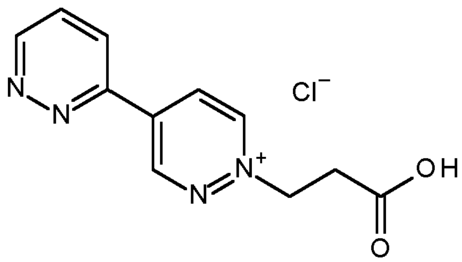

A mixture of 3-(4-pyridazin-1-ium-3-ylpyridazin-1-ium-1-yl)propanoic acid dichloride (0.541g) and 2-propanol (10 mL) was heated at 90°C. Water was added drop wise until a clear solution was obtained, this took ~0.8 mL. To this was added further hot 2-propanol (10 mL) and the solution left to cool. Filtered off the precipitate and washed with cold 2-propanol and acetone and dried under vacuum to give 3-(4-pyridazin-3-ylpyridazin-1-ium-1-yl)propanoic acid chloride, 1.027, as a beige solid.
1H NMR (400 MHz, $D_2O$) 10.11 (d, 1H) 9.87 (d, 1H) 9.32 (dd, 1H) 9.12-9.08 (m, 1H) 8.50 (dd, 1H) 7.99 (dd, 1H) 5.12 (t, 2H) 3.24 (t, 2H) (one CO2H proton missing)

**EXAMPLE 18: Preparation of 2-(4-pyridazin-1-ium-3-ylpyridazin-1-ium-1-yl)ethanesulfonate chloride (compound 1.031)**

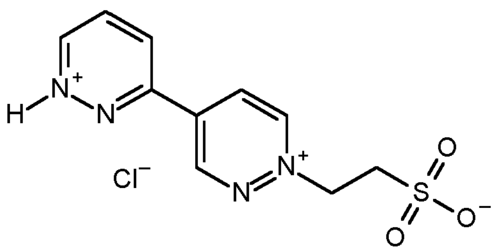

**Step 1: Preparation of 2-(4-pyridazin-3-ylpyridazin-1-ium-1-yl)ethanesulfonate (compound 1.002)**

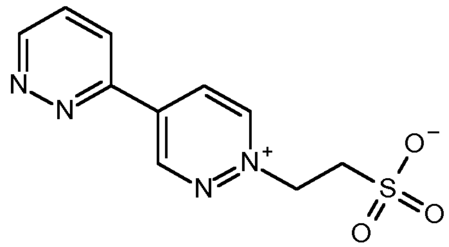

A mixture of 3-pyridazin-4-ylpyridazine (0.41g), sodium 2-bromoethanesulfonic acid (0.656g) and water (7.78 mL) was heated at 100°C for 17 hours. The reaction mixture was cooled, filtered through a syringe filter and purified by preparative reverse phase HPLC (trifluoroacetic acid is present in the eluent) to give 2-(4-pyridazin-3-ylpyridazin-1-ium-1-yl)ethanesulfonate as a yellow solid.
1H NMR (400MHz, $D_2O$) 10.15 (d, 1H) 9.87 (d, 1H) 9.33 (dd, 1H) 9.12 (dd, 1H) 8.52 (dd, 1H) 7.99 (dd, 1H) 5.32-5.19 (m, 2H) 3.73-3.65 (m, 2H)

**Step 2: Preparation of 2-(4-pyridazin-1-ium-3-ylpyridazin-1-ium-1-yl)ethanesulfonate chloride (compound 1.031)**

A solution of 2-(4-pyridazin-3-ylpyridazin-1-ium-1-yl)ethanesulfonate (0.2g) and 2M aqueous hydrochloric acid (5 mL) was stirred at room temperature for 2 hours. The mixture was concentrated and the residue was taken up in a small amount of water and freeze dried to give 2-(4-pyridazin-1-ium-3-ylpyridazin-1-ium-1-yl)ethanesulfonate chloride as a cream glass like solid.
1H NMR (400MHz, $D_2O$) 10.13 (d, 1H) 9.86 (d, 1H) 9.35 (dd, 1H) 9.11 (dd, 1H) 8.57 (dd, 1H) 8.05 (dd, 1H) 5.27-5.21 (m, 2H) 3.71-3.64 (m, 2H) (one NH proton missing)

**EXAMPLE 19: Preparation of 4-pyridazin-4-ylpyrimidin-2-amine**

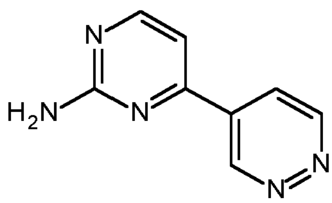

A microwave vial, under nitrogen atmosphere, was charged with tributyl(pyridazin-4-yl)stannane (3.42g), 4-pyridazin-4-ylpyrimidin-2-amine (0.727g), palladium (0) tetrakis(triphenylphosphine) (0.892g), *N,N*-diisopropylethylamine (1.35 mL) and 1,4-dioxane (38.6 mL) and heated to 140°C in the microwave for 1 hour. The reaction mixture was concentrated and purified on silica using a gradient of 0% to 70% acetonitrile in dichloromethane to give 4-pyridazin-4-ylpyrimidin-2-amine as a beige solid.
1H NMR (400MHz, $d_6$-DMSO) 9.82 (dd, 1H) 9.41 (dd, 1H) 8.47 (d, 1H) 8.22 (dd, 1H) 7.38 (d, 1H) 6.98 (br s, 2H)

**EXAMPLE 20: Preparation of 2-methyl-2-(4-pyrimidin-2-ylpyridazin-1-ium-1-yl)propane-1-sulfonate (compound 2.006)**

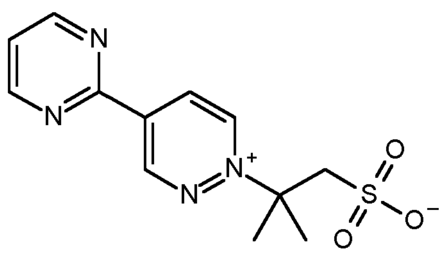

**Step 1: Preparation of 2,2-dimethylpropyl methanesulfonate**

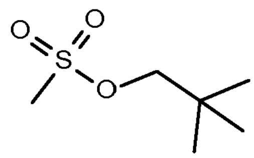

A solution of triethylamine (8.1 mL) and 2,2-dimethylpropan-1-ol (2.3g) in dichloromethane (40 mL) was cooled to 0°C in an ice/acetone bath. To this was added methanesulfonyl chloride (2.2 mL) drop wise. The reaction mixture was stirred cold for 2 hours and washed with aqueous ammonium chloride. The organic layer was concentrated and the residue dissolved in ether. The ether solution was passed through a plug of silica eluting with further ether. Concentration of the ether filtrate gave 2,2-dimethylpropyl methanesulfonate as a light yellow liquid.
1H NMR (400MHz, $CDCl_3$) 3.90-3.85 (m, 2H) 3.01 (s, 3H) 1.00 (s, 9H)

**Step 2: Preparation of 2,2-dimethylpropyl 2-hydroxy-2-methyl-propane-1-sulfonate**

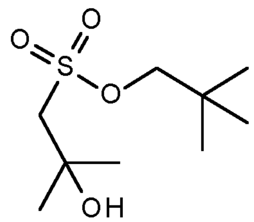

A solution of 2,2-dimethylpropyl methanesulfonate (1.75g) in tetrahydrofuran (22.1 mL) was cooled to -78°C under nitrogen atmosphere. To this was added drop wise n-butyllithium (2.5 mol/L in hexane, 5.1 mL). The reaction mixture was gradually warmed to -30°C over 2 hours and acetone (7.73 mL) was added. The reaction mixture was warmed to room temperature and stirred for a further 1.5 hours. The reaction was quenched with 2M aqueous hydrochloric acid and extracted with ethyl acetate (x3). The combined organic extracts were dried with magnesium sulfate, concentrated and purified on silica using a gradient from 0 to 100% ethyl acetate in iso-hexane to give 2,2-dimethylpropyl 2-hydroxy-2-methyl-propane-1-sulfonate as a colourless liquid.
1H NMR (400MHz, $CDCl_3$) 3.90 (s, 2H) 3.32 (s, 2H) 2.79 (br s, 1H) 1.44 (s, 6H) 0.99 (s, 9H)

**Step 3: Preparation of 2-hydroxy-2-methyl-propane-1-sulfonic acid**

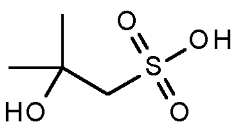

A mixture of 2,2-dimethylpropyl 2-hydroxy-2-methyl-propane-1-sulfonate (1.84g) and 6M aqueous hydrochloric acid (32.8 mL) was heated at 95°C for 4 hours. The reaction mixture was cooled to room temperature and freeze dried overnight to give 2-hydroxy-2-methyl-propane-1-sulfonic acid as an off white solid.
1H NMR (400 MHz, $D_2O$) 2.99 (s, 2H) 1.24 (s, 6H) (one OH proton and one SOsH proton missing)

**Step 4: Preparation of 2-methyl-2-(4-pyrimidin-2-ylpyridazin-1-ium-1-yl)propane-1-sulfonate (2.006)**

A mixture of 2-pyridazin-4-ylpyrimidine (0.507g) in dry acetonitrile (32.1 mL) was cooled in an ice bath. To this was added 1,1,1-trifluoro-N-(trifluoromethylsulfonyl)methanesulfonamide (0.663 mL) and the reaction mixture stirred at room temperature for 15 minutes. To this was added triphenylphosphine (1.68g) and a solution of 2-hydroxy-2-methyl-propane-1-sulfonic acid (0.741g) in dry acetonitrile (0.5 mL) followed by drop wise addition of diisopropyl azodicarboxylate (1.26 mL, 1.30 g). The reaction mixture was then heated at 80°C for 144 hours. The reaction mixture was partitioned between water and dichloromethane and the aqueous layer purified by preparative reverse phase HPLC (trifluoroacetic acid is present in the eluent) to give 2-methyl-2-(4-pyrimidin-2-ylpyridazin-1-ium-1-yl)propane-1-sulfonate as a yellow solid.
1H NMR (400MHz, $CD_3OD$) 10.41-10.35 (m, 1H) 10.05-9.99 (m, 1H) 9.31 (dd, 1H) 9.12 (d, 2H) 7.67 (t, 1H) 3.67 (s, 2H) 2.10 (s, 6H)

**EXAMPLE 21: Preparation of 2-(4-pyrimidin-2-ylpyridazin-1-ium-1-yl)propane-1-sulfonate (compound 2.007)**

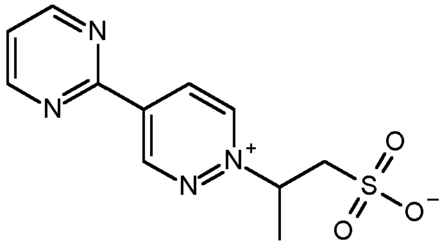

**Step 1: Preparation of 2,2-dimethylpropyl 2-hydroxypropane-1-sulfonate**

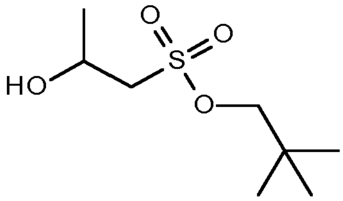

A solution of 2,2-dimethylpropyl methanesulfonate (2g) in tetrahydrofuran (25 mL) was cooled to -78°C under nitrogen atmosphere and n-butyllithium (2.5 mol/L in hexane, 5.8 mL) was added drop wise. The reaction mixture was gradually warmed to -30°C over 1 hour and acetaldehyde (6.8 mL) was added.
The reaction mixture was warmed to room temperature and stirred for a further 2.5 hours. The reaction was quenched with 2M aqueous hydrochloric acid and extracted with ethyl acetate (x3). The combined organic extracts were dried with magnesium sulfate, concentrated and purified on silica using a gradient from 0 to 100% ethyl acetate in iso-hexane to give 2,2-dimethylpropyl 2-hydroxypropane-1-sulfonate as a yellow liquid.
1H NMR (400MHz, $CDCl_3$) 4.47-4.34 (m, 1H) 3.96-3.87 (m, 2H) 3.25-3.17 (m, 2H) 3.01 (br s, 1H) 1.34 (d, 3H) 1.00 (s, 9H)

**Step 2: Preparation of 2-hydroxypropane-1-sulfonic acid**

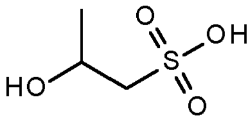

A mixture of 2,2-dimethylpropyl 2-hydroxypropane-1-sulfonate (1.35g) and 6M aqueous hydrochloric acid (32.8 mL) was heated at 95°C for 4 hours. The reaction mixture was cooled to room temperature and freeze dried overnight to give 2-hydroxypropane-1-sulfonic acid as a brown solid.
1H NMR (400 MHz, $D_2O$) 4.17-4.06 (m, 1H) 2.99-2.85 (m, 2H) 1.16 (d, 3H) (one OH proton and one SOsH proton missing)

**Step 3: Preparation of 2-(trifluoromethylsulfonyloxy)propane-1-sulfonic acid**

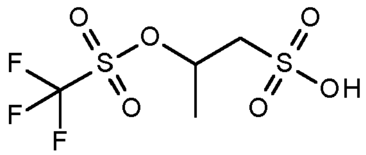

To a mixture of 2-hydroxypropane-1-sulfonic acid (0.2g) in dichloromethane (2.57 mL) was added 2,6-dimethylpyridine (0.33 mL) and the resulting mixture was cooled to 0°C. To this was added drop wise trifluoromethylsulfonyl trifluoromethanesulfonate (0.264 mL) and stirring continued at this temperature for 15 minutes. Cooling was removed and the reaction mixture was stirred at room temperature for a further hour. The reaction mixture was quenched with water and extracted with dichloromethane (x3). The combined organic extracts were dried with magnesium sulfate and concentrated to give 2-(trifluoromethylsulfonyloxy)propane-1-sulfonic acid as a brown gum, ~50% purity. The product was used immediately in subsequent reactions without further purification.
1H NMR (400MHz, $CDCl_3$) product peaks only 5.57-5.41 (m, 1H) 4.18-3.98 (m, 1H) 3.58-3.35 (m, 1H) 1.76-1.65 (m, 3H) (one SOsH proton missing)

**Step 4: Preparation of 2-(4-pyrimidin-2-ylpyridazin-1-ium-1-yl)propane-1-sulfonate 2.007**

A mixture of 2-pyridazin-4-ylpyrimidine (0.15g), 2-(trifluoromethylsulfonyloxy)propane-1-sulfonate (0.55g) and 1,4-dioxane (7.8 mL) was heated at 90°C for 24 hours. The reaction mixture was partitioned between water and dichloromethane and the aqueous layer purified by preparative reverse phase HPLC (trifluoroacetic acid is present in the eluent) to give 2-(4-pyrimidin-2-ylpyridazin-1-ium-1-yl)propane-1-sulfonate as a yellow solid.
1H NMR (400MHz, $CD_3OD$) 10.43-10.37 (m, 1H) 9.93 (dd, 1H) 9.34 (dd, 1H) 9.11 (d, 2H) 7.68 (t, 1H) 5.66-5.53 (m, 1H) 3.66 (dd, 1H) 3.43 (dd, 1H) 1.83 (d, 3H)

**EXAMPLE 22: Preparation of [(1S)-1-carboxy-3-(4-pyrimidin-2-ylpyridazin-1-ium-1-yl)propyl]-ammonium 2,2,2-trifluoroacetate (compound 1.035)**

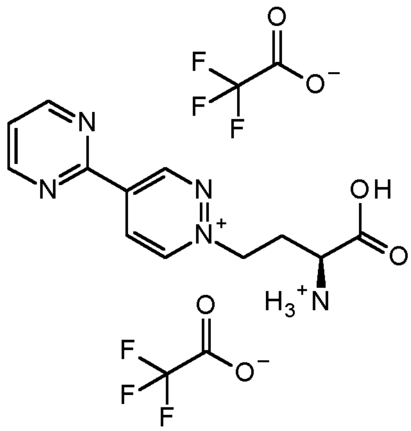

**Step 1: Preparation of [(1S)-3-bromo-1-methoxycarbonyl-propyl]ammonium chloride**

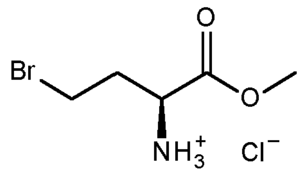

To a mixture of (2S)-2-amino-4-bromo-butanoic acid (0.2g) in dry methanol (4 mL) at 0°C, under nitrogen atmosphere, was added thionyl chloride (0.392g) drop wise. The reaction mixture was stirred overnight at room temperature and concentrated to give crude [(1S)-3-bromo-1-methoxycarbonylpropyl]ammonium chloride as an orange gum, which was used without further purification.

**Step 2: Preparation of methyl (2S)-2-(benzyloxycarbonylamino)-4-bromo-butanoate**

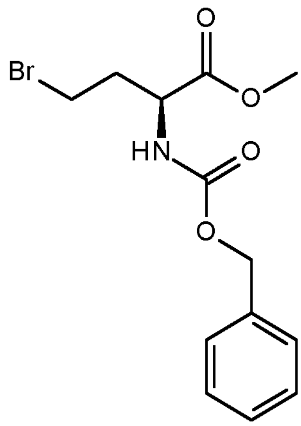

Crude [(1S)-3-bromo-1-methoxycarbonyl-propyl]ammonium chloride was stirred in dichloromethane (4 mL) and a solution of sodium hydrogen carbonate (0.28g) in water (4 mL) was added. The mixture was cooled to 0°C and benzyl carbonochloridate (0.225g) was added. The reaction mass was warmed to room temperature and stirred for 15 hours. The reaction mixture was diluted with water (10 mL) and extracted with dichloromethane (3x20 mL). The combined organic layers were dried over sodium sulfate, concentrated and purified on silica using a gradient from 0 to 100% ethyl acetate in cyclohexane to give methyl (2S)-2-(benzyloxycarbonylamino)-4-bromo-butanoate.
1H NMR (400MHz, $CDCl_3$) 7.30-7.40 (m, 5H) 5.37-5.43 (m, 1H) 5.13 (s, 2H) 3.78 (s, 3H) 3.42-3.46 (m, 2H) 2.25-2.49 (m, 2H)

**Step 3: Preparation of methyl (2S)-2-(benzyloxycarbonylamino)-4-(4-pyrimidin-2-ylpyridazin-1-ium-1-yl)butanoate iodide**

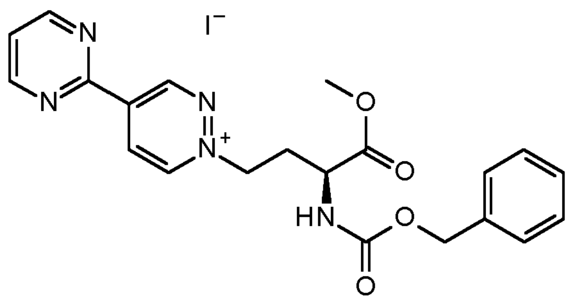

To a solution of methyl (2S)-2-(benzyloxycarbonylamino)-4-bromo-butanoate (0.1g) in dry acetone (2 mL), under nitrogen atmosphere, was added sodium iodide (0.054g). The reaction mixture was stirred at room temperature

overnight. To this was added 2-pyridazin-4-ylpyrimidine (0.048g) and the mixture heated at reflux for 16 hours. The reaction mixture was concentrated and the crude methyl (2S)-2-(benzyloxycarbonylamino)-4-(4-pyrimidin-2-ylpyridazin-1-ium-1-yl)butanoate iodide was used in the next step without further purification.

**Step 4: Preparation of [(1S)-1-carboxy-3-(4-pyrimidin-2-ylpyridazin-1-ium-1-yl)propyl]ammonium 2,2,2-trifluoroacetate 1.035**

A mixture of methyl (2S)-2-(benzyloxycarbonylamino)-4-(4-pyrimidin-2-ylpyridazin-1-ium-1-yl)butanoate iodide (0.5g) and concentrated hydrochloric acid (4.9 mL) was heated at 80°C for 30 minutes. The reaction mixture was concentrated, dissolved in water and extracted with ethyl acetate (3x20 mL). The aqueous layer was purified by preparative reverse phase HPLC (trifluoroacetic acid is present in the eluent) to give [(1S)-1-carboxy-3-(4-pyrimidin-2-ylpyridazin-1-ium-1-yl)propyl]ammonium 2,2,2-trifluoroacetate.

1H NMR (400 MHz, $D_2O$) 10.26 (d, 1H) 9.90 (d, 1H) 9.27 (dd, 1H) 9.06 (d, 2H) 7.72 (t, 1H) 5.17 (t, 2H) 4.09 (dd, 1H) 2.76-2.79 (m, 2H) (Three NH protons and one CO2H proton missing)

**EXAMPLE 23: Preparation of [(1R)-1-carboxy-3-(4-pyrimidin-2-ylpyridazin-1-ium-1-yl)propyl]-ammonium 2,2,2-trifluoroacetate (compound 1.029)**

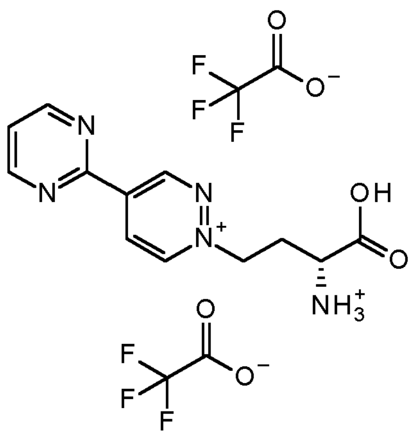

**Step 1: Preparation of [(1R)-3-bromo-1-methoxycarbonyl-propyl]ammonium chloride**

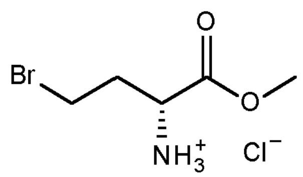

To a mixture of [(1R)-3-bromo-1-carboxy-propyl]ammonium bromide (0.1g) in dry methanol (2 mL) at 0°C, under nitrogen atmosphere, was added thionyl chloride (0.083 mL) drop wise. The reaction mixture was stirred overnight at room temperature and concentrated to give crude [(1S)-3-bromo-1-methoxycarbonyl-propyl]ammonium chloride as a yellow solid, which was used without further purification.

**Step 2: Preparation of [(1R)-1-methoxycarbonyl-3-(4-pyrimidin-2-ylpyridazin-1-ium-1-yl)propyl]ammonium bromide chloride**

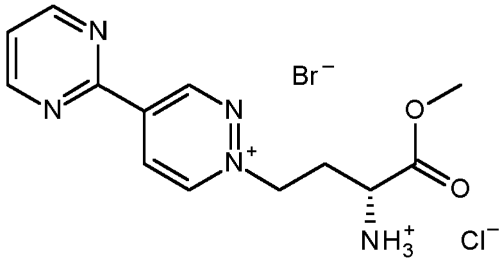

To a mixture of 2-pyridazin-4-ylpyrimidine (0.1g) in acetonitrile (3.16 mL) was added [(1R)-3-bromo-1-methoxycarbonyl-propyl]ammonium chloride (0.16g) The mixture was heated at reflux for 12 hours. The reaction mixture was concentrated to give crude [(1R)-1-methoxycarbonyl-3-(4-pyrimidin-2-ylpyridazin-1-ium-1-yl)propyl]ammonium bromide as a dark brown gum, which was used without further purification.

**Step 3: Preparation of [(1R)-1-carboxy-3-(4-pyrimidin-2-ylpyridazin-1-ium-1-yl)propyl]ammonium 2,2,2-trifluoroacetate, 1.029**

A mixture of [(1R)-1-methoxycarbonyl-3-(4-pyrimidin-2-ylpyridazin-1-ium-1-yl)propyl]ammonium bromide (0.5g) and 2M aqueous hydrochloric acid (7.29 mL) was heated at 80°C for 2 hours. The reaction mixture was concentrated and purified by preparative reverse phase HPLC (trifluoroacetic acid is present in the eluent) to give [(1R)-1-carboxy-3-(4-pyrimidin-2-ylpyridazin-1-ium-1-yl)propyl]ammonium 2,2,2-trifluoroacetate.
1H NMR (400 MHz, $D_2O$) 10.22 (s, 1H) 9.87 (d, 1H) 9.24 (d, 1H) 8.99-9.04 (m, 2H) 7.66 (t, 1H) 5.16 (t, 2H) 4.17 (dd, 1H) 2.69-2.85 (m, 2H) (Three NH protons and one CO2H proton missing)

**EXAMPLE 24: Preparation of [(1S)-1-carboxy-2-(4-pyrimidin-2-ylpyridazin-1-ium-1-yl)ethyl]-ammonium 2,2,2-trifluoroacetate (compound 2.009)**

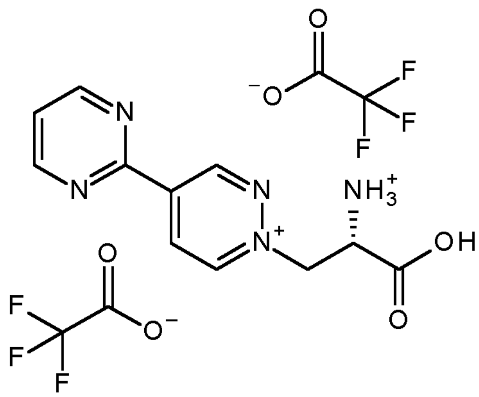

**Step 1: Preparation of (2S)-2-(tert-butoxycarbonylamino)-3-(4-pyrimidin-2-ylpyridazin-1-ium-1-yl)propanoate**

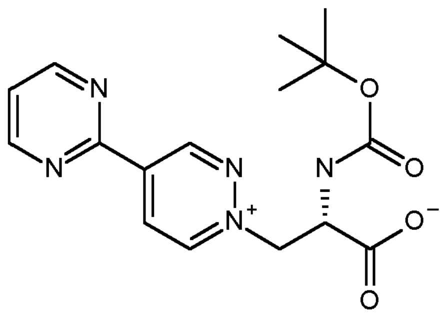

To a mixture of 2-pyridazin-4-ylpyrimidine (0.05g) in dry acetonitrile (1 mL) was added *tert*-butyl N-[(3S)-2-oxooxetan-3-yl]carbamate (0.071g) and the reaction mixture was stirred at room temperature for 48 hours. Concentration of the reaction mixture gave crude (2S)-2-(tert-butoxycarbonylamino)-3-(4-pyrimidin-2-ylpyridazin-1-ium-1-yl)propanoate, which was used without further purification.

**Step 2: Preparation of [(1S)-1-carboxy-2-(4-pyrimidin-2-ylpyridazin-1-ium-1-yl)ethyl]ammonium 2,2,2-trifluoroacetate, 2.009**

A mixture of (2S)-2-(tert-butoxycarbonylamino)-3-(4-pyrimidin-2-ylpyridazin-1-ium-1-yl)propanoate (0.4g) and 2M aqueous hydrochloric acid (10 mL) was stirred at room temperature for 18 hours. The reaction mixture was concentrated and purified by preparative reverse phase HPLC (trifluoroacetic acid is present in the eluent) to give [(1S)-1-carboxy-2-(4-pyrimidin-2-ylpyridazin-1-ium-1-yl)ethyl]ammonium 2,2,2-trifluoroacetate.
1H NMR (400 MHz, $D_2O$) 10.26 (s, 1H) 9.94 (d, 1H) 9.31-9.34 (m, 1H) 9.04 (dd, 2H) 7.69 (t, 1H) 5.48 (d, 2H) 4.75 (t, 1H) (Three NH protons and one CO2H proton missing)

**EXAMPLE 25: Preparation of dimethylsulfamoyl-[2-(4-pyrimidin-2-ylpyridazin-1-ium-1-yl)-acetyl]azanide (compound 1.032)**

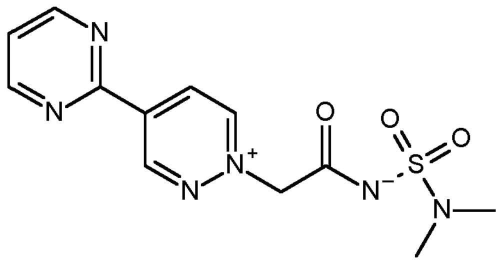

**Step 1: Preparation of 2-bromo-N-(dimethylsulfamoyl)acetamide**

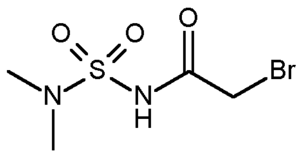

To a solution of dimethylsulfamide (0.5g) and 4-(dimethylamino)pyridine (0.541g) in dichloromethane (19.9 mL) at 0°C was added bromoacetyl bromide (0.903g) drop wise. The reaction was slowly warmed to room temperature and stirred for 24 hours. The reaction was partitioned with 0.5M aqueous hydrochloric acid. The organic layer was dried over magnesium sulfate and concentrated to give crude 2-bromo-N-(dimethylsulfamoyl)acetamide as a pale yellow oil. The product was used without further purification.

**Step 2: Preparation of dimethylsulfamoyl-[2-(4-pyrimidin-2-ylpyridazin-1-ium-1-yl)acetyl]azanide 1.032**

To a solution of 2-pyridazin-4-ylpyrimidine (0.15g) in acetonitrile (10 mL) was added 2-bromo-*N*-(dimethylsulfamoyl)acetamide (0.21g) and the mixture heated at 80°C for 16 hours. The resulting precipitate was filtered, washed with acetonitrile (2x20 mL) to give dimethylsulfamoyl-[2-(4-pyrimidin-2-ylpyridazin-1-ium-1-yl)acetyl]azanide as a light green solid.
1H NMR (400 MHz, $d_6$-DMSO) 10.36 (s, 1H) 10.06-10.10 (m, 1H) 9.56-9.62 (m, 1H) 9.18-9.22 (m, 2H) 7.82-7.86 (m, 1H) 5.88-5.94 (m, 2H) 2.80-2.86 (m, 6H)

**EXAMPLE 26: Preparation of 3-bromo-*N*-cyano-propanamide**

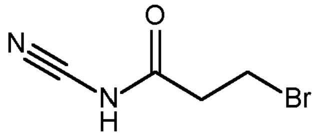

To a stirred solution of cyanamide (0.5g) in water (10 mL) and tetrahydrofuran (10 mL) at 0°C was added sodium hydroxide (1.427g). After 10 minutes at 0°C a solution of 3-bromopropanoyl chloride (1.27 mL) in tetrahydrofuran (5 mL) was added drop wise. The resulting reaction mixture was stirred at room temperature for 3 hours. Water was added and the mixture was extracted with dichloromethane (2x75 mL). The combined organic layers were dried over sodium sulfate and concentrated to give 3-bromo-*N*-cyano-propanamide as a light yellow liquid.
1H NMR (400 MHz, $d_6$-DMSO) 12.40 (br s, 1H) 3.54-3.70 (m, 2H) 2.80-2.94 (m, 2H)

**EXAMPLE 27: Preparation of [(1S)-1-carboxy-4-(4-pyrimidin-2-ylpyridazin-1-ium-1-yl)butyl]-ammonium dichloride (compound 1.030)**

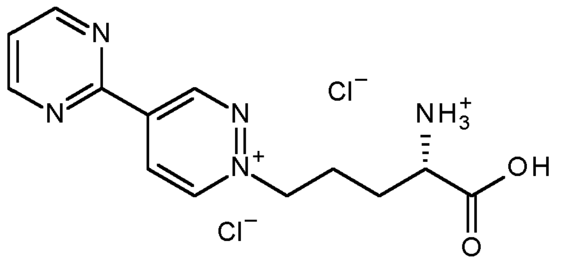

**Step 1: Preparation of dimethyl (2S)-2-[bis(tert-butoxycarbonyl)amino]pentanedioate**

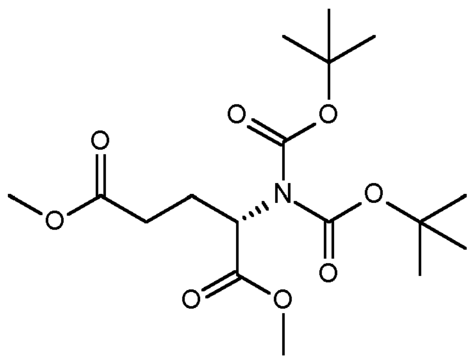

To a solution of dimethyl (2S)-2-(tert-butoxycarbonylamino)pentanedioate (0.3g) in acetonitrile (6 mL), under nitrogen atmosphere, was added 4-dimethylaminopyridine (0.028g). The mixture was cooled to 0°C and di-*tert*-butyl dicarbonate (0.264g) was added. The reaction was allowed to warm to room temperature and stirred for 18 hours. The reaction mixture was partitioned between water and ethyl acetate (80 mL) and extracted with further ethyl acetate (80 mL). The combined organic layers were washed with 10% aqueous citric acid, followed by saturated sodium bicarbonate solution and brine. The combined organic layers were dried over sodium sulfate, concentrated and purified on silica using ethyl acetate in cyclohexane to give dimethyl (2S)-2-[bis(tert-butoxycarbonyl)amino]pentanedioate as a colourless gum.
1H NMR (400MHz, $CDCl_3$) 4.95 (dd, 1H) 3.73 (s, 3H) 3.68 (s, 3H) 2.36-2.54 (m, 3H) 2.15-2.23 (m, 1H) 1.50 (s, 18H)

**Step 2: Preparation of methyl (2S)-2-[bis(tert-butoxycarbonyl)amino]-5-oxo-pentanoate**

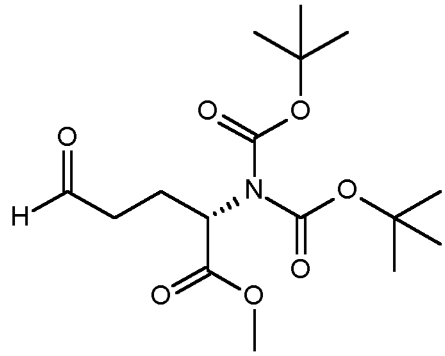

Cooled a solution of dimethyl (2S)-2-[bis(tert-butoxycarbonyl)amino]pentanedioate (0.28g) in diethyl ether (5.6 mL), under nitrogen atmosphere, to -78°C and added slowly diisobutylaluminum hydride (1M in Toluene, 0.82 mL). The reaction was stirred at -78°C for 10 minutes, then quenched with water (0.094 mL) and stirred for a further 30 minutes. After warming to room temperature solid sodium sulfate was added. The mixture was filtered through Celite, washed with tert-butylmethylether and the filtrate concentrated to give methyl (2S)-2-[bis(tert-butoxycarbonyl)amino]-5-oxo-pentanoate.
1H NMR (400MHz, $CDCl_3$) 9.78 (s, 1H) 4.90 (dd, 1H) 3.73 (m, 3H) 2.45-2.66 (m, 3H) 2.11-2.28 (m, 1H) 1.42-1.63 (m, 18H)

**Step 3: Preparation of methyl (2S)-2-[bis(tert-butoxycarbonyl)amino]-5-hydroxy-pentanoate**

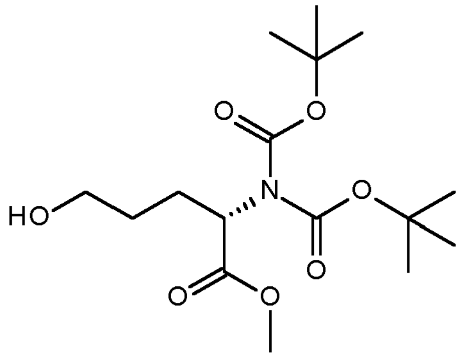

Cooled a solution of methyl (2S)-2-[bis(tert-butoxycarbonyl)amino]-5-oxo-pentanoate (0.2g) in dry methanol (4 mL), under nitrogen atmosphere, to 0°C and added sodium borohydride (0.025g) portion wise and stirred for 2 hours. The reaction mixture was concentrated and purified on silica using ethyl acetate in cyclohexane to give methyl (2S)-2-[bis(tert-butoxycarbonyl)amino]-5-hydroxy-pentanoate as a colourless gum.
$^1H$ NMR (400MHz, $CDCl_3$) 4.90 (dd, 1H) 3.74-3.67 (m, 5H) 2.30-2.20 (m, 1H) 1.99-1.89 (m, 1H) 1.68-1.41 (s, 20H) (one OH proton missing)

**Step 4: Preparation of methyl (2S)-2-[bis(tert-butoxycarbonyl)amino]-5-bromo-pentanoate**

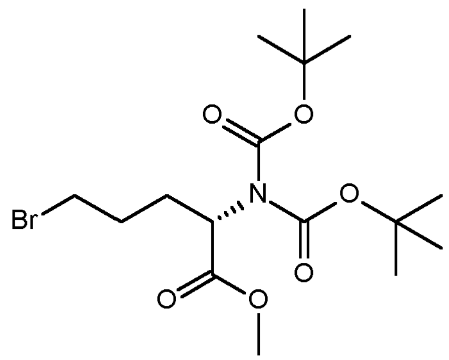

Cooled a solution of methyl (2S)-2-[bis(tert-butoxycarbonyl)amino]-5-hydroxy-pentanoate (4g) in dry tetrahydrofuran (40 mL) to 0°C and added carbon tetrabromide (5.728g). To this was added drop wise a solution of triphenylphosphine (4.576g) in tetrahydrofuran (40 mL). The reaction was allowed to warm to room temperature and stirred for 24 hours. The reaction mixture was concentrated and purified on silica using ethyl acetate in cyclohexane to give methyl (2S)-2-[bis(tert-butoxycarbonyl)amino]-5-bromo-pentanoate.
1H NMR (400MHz, $CDCl_3$) 4.88 (dd, 1H) 3.73 (s, 3H) 3.38-3.50 (m, 2H) 2.24-2.27 (m, 1H) 1.85-2.12 (m, 3H) 1.51 (s, 18H)

**Step 5: Preparation of [(1S)-1-methoxycarbonyl-4-(4-pyrimidin-2-ylpyridazin-1-ium-1-yl)butyl]ammonium 2,2,2-trifluoroacetate**

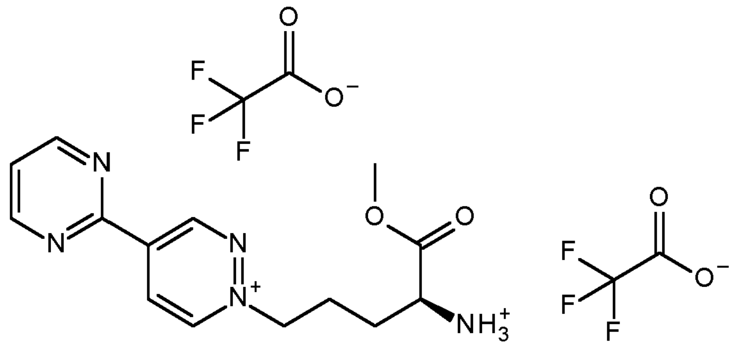

To a mixture of 2-pyridazin-4-ylpyrimidine (0.4g) in acetonitrile (12.6 mL) was added methyl (2S)-2-[bis(tert-butoxycarbonyl)amino]-5-bromo-pentanoate (1.141g) and the reaction mixture was heated at reflux for 12 hours. The reaction mixture was concentrated and purified by preparative reverse phase HPLC (trifluoroacetic acid is present in the eluent which led to the loss of the BOC-protecting groups) to give [(1S)-1-methoxycarbonyl-4-(4-pyrimidin-2-ylpyridazin-1-ium-1-yl)butyl]ammonium 2,2,2-trifluoroacetate.
1H NMR (400 MHz, $D_2O$) 10.22 (d, 1H) 9.80-9.86 (m, 1H) 9.20-9.27 (m, 1H) 8.99-9.06 (m, 2H) 7.66-7.73 (m, 1H) 4.90-5.01 (m, 2H) 4.20 (t, 1H) 3.76-3.84 (m, 3H) 2.20-2.40 (m, 2H) 1.97-2.18 (m, 2H) (NH protons are missing)

**Step 6: Preparation of [(1S)-1-carboxy-4-(4-pyrimidin-2-ylpyridazin-1-ium-1-yl)butyl]ammonium dichloride, 1.030**

A mixture of [(1S)-1-methoxycarbonyl-4-(4-pyrimidin-2-ylpyridazin-1-ium-1-yl)butyl]ammonium;2,2,2-trifluoroacetate (0.1g) and 4M aqueous hydrochloric acid (0.78 mL) was heated at 60°C for 14 hours. The reaction mixture was concentrated to give [(1S)-1-carboxy-4-(4-pyrimidin-2-ylpyridazin-1-ium-1-yl)butyl]ammonium dichloride.
1H NMR (400 MHz, $D_2O$) 10.24 (dd, 1H) 9.87 (dd, 1H) 9.27 (dd, 1H) 9.06 (d, 2H) 7.72 (t, 1H) 4.99 (t, 2H) 4.08 (t, 1H) 2.23-2.44 (m, 2H) 2.00-2.16 (m, 2H) (three NH protons and one CO2H proton missing)

**EXAMPLE 28: Preparation of 3-(4-pyrimidin-2-ylpyridazin-1-ium-1-yl)propanoic acid chloride (compound 1.010)**

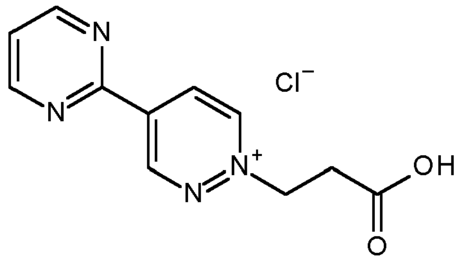

**Step 1: Preparation of methyl 3-(4-pyrimidin-2-ylpyridazin-1-ium-1-yl)propanoate 2,2,2-trifluoroacetate (compound 2.011)**

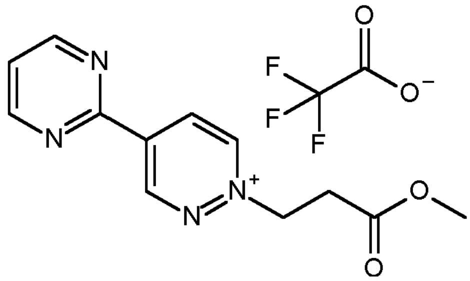

A mixture of methyl 3-bromopropanoate (1.58g), 2-pyridazin-4-ylpyrimidine (0.5g) in acetonitrile (31.6 mL) was heated at 80°C for 24 hours. The reaction mixture was cooled, concentrated and partitioned between water (10 mL) and dichloromethane (20 mL). The aqueous layer was purified by preparative reverse phase HPLC (trifluoroacetic acid is present in the eluent) to give methyl 3-(4-pyrimidin-2-ylpyridazin-1-ium-1-yl)propanoate 2,2,2-trifluoroacetate as an orange gum.

$^1$H NMR (400MHz, $D_2O$) 10.15 (d, 1H) 9.85 (d, 1H) 9.18 (dd, 1H) 8.98 (d, 2H) 7.63 (t, 1H) 5.12 (t, 2H) 3.59 (s, 3H) 3.25 (t, 2H)
$^1$H NMR (400MHz, $CD_3OD$) 10.43-10.32 (m, 1H) 10.04 (d, 1H) 9.43 (dd, 1H) 9.12 (d, 2H) 7.65 (t, 1H) 5.18 (t, 2H) 3.70 (s, 3H) 3.36-3.27 (m, 2H)

**Step 2: 3-(4-pyrimidin-2-ylpyridazin-1-ium-1-yl)propanoic acid chloride, 1.010**

A mixture of methyl 3-(4-pyrimidin-2-ylpyridazin-1-ium-1-yl)propanoate;2,2,2-trifluoroacetate (0.392g) and conc. hydrochloric acid (7.66 mL) was heated at 80°C for 3 hours. The reaction mixture was cooled, concentrated and triturated with acetone to give 3-(4-pyrimidin-2-ylpyridazin-1-ium-1-yl)propanoic acid chloride as a beige solid.
$^1$H NMR (400MHz, $D_2O$) 10.16 (d, 1H) 9.85 (d, 1H) 9.18 (dd, 1H) 8.99 (d, 2H) 7.64 (t, 1H) 5.11 (t, 2H) 3.24 (t, 2H) (one $CO_2H$ proton missing)

Additional compounds in Table A (below) were prepared by analogues procedures, from appropriate starting materials. The skilled person would understand that the compounds of Formula (I) may exist as an agronomically acceptable salt, a zwitterion or an agronomically acceptable salt of a zwitterion as described hereinbefore. Where mentioned the specific counterion is not considered to be limiting, and the compound of Formula (I) may be formed with any suitable counter ion.

NMR spectra contained herein were recorded on either a 400MHz Bruker AVANCE III HD equipped with a Bruker SMART probe unless otherwise stated. Chemical shifts are expressed as ppm downfield from TMS, with an internal reference of either TMS or the residual solvent signals. The following multiplicities are used to describe the peaks: s = singlet, d = doublet, t = triplet, dd = double doublet, dt = double triplet, q = quartet, quin = quintet, m = multiplet. Additionally br. is used to describe a broad signal and app. is used to describe and apparent multiplicity.

Compounds 1.001, 1.002, 1.003, 1.004, 1.005, 1.006, 1.007, 1.008, 1.009, 1.010, 1.011, 1.012, 1.013, 1.014, 1.015, 1.016, 1.017, 1.018, 1.019, 1.020, 1.021, 1.022, 1.023, 1.024, 1.025, 1.026, 1.027, 1.028, 1.029, 1.030, 1.031, 1.032, 1.033, 1.034 and 1.035 were prepared using the general methods as described above, or in an analagous manner. Table A below shows the structure of these compounds and NMR characterising data.

**Table A Preparation Examples of compounds of Formula (I)**

| Compound No. | Structure | $^1$H NMR |
|---|---|---|
| 1.001 | 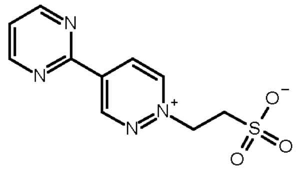 | (400MHz, $D_2O$) 10.19 (d, 1H) 9.84 (d, 1H) 9.20 (dd, 1H) 8.99 (d, 2H) 7.64 (t, 1H) 5.27-5.18 (m, 2H) 3.71-3.63 (m, 2H) |
| 1.002 | 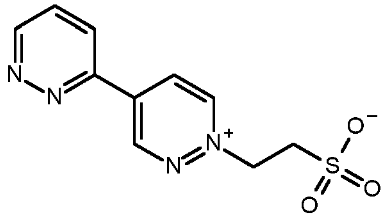 | (400MHz, $D_2O$) 10.15 (d, 1H) 9.87 (d, 1H) 9.33 (dd, 1H) 9.12 (dd, 1H) 8.52 (dd, 1H) 7.99 (dd, 1H) 5.32-5.19 (m, 2H) 3.73-3.65 (m, 2H) |
| 1.003 | 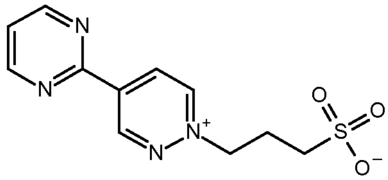 | (400MHz, $D_2O$) 10.18 (d, 1H) 9.80 (d, 1H) 9.19 (dd, 1H) 9.00 (d, 2H) 7.64 (t, 1H) 5.01 (t, 2H) 2.98 (t, 2H) 2.53 (quin, 2H) |
| 1.004 | 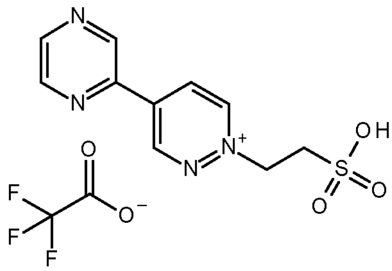 | (400MHz, $D_2O$) 10.08 (d, 1H) 9.79 (d, 1H) 9.39 (d, 1H) 9.08 (dd, 1H) 8.89-8.83 (m, 1H) 8.78 (d, 1H) 5.24-5.16 (t, 2H) 3.65 (t, 2H) |
| 1.005 | 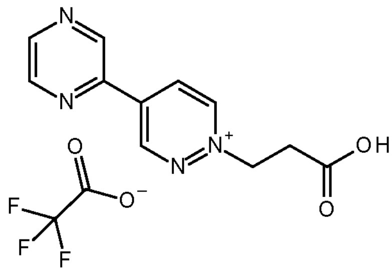 | (400MHz, $CD_3OD$) 10.28 (d, 1H) 10.00 (d, 1H) 9.62 (d, 1H) 9.28 (dd, 1H) 8.96-8.93 (m, 1H) 8.90 (d, 1H) 5.19-5.12 (t, 2H) 3.28 (t, 2H) (one $CO_2H$ proton missing) |
| 1.006 | 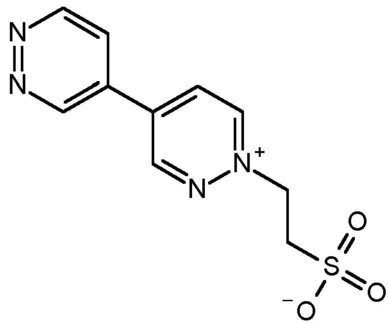 | (400MHz, $D_2O$) 9.80-9.97 (m, 2H) 9.62-9.75 (m, 1H) 9.35-9.50 (m, 1H) 8.97 (dd, 1H) 8.19-8.42 (m, 1H) 5.20-5.29 (m, 2H) 3.59-3.73 (m, 2H) |

(continued)

| Compound No. | Structure | $^1H$ NMR |
|---|---|---|
| 1.007 | 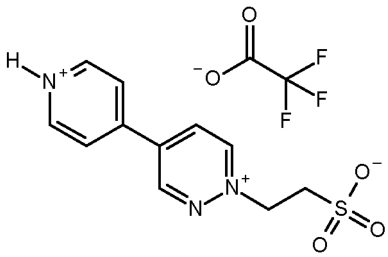 | (400MHz, $D_2O$) 9.86-9.95 (m, 2H) 8.90-9.00 (m, 3H) 8.35 (brd, 2H) 5.27 (t, 2H) 3.69 (t, 2H) (one NH proton missing) |
| 1.008 | 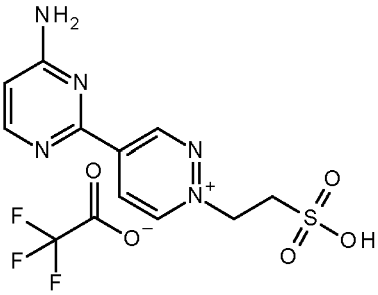 | (400 MHz, $D_2O$) 10.11 (d, 1H) 9.96 (d, 1H) 9.13 (dd, 1H) 8.29 (d, 1H) 6.83 (d, 1H) 5.31(m, 2H) 3.73(m, 2H) (Two $NH_2$ protons and one SOsH proton missing) |
| 1.009 | 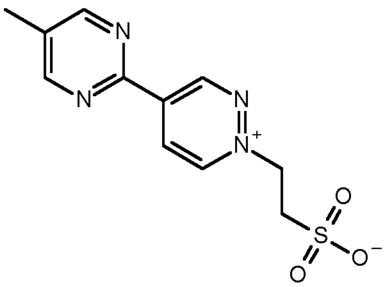 | (400 MHz, $D_2O$) 10.22 (d, 1H) 9.86 (d, 1H) 9.21 (dd, 1H) 8.90 (s, 2H) 5.25-5.31 (m, 2H) 3.69-3.77 (m, 2H) 2.44 (s, 3H) |
| 1.010 | 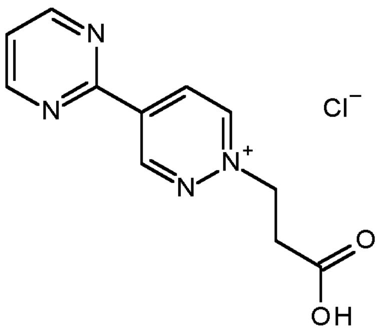 | (400 MHz, $D_2O$) 10.16 (d, 1H) 9.85 (d, 1H) 9.18 (dd, 1H) 8.99 (d, 2H) 7.64 (t, 1H) 5.11 (t, 2H) 3.24 (t, 2H) (one $CO_2H$ proton missing) |
| 1.011 | 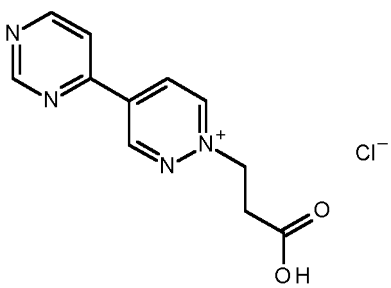 | (400MHz, $CD_3OD$) 10.32 (d, 1H) 10.13 (d, 1H) 9.56 (s, 1H) 9.42-9.35 (m, 1H) 9.23 (d, 1H) 8.61 (d, 1H) 5.21 (t, 2H) 3.32-3.27 (m, 2H) (one $CO_2H$ proton missing) |

(continued)

| Compound No. | Structure | $^1$H NMR |
|---|---|---|
| 1.012 | 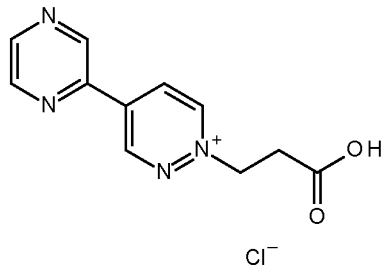 | (400MHz, $D_2O$) 10.03 (d, 1H) 9.80 (d, 1H) 9.35 (d, 1H) 9.05 (dd, 1H) 8.87-8.82 (m, 1H) 8.76 (d, 1H) 5.08 (t, 2H) 3.22 (t, 2H) (one $CO_2H$ proton missing) |
| 1.013 | 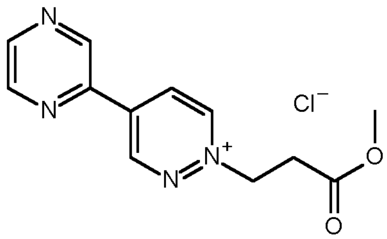 | (400MHz, $CD_3OD$) 10.30-10.26 (m, 1H) 10.04-10.00 (m, 1H) 9.66-9.64 (m, 1H) 9.33-9.30 (m, 1H) 8.97-8.93 (m, 1H) 8.91-8.88 (m, 1H) 5.25-5.14 (m, 2H) 3.71-3.68 (m, 3H) 3.35-3.27 (m, 2H) |
| 1.014 | 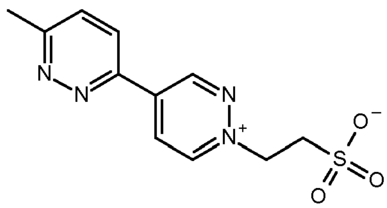 | (400MHz, $D_2O$) 10.12 (d, 1H) 9.83 (d, 1H) 9.08 (dd, 1H) 8.42 (d, 1H) 7.89 (d, 1H) 5.28-5.19 (m, 2H) 3.71-3.64 (m, 2H) 2.74 (s, 3H) |
| 1.015 | 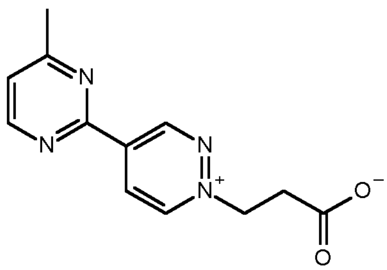 | (400MHz, $D_2O$) 10.20 (d, 1H) 9.91 (d, 1H) 9.22 (dd, 1H) 8.86 (d, 1H) 7.58 (d, 1H) 5.18 (t, 2H) 3.31 (t, 2H) 2.66 (s, 3H) |
| 1.016 | 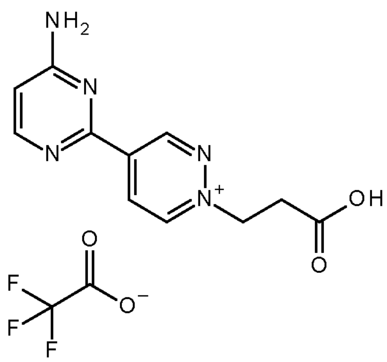 | (400 MHz, $D_2O$) 10.06 (s, 1H) 10.00 (d, 1H) 9.13 (dd, 1H) 8.28 (d, 1H) 6.85 (d, 1H) 5.20 (t, 2H) 3.31 (t, 2H) (Two $NH_2$ protons and one $CO_2H$ proton missing) |

(continued)

| Compound No. | Structure | $^1$H NMR |
|---|---|---|
| 1.017 | 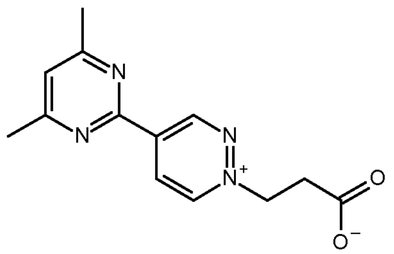 | (400 MHz, $D_2O$) 10.09 (d, 1H) 9.81 (d, 1H) 9.10 (m, 1H) 7.37 (s, 1H) 5.08 (t, 2H) 3.21 (t, 2H) 2.51 (s, 6H) |
| 1.018 | 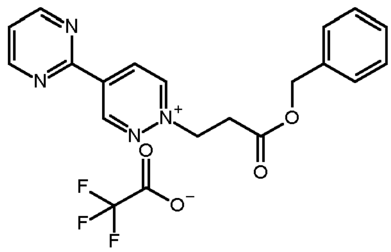 | (400MHz, $CD_3OD$) 10.21-10.34 (m, 1H) 9.97 (d, 1H) 9.25-9.35 (m, 1H) 9.10-9.15 (m, 2H) 7.60-7.76 (m, 1H) 7.16-7.34 (m, 5H) 5.16-5.24 (m, 2H) 5.05-5.15 (m, 2H) 3.31-3.39 (m, 2H) |
| 1.019 | 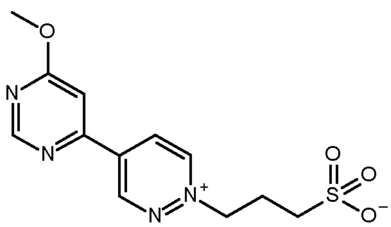 | (400MHz, $CD_3OD$) 10.24-10.20 (m, 1H) 9.93 (d, 1H) 9.24 (dd, 1H) 9.02 (d, 1H) 7.89 (d, 1H) 5.11 (t, 2H) 4.11 (s, 3H) 2.93 (t, 2H) 2.61 (quin, 2H) |
| 1.020 | 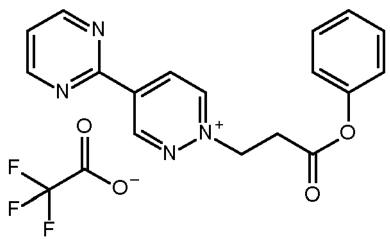 | (400MHz, $CD_3OD$) 10.35-10.47 (m, 1H) 10.05 (d, 1H) 9.37-9.44 (m, 1H) 9.08-9.15 (m, 2H) 7.65-7.78 (m, 1H) 7.32-7.43 (m, 2H) 7.18-7.27 (m, 1H) 7.03-7.15 (m, 2H) 5.30 (t, 2H) 3.58 (t, 2H) |
| 1.021 | 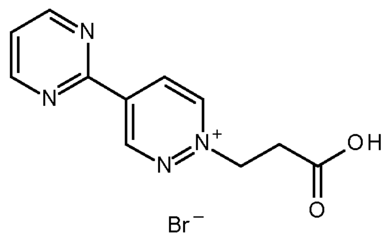 | (400MHz, $D_2O$) 10.16 (d, 1H) 9.86 (d, 1H) 9.21-9.15 (m, 1H) 8.99 (d, 2H) 7.64 (t, 1H) 5.11 (t, 2H) 3.24 (t, 2H) (one $CO_2H$ proton missing) |
| 1.022 | 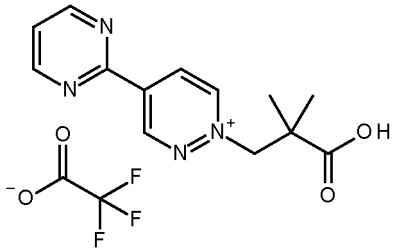 | (400MHz, $D_2O$) 10.16 (d, 1H) 9.79 (d, 1H) 9.20 (dd, 1H) 9.00 (d, 2H) 7.64 (t, 1H) 5.04 (s, 2H) 1.25 (s, 6H) (one $CO_2H$ proton missing) |

(continued)

| Compound No. | Structure | $^1$H NMR |
|---|---|---|
| 1.023 | 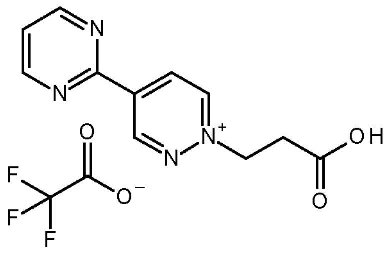 | (400MHz, $D_2O$) 10.18-10.13 (m, 1H) 9.87-9.82 (m, 1H) 9.20-9.14 (m, 1H) 8.98 (d, 2H) 7.63 (s, 1H) 5.10 (s, 2H) 3.24 (t, 2H) (one $CO_2H$ proton missing) |
| 1.024 | 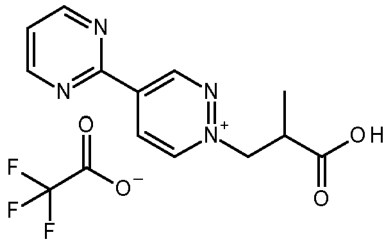 | (400MHz, $D_2O$) 10.16-10.25 (m, 1H) 9.81-9.89 (m, 1H) 9.19-9.27 (m, 1H) 8.97-9.09 (m, 2H) 7.63-7.74 (m, 1H) 5.08-5.20 (m, 1H) 4.92-5.01 (m, 1H) 3.35-3.47 (m, 1H) 1.31 (d, 3H) (one $CO_2H$ proton missing) |
| 1.025 | 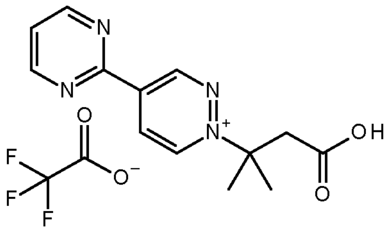 | (400 MHz, $D_2O$) 10.18 (m, 1H) 9.97 (m, 1H) 9.21 (m, 1H) 8.98 (m, 2H) 7.61 (m, 1H) 3.36 (s, 2H) 1.94 (s, 6H) (one $CO_2H$ proton missing) |
| 1.026 | 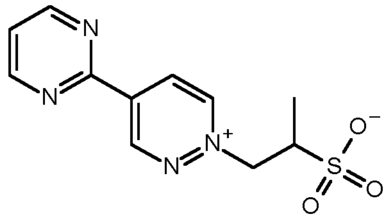 | (400MHz, $D_2O$) 10.20-10.18 (m, 1H) 9.81 (dd, 1H) 9.19 (dd, 1H) 9.00 (d, 2H), 7.65 (t, 1H) 5.10-5.07 (m, 2H) 3.84-3.74 (m, 1H) 1.39 (d, 3H) |
| 1.027 | 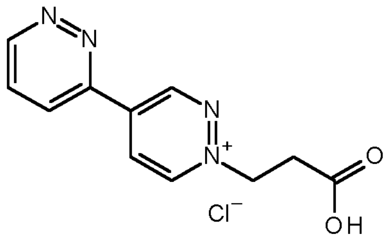 | (400 MHz, $D_2O$) 10.11 (d, 1H) 9.87 (d, 1H) 9.32 (dd, 1H) 9.12-9.08 (m, 1H) 8.50 (dd, 1H) 7.99 (dd, 1H) 5.12 (t, 2H) 3.24 (t, 2H) (one CO2H proton missing) |
| 1.028 | 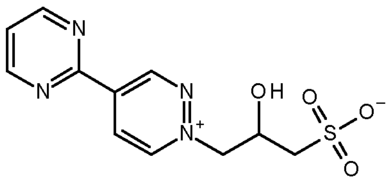 | (400 MHz, $D_2O$) 10.24 (d, 1H) 9.80 (d, 1H) 9.25 (dd, 1H) 9.04 (d, 2H) 7.68 (t, 1H) 5.21 (dd, 1H) 4.93 (dd, 1H) 4.64-4.71 (m, 1H) 3.19-3.36 (m, 2H) (one OH proton missing) |

(continued)

| Compound No. | Structure | $^1$H NMR |
|---|---|---|
| 1.029 | 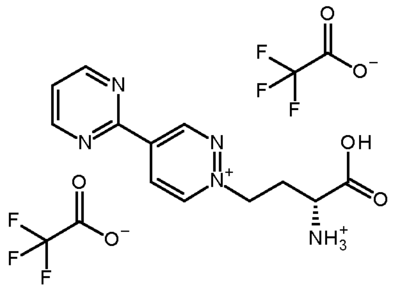 | (400 MHz, $D_2O$) 10.22 (s, 1H) 9.87 (d, 1H) 9.24 (d, 1H) 8.99-9.04 (m, 2H) 7.66 (t, 1H) 5.16 (t, 2H) 4.17 (dd, 1H) 2.69-2.85 (m, 2H) (Three NH protons and one $CO_2H$ proton missing) |
| 1.030 | 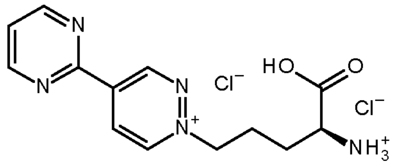 | (400MHz, $D_2O$) 10.24 (dd, 1H) 9.87 (dd, 1H) 9.27 (dd, 1H) 9.06 (d, 2H) 7.72 (t, 1H) 4.99 (t, 2H) 4.08 (t, 1H) 2.23-2.44 (m, 2H) 2.00-2.16 (m, 2H) (three NH protons and one CO2H proton missing) |
| 1.031 | 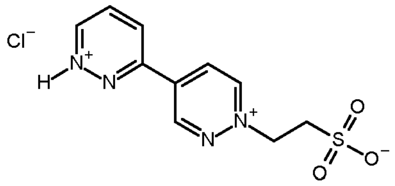 | (400 MHz, $D_2O$) 10.13 (d, 1H) 9.86 (d, 1H) 9.35 (dd, 1H) 9.11 (dd, 1H) 8.57 (dd, 1H) 8.05 (dd, 1H) 5.27-5.21 (m, 2H) 3.71-3.64 (m, 2H) (one NH proton missing) |
| 1.032 | 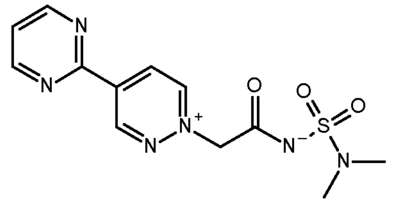 | (400 MHz, $d_6$-DMSO) 10.36 (s, 1H) 10.06-10.10 (m, 1H) 9.56-9.62 (m, 1H) 9.18-9.22 (m, 2H) 7.82-7.86 (m, 1H) 5.88-5.94 (m, 2H) 2.80-2.86 (m, 6H) |
| 1.033 | 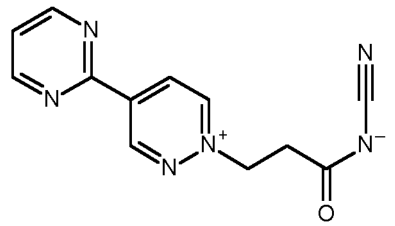 | (400 MHz, $D_2O$) 10.16 (s, 1H) 9.86 (d, 1H) 9.16-9.20 (m, 1H) 8.96-9.02 (m, 2H) 7.60-7.66 (m, 1H) 5.08-5.14 (m, 2H) 3.20-3.28 (m, 2H) |
| 1.034 | 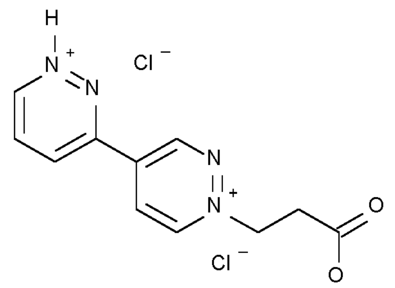 | (400MHz, $D_2O$) 10.11 (d, 1H) 9.88 (d, 1H) 9.36 (br d, 1H) 9.10 (dd, 1H) 8.48-8.56 (m, 1H) 7.92-8.07 (m, 1H) 4.98-5.20 (m, 2H) 3.18-3.32 (m, 2H) (one $CO_2H$ proton missing) |

(continued)

| Compound No. | Structure | $^1$H NMR |
|---|---|---|
| 1.035 | 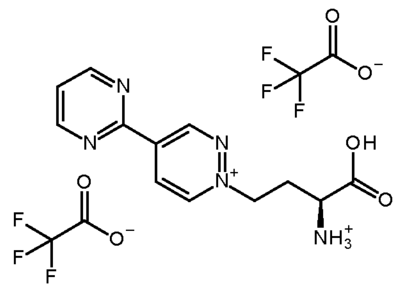 | (400 MHz, D2O) 10.26 (d, 1H) 9.90 (d, 1H) 9.27 (dd, 1H) 9.06 (d, 2H) 7.72 (t, 1H) 5.17 (t, 2H) 4.09 (dd, 1H) 2.76-2.79 (m, 2H) (Three NH protons and one CO2H proton missing) |

## BIOLOGICAL EFFICACY FOR COMPOUNDS OF FORMULA (I)

### B1 Post-emergence efficacy

Seeds of a variety of test species were sown in standard laom-based soil in pots:- *Ipomoea hederacea* (IPOHE), *Euphorbia heterophylla* (EPHHL), *Chenopodium album* (CHEAL), *Amaranthus palmeri* (AMAPA), *Lolium perenne* (LOLPE), *Digitaria sanguinalis* (DIGSA), *Eleusine indica* (ELEIN), *Echinochloa crus-galli* (ECHCG), *Setaria faberi* (SETFA). After cultivation for 14 days (post-emergence) under controlled conditions in a glasshouse (at 24/16 °C, day/night; 14 hours light; 65 % humidity), the plants were sprayed with an aqueous spray solution derived from the dissolution of the technical active ingredient Formula (I) in a small amount of acetone and a special solvent and emulsifier mixture referred to as IF50 (11.12% Emulsogen EL360 TM + 44.44% N-methylpyrrolidone + 44.44% Dowanol DPM glycol ether), to create a 50g/l solution which was then diluted to required concentration using 0.25% or 1% Empicol ESC70 (Sodium lauryl ether sulphate) + 1% ammonium sulphate as diluent. The delivery of the aqueous spray solution was via a laboratory track sprayer which delivered the aqueous spray composition at a rate of 200 litres per hectare, using a flat fan nozzle (Teejet 11002VS) and an application volume of 200litre/ha (at 2 bar).

The test plants were then grown in a glasshouse under controlled conditions (at 24/16 °C, day/night; 14 hours light; 65 % humidity) and watered twice daily. After 13 days the test was evaluated (100 = total damage to plant; 0 = no damage to plant).

The results are shown in Table B (below). A value of n/a indicates that this combination of weed and test compound was not tested/assessed.

**Table B Control of weed species by compounds of Formula (I) after post-emergence application**

| Compound Number | Application Rate g/Ha | AMAPA | CHEAL | EPHHL | IPOHE | SETFA | ECHCG | ELEIN | DIGSA | LOLPE |
|---|---|---|---|---|---|---|---|---|---|---|
| 1.001 | 500 | 100 | 100 | 100 | 100 | 100 | 70 | 100 | 100 | 70 |
| 1.002 | 500 | 100 | 100 | 100 | 40 | 90 | 100 | 100 | 100 | 100 |
| 1.003 | 500 | 100 | 100 | 100 | 60 | 100 | 80 | 100 | 100 | 60 |
| 1.004 | 500 | 100 | 100 | 100 | 60 | 90 | 80 | 100 | 100 | 60 |
| 1.005 | 500 | 100 | 100 | 70 | 30 | 60 | 100 | 100 | 100 | 80 |
| 1.006 | 500 | 100 | 100 | 100 | 100 | 30 | 60 | 100 | 80 | 80 |
| 1.007 | 500 | 100 | 100 | 40 | 30 | 70 | 80 | 100 | 100 | 90 |
| 1.008 | 500 | n/a | 100 | 80 | 40 | 100 | 100 | 100 | 100 | 60 |
| 1.009 | 500 | n/a | 100 | 70 | 30 | 100 | 100 | 100 | 100 | 80 |
| 1.010 | 500 | n/a | 100 | 100 | 40 | 100 | 100 | 100 | 100 | 90 |
| 1.011 | 500 | 100 | 100 | 100 | 100 | 100 | 90 | 100 | 90 | 70 |
| 1.012 | 500 | 100 | 100 | 100 | 20 | 90 | 90 | 90 | 100 | 50 |
| 1.013 | 500 | 100 | 90 | 100 | 80 | 100 | 80 | 100 | 100 | 70 |
| 1.014 | 500 | 100 | 100 | 100 | n/a | 100 | 80 | 90 | 100 | 90 |
| 1.015 | 500 | n/a | 100 | 80 | 30 | 100 | 100 | 100 | 100 | 80 |
| 1.016 | 500 | n/a | 90 | 90 | 30 | 100 | 100 | 100 | 100 | 70 |
| 1.017 | 500 | n/a | 100 | 80 | 50 | 100 | 70 | 100 | 100 | 60 |
| 1.018 | 500 | 90 | 90 | 100 | 30 | 100 | 80 | 100 | 100 | 40 |
| 1.019 | 500 | n/a | 100 | 100 | 60 | 100 | 70 | 90 | 100 | 30 |
| 1.020 | 500 | 100 | 80 | 80 | 30 | 100 | 90 | 100 | 100 | 80 |
| 1.021 | 500 | 100 | 100 | 100 | 100 | 100 | 100 | 100 | 100 | 70 |
| 1.022 | 500 | 100 | 80 | 100 | 100 | 100 | 90 | 100 | 100 | 60 |

| Compound Number | Application Rate g/Ha | AMAPA | CHEAL | EPHHL | IPOHE | SETFA | ECHCG | ELEIN | DIGSA | LOLPE |
|---|---|---|---|---|---|---|---|---|---|---|
| 1.023 | 500 | 100 | 80 | 100 | 30 | 100 | 100 | 100 | 100 | 90 |
| 1.024 | 500 | 100 | 90 | 100 | 40 | 100 | 100 | 100 | 90 | 80 |
| 1.025 | 500 | 100 | 70 | 40 | 50 | 100 | 100 | 100 | 90 | 30 |
| 1.026 | 500 | 100 | 80 | 90 | 70 | 100 | 80 | 100 | 100 | 80 |
| 1.027 | 500 | 100 | 100 | 100 | 30 | 100 | 100 | 80 | 100 | 100 |
| 1.028 | 500 | 100 | 90 | 80 | 30 | 100 | 100 | 100 | 90 | 70 |
| 1.029 | 500 | 100 | 100 | 90 | 90 | 100 | 60 | 100 | 90 | 20 |
| 1.030 | 500 | 100 | 100 | 100 | 60 | 100 | 100 | 90 | 100 | 60 |
| 1.031 | 500 | 100 | 90 | 100 | 70 | 100 | 100 | 100 | 100 | 90 |
| 1.032 | 500 | 100 | 100 | 100 | 40 | 90 | 100 | 100 | 100 | 80 |
| 1.033 | 500 | 100 | 100 | 100 | 50 | 90 | 90 | 100 | 100 | 90 |
| 1.034 | 500 | 100 | 100 | 100 | 60 | 100 | 100 | 100 | 100 | 90 |
| 1.035 | 500 | 100 | 100 | 90 | 90 | 100 | 60 | 100 | 90 | 20 |

**BIOLOGICAL EFFICACY FOR COMBINATIONS OF THE INVENTION**

Using the methodology described above under B1, the efficacy of various combinations of the invention are tested against plants selected from the following species: *Ipomoea hederacea* (IPOHE), *Euphorbia heterophylla* (EPHHL), *Chenopodium album* (CHEAL), *Amaranthus palmeri* (AMAPA), *Lolium perenne* (LOLPE), *Digitaria sanguinalis* (DIGSA), *Eleusine indica* (ELEIN), *Echinochloa crus-galli* (ECHCG), *Setaria faberi* (SETFA), *Triticum aestivum* (TRZAW), *Portulaca oleracea* (POROL), *Digitaria horizontalis (DIGHO), Lolium multiflorum* (LOLMU), *Conyza canadensis* (ERICA),

*Conyza bonariensis* (ERIBO), *Alopecurus myosuroides* (ALOMY). After 21 days the tests are evaluated (100= total damage to plant; 0 = no damage to plant).

## Claims

**1.** A composition comprising as component (A) a compound of Formula (I), or an agrochemically acceptable salt or a zwitterionic species thereof,

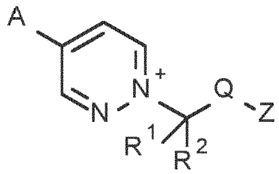

(I),

wherein:

A is 6-membered heteroaryl selected from the group consisting of:

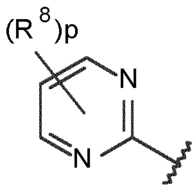

A-I

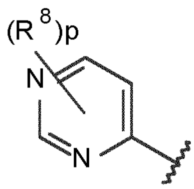

A-II

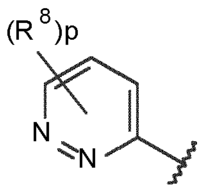

A-III

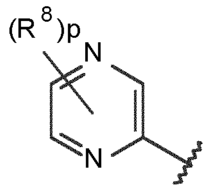

A-IV

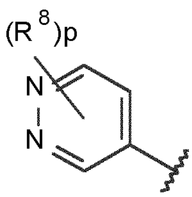

A-V

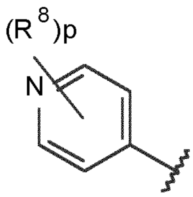

A-VI

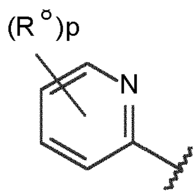

A-VII

wherein the jagged line defines the point of attachment to the remaining part of a compound of Formula (I),
p is 0, 1 or 2, and
each $R^8$ is independently selected from the group consisting of $NH_2$, methyl, and methoxy;
$R^1$ and $R^2$ are each independently hydrogen or methyl;
Q is $(CR^{1a}R^{2b})m$;
m is 0, 1, or 2;
each $R^{1a}$ and $R^{2b}$ are independently selected from the group consisting of hydrogen, hydroxy, - methyl, and $NH_2$;
Z is $-S(O)_2OR^{10}$, $-C(O)OR^{10}$, $-C(O)NHS(O)_2R^{12}$ and -C(O)NHCN;
$R^{10}$ is hydrogen, methyl, benzyl or phenyl;
and $R^{12}$ is methyl, $-NH_2$, $-N(CH_3)_2$, or $-NHCH_3$;
and,
as component (B):

(B) one or more compounds of formula (II)

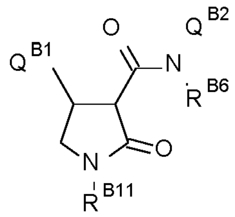

(II)

wherein,
$R^{B11}$ is H, $C_1$-$C_6$alkyl, $C_1$-$C_6$ haloalkyl or $C_4$-$C_8$ cycloalkyl;
$R^{B6}$ is H, $C_1$-$C_6$alkyl, or $C_1$-$C_6$alkoxy;
$Q^{B1}$ is an optionally substituted ring system, selected from the group consisting of phenyl, thienyl, pyridinyl, benzodioxolyl, naphthyl, naphthalenyl, benzofuranyl, furanyl, benzothiophenyl, and pyrazolyl, wherein when substituted said ring system is substituted by 1 to 3 $R^{B4}$;
$Q^{B2}$ is an optionally substituted ring system, selected from the group consisting of phenyl, pyridinyl, benzodioxolyl, pyridinone, thiadazolyl, thiazolyl, and oxazolyl, wherein when substituted said ring system is substituted by 1 to 3 $R^{B5}$;
each $R^{B4}$ is independently halogen, $C_1$-$C_6$alkyl, $C_1$-$C_6$haloalkyl, $C_1$-$C_6$alkoxy, $C_1$-$C_6$haloalkoxy, $C_3$-$C_8$cycloalkyl, cyano, $C_1$-$C_6$alkylthio, $C_1$-$C_6$alkylsulphinyl, $C_1$-$C_6$alkylsulphonyl, $SF_5$, $NHR^{B8}$, phenyl optionally substituted by 1-3 $R^{B7}$, or pyrazolyl optionally substituted by 1-3 $R^{B7}$;
each $R^{B5}$ is independently halogen, $C_1$-$C_6$alkyl, $C_1$-$C_6$haloalkyl, $C_1$-$C_6$alkoxy, $C_1$-$C_6$haloalkoxy, cyano, nitro, $C_1$-$C_6$alkylthio, $C_1$-$C_6$alkylsulphinyl, or $C_1$-$C_6$alkylsulphonyl;
each $R^{B7}$ is independently $C_1$-$C_6$alkyl, halogen, or $C_1$-$C_6$haloalkyl; and
$R^{B8}$ is $C_1$-$C_4$alkoxycarbonyl; or an N-oxide, or a salt form thereof.

**2.** The composition of claim 1, wherein Z is selected from the group consisting of:
-C(O)OH, $-C(O)OCH_3$, -S(O)zOH, $-C(O)OCH_2C_6H_5$, $-C(O)OC_6H_5$, and $-C(O)NHS(O)_2N(CH_3)_2$.

**3.** The composition of claim 1 or claim 2, wherein A is selected from A-I, A-II, and A-III as defined in claim 1.

**4.** The composition of claim 1, wherein component (A) is selected from the group of 35 compounds shown in the table below:

| Compound No. | Structure |
|---|---|
| 1.001 | 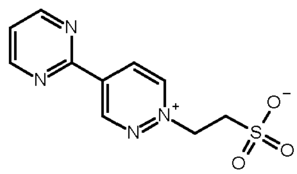 |
| 1.002 | 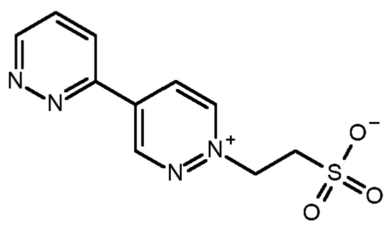 |
| 1.003 | 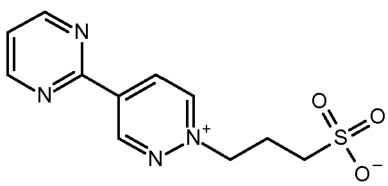 |

(continued)

| Compound No. | Structure |
|---|---|
| 1.004 | 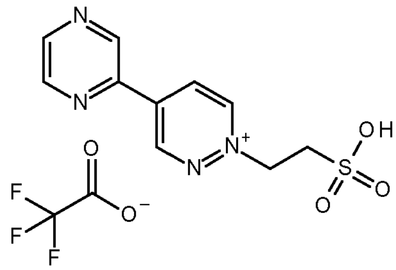 |
| 1.005 | 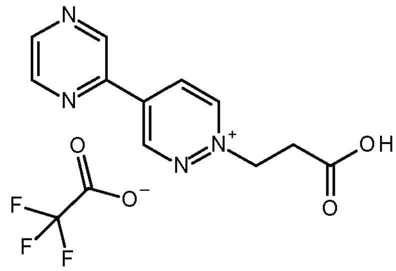 |
| 1.006 | 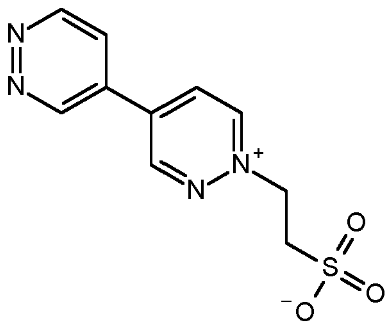 |
| 1.007 | 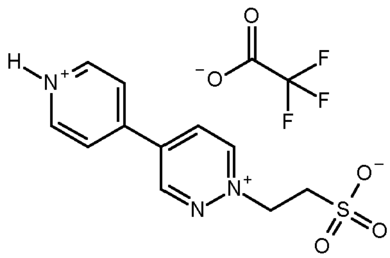 |
| 1.008 | 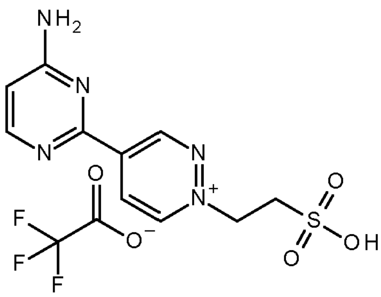 |

(continued)

| Compound No. | Structure |
|---|---|
| 1.009 | 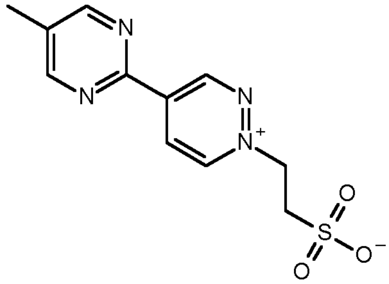 |
| 1.010 | 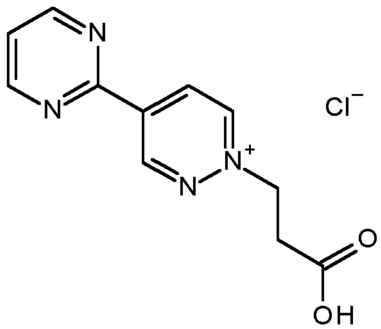 |
| 1.011 | 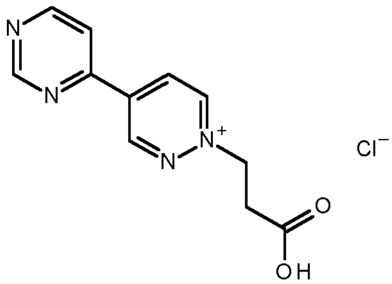 |
| 1.012 | 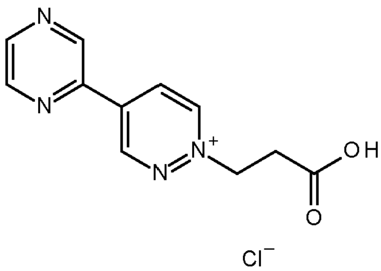 |
| 1.013 | 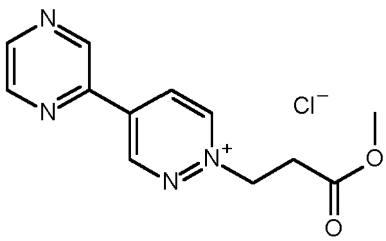 |

(continued)

| Compound No. | Structure |
|---|---|
| 1.014 | 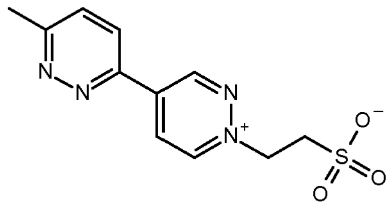 |
| 1.015 | 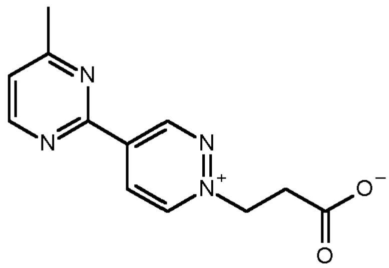 |
| 1.016 | 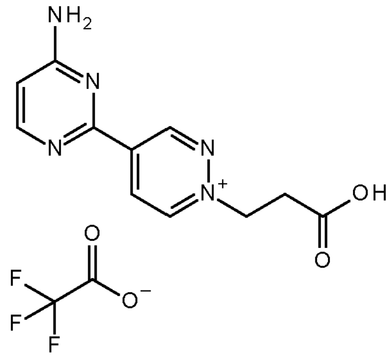 |
| 1.017 | 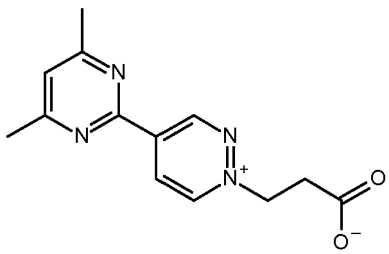 |
| 1.018 | 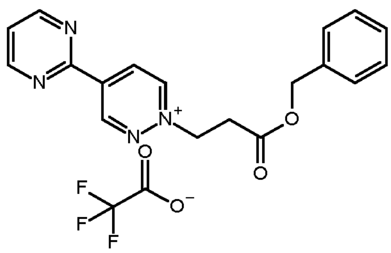 |
| 1.019 | 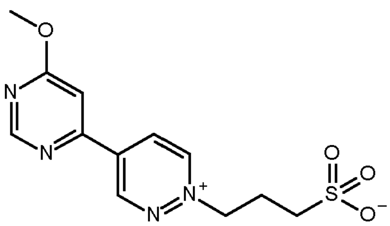 |

(continued)

| Compound No. | Structure |
|---|---|
| 1.020 | 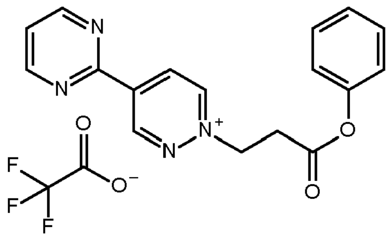 |
| 1.021 | 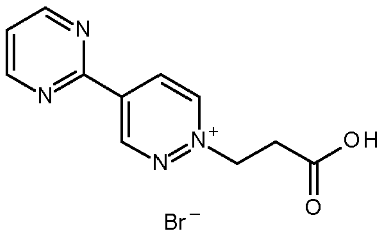 |
| 1.022 | 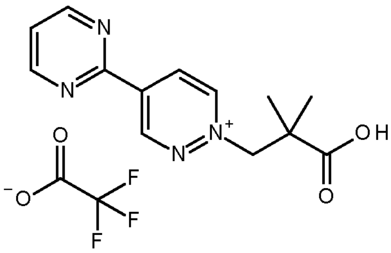 |
| 1.023 | 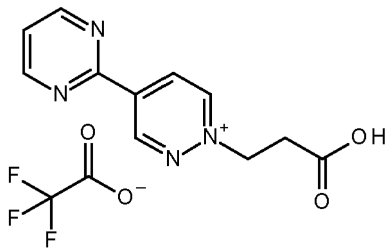 |
| 1.024 | 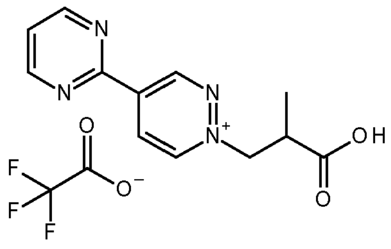 |
| 1.025 | 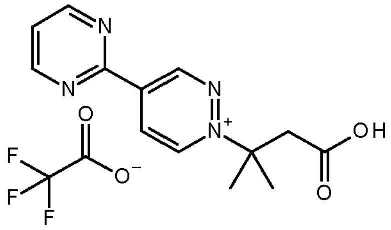 |

(continued)

| Compound No. | Structure |
|---|---|
| 1.026 | 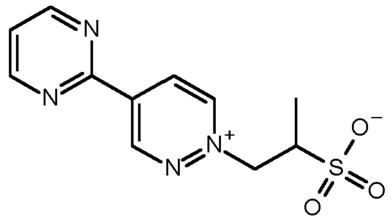 |
| 1.027 | 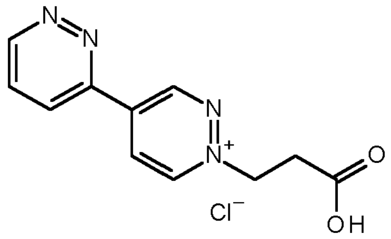 |
| 1.028 | 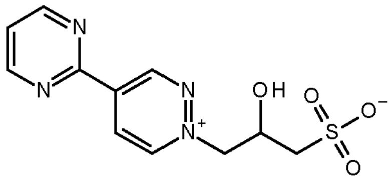 |
| 1.029 | 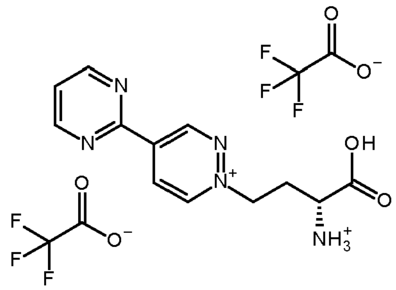 |
| 1.030 | 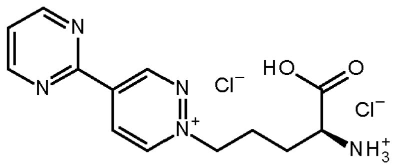 |
| 1.031 | 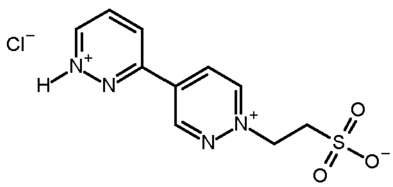 |
| 1.032 | 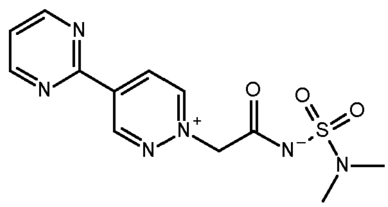 |

(continued)

| Compound No. | Structure |
|---|---|
| 1.033 | 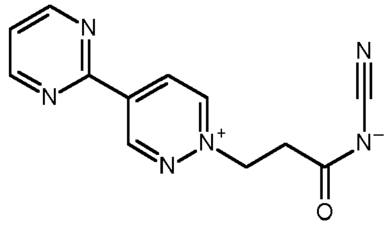 |
| 1.034 | 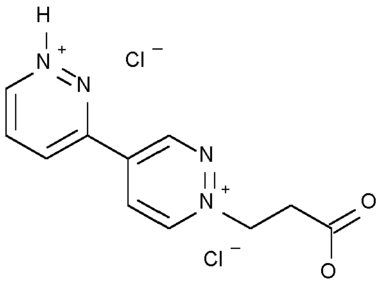 |
| 1.035 | 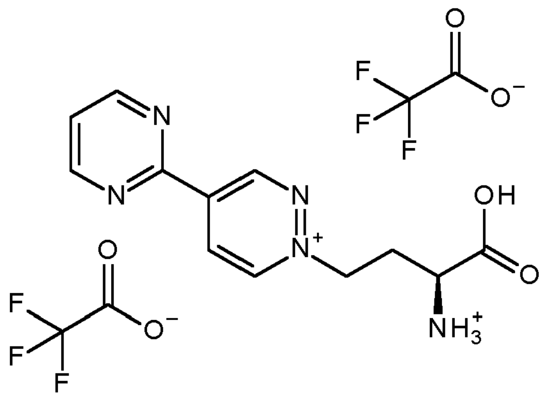 |

**5.** The composition of any one of claims 1-4, wherein the compound of Formula (II) is selected from the group of compounds consisting of 2.1, 2.2, 2.3, 2.4, 2.5, 2.6, 2.7, 2.8, 2.9, 2.10, 2.11, 2.12, 2.13, 2.14, 2.15, 2.16, 2.17, and 2.18, as defined in the table below:

| Compound No. | Name | Structure |
|---|---|---|
| 2.1 | N-(2-fluorophenyl)-2-oxo-4-[3-(trifluoromethyl) phenyl]pyrrolidi ne-3-carboxamide | 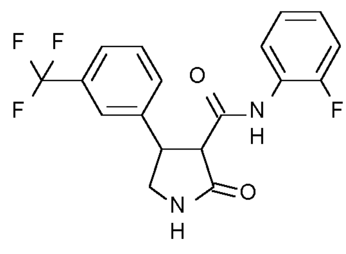 |

(continued)

| Compound No. | Name | Structure |
|---|---|---|
| 2.2 | N-(2,3-difluorophenyl)-2-oxo-4-[3-(trifluoromethyl) phenyl]pyrrolidi ne-3-carboxamide | 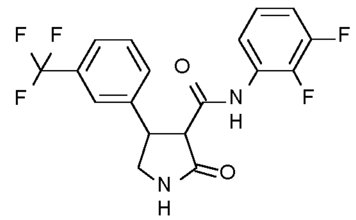 |
| 2.3 | 2-oxo-4-[3-(trifluoromethyl)phenyl]-N-(2,3,4-trifluorophenyl)pyrrolidine-3-carboxamide | 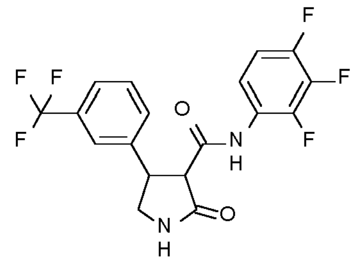 |
| 2.4 | N-(2-fluorophenyl)-1-methyl-2-oxo-4-[3-(trifluoromethyl)phenyl]pyrrolidi ne-3-carboxamide | 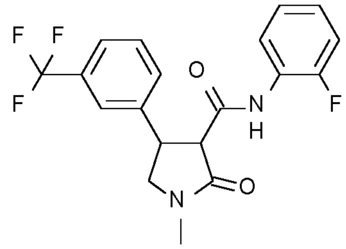 |
| 2.5 | N-(2-fluorophenyl)-2-oxo-4-[4-(trifluoromethyl) phenyl]pyrrolidi ne-3-carboxamide | 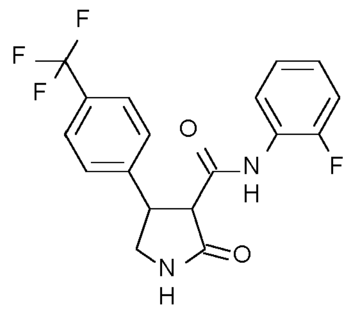 |
| 2.6 | N-(2-fluorophenyl)-1-methyl-2-oxo-4-[4-(trifluoromethyl)phenyl]pyrrolidi ne-3-carboxamide | 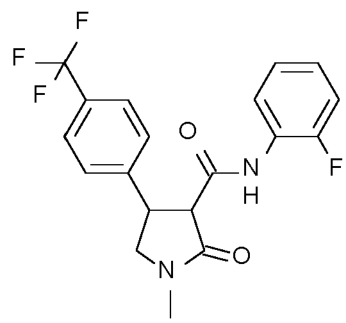 |

(continued)

| Compound No. | Name | Structure |
|---|---|---|
| 2.7 | N-(2,3-difluorophenyl)-2-oxo-4-[4-(trifluoromethyl) phenyl]pyrrolidi ne-3-carboxamide | 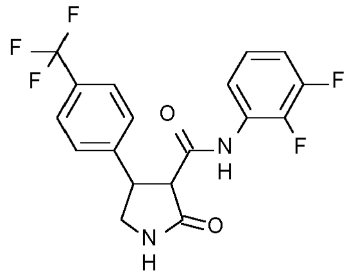 |
| 2.8 | N-(2,3-difluorophenyl)-1-methyl-2-oxo-4-[4-(trifluoromethyl)phenyl]pyrrolidi ne-3-carboxamide | 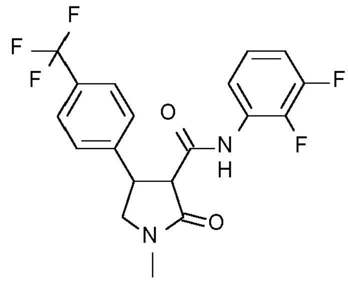 |
| 2.9 | 2-oxo-4-[4-(trifluoromethyl)phenyl]-N-(2,3,4-trifluorophenyl)pyrrolidine-3-carboxamide | 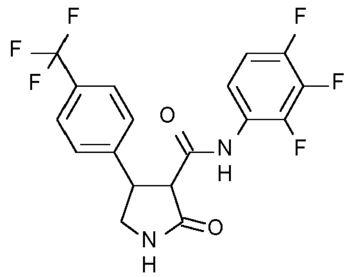 |
| 2.10 | N-(2-fluorophenyl)-4-(4-fluorophenyl)-1-methyl-2-oxo-pyrrolidine-3-carboxamide | 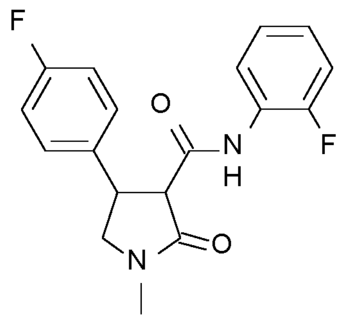 |
| 2.11 | N-(2,3-difluorophenyl)-4-(3,4-difluorophenyl)-2-oxo-pyrrolidine-3-carboxamide | 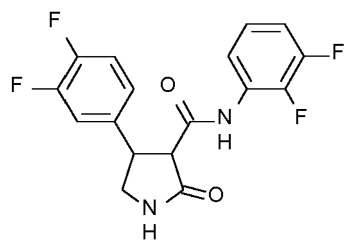 |

(continued)

| Compound No. | Name | Structure |
|---|---|---|
| 2.12 | 4-(3,4-difluorophenyl)-N-(2-fluorophenyl)-2-oxo-pyrrolidine-3-carboxamide | 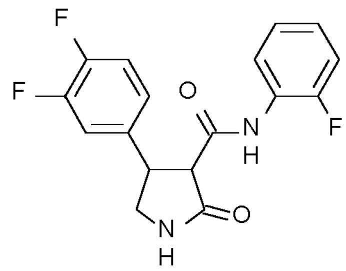 |
| 2.13 | N-(2,4-difluorophenyl)-4-(3,5-difluorophenyl)-2-oxo-pyrrolidine-3-carboxamide | 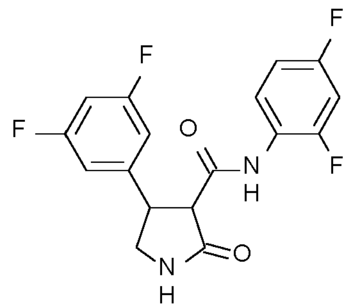 |
| 2.14 | N-(2,3-difluorophenyl)-4-(3-isopropylphenyl)-2-oxo-pyrrolidine-3-carboxamide | 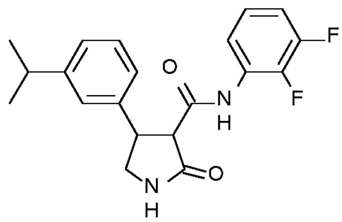 |
| 2.15 | N-(2,3-difluorophenyl)-2-oxo-4-[6-(trifluoromethyl)-3-pyridyl]pyrrolidine-3-carboxamide | 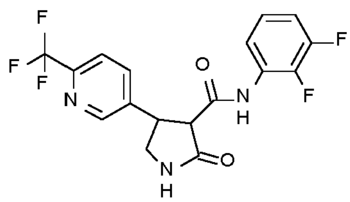 |
| 2.16 | 4-(3,5-difluorophenyl)-N-[3-fluoro-2-(trifluoromethyl)phenyl]-1-methyl-2-oxo-pyrrolidine-3-carboxamide | 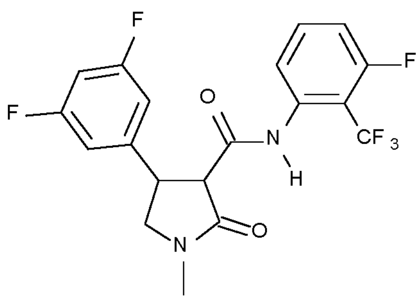 |

(continued)

| Compound No. | Name | Structure |
|---|---|---|
| 2.17 | N-(2,4-difluorophenyl)-4-(3,5-difluorophenyl)-1-methyl-2-oxo-pyrrolidine-3-carboxamide | 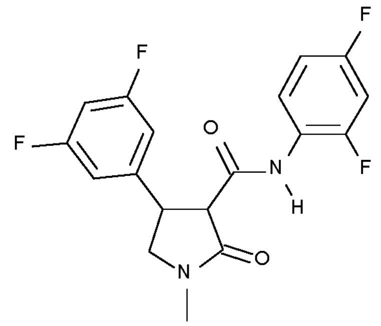 |
| 2.18 | N-(2,3-difluorophenyl)-4-(3,5-difluorophenyl)-1-methyl-2-oxo-pyrrolidine-3-carboxamide | 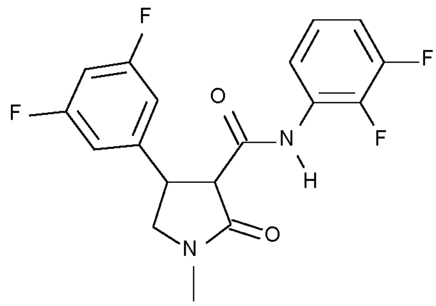 |

**6.** The composition of any one of the preceding claims, wherein the weight ratio of component (A) to component (B) is from 0.01:1 to 100:1.

**7.** The composition of any one of the preceding claims wherein the weight ratio of component (A) to component (B) is from 0.025:1 to 20:1.

**8.** The composition of any one of the preceding claims, wherein the weight ratio of component (A) to component (B) is from 1:30 to 20:1.

**9.** The herbicidal composition of any one of the preceding claims additionally comprising an agriculturally acceptable formulation adjuvant.

**10.** The herbicidal composition of claim 9, further comprising at least one additional pesticide.

**11.** The herbicidal composition according to claim 10, wherein the additional pesticide is a herbicide or herbicide safener.

**12.** A method of controlling unwanted plant growth, comprising applying a compound of Formula (I) as defined in any one of claims 1 to 4, and a compound of Formula (II) as defined in any one of claim 1 or claim 5, to the unwanted plants or to the locus thereof.

**13.** The method of claim 12, wherein the compounds of Formula (I) and Formula (II) are applied in the form of a composition as defined in any one of claims 1 to 11.

**Patentansprüche**

**1.** Zusammensetzung, umfassend als Komponente (A) eine Verbindung der Formel (I) oder ein agrochemisch unbedenkliches Salz oder eine zwitterionische Spezies davon,

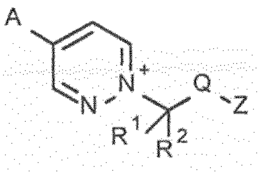

(I),

wobei:

A für 6-gliedriges Heteroaryl steht, das aus der Gruppe bestehend aus:

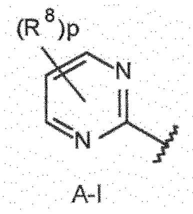
A-I
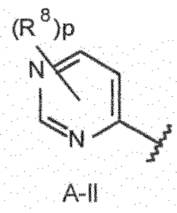
A-II
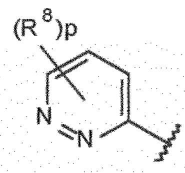
A-III
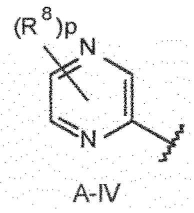
A-IV

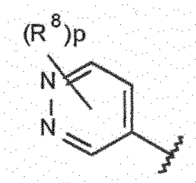
A-V
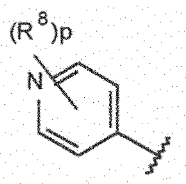
A-VI
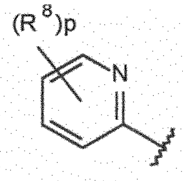
A-VII

ausgewählt ist, wobei die gezackte Linie den Punkt der Anbindung an den restlichen Teil einer Verbindung der Formel (I) definiert,
p für 0, 1 oder 2 steht und
$R^8$ jeweils unabhängig aus der Gruppe bestehend aus $NH_2$, Methyl und Methoxy ausgewählt ist;
$R^1$ und $R^2$ jeweils unabhängig für Wasserstoff oder Methyl stehen;
Q für $(CR^{1a}R^{2b})_m$ steht;
m für 0, 1 oder 2 steht;
$R^{1a}$ und $R^{2b}$ jeweils unabhängig aus der Gruppe bestehend aus Wasserstoff, Hydroxy, Methyl und $NH_2$ ausgewählt sind;
Z für $-S(O)_2OR^{10}$, $-C(O)OR^{10}$, $-C(O)NHS(O)_2R^{12}$ und - C(O)NHCN steht;
$R^{10}$ für Wasserstoff, Methyl, Benzyl oder Phenyl steht;
und $R^{12}$ für Methyl, $-NH_2$, $-N(CH_3)_2$ oder $-NHCH_3$ steht; und
als Komponente (B):

(B) eine oder mehrere Verbindungen der Formel (II):

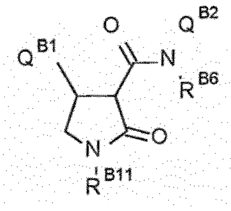

(II)

wobei
$R^{B11}$ für H, $C_1$-$C_6$-Alkyl, $C_1$-$C_6$-Halogenalkyl oder $C_4$-$C_8$-Cycloalkyl steht;
$R^{B6}$ für H, $C_1$-$C_6$-Alkyl oder $C_1$-$C_6$-Alkoxy steht;
$Q^{B1}$ für ein gegebenenfalls substituiertes Ringsystem steht, das aus der Gruppe bestehend aus Phenyl, Thienyl, Pyridinyl, Benzodioxolyl, Naphthyl, Naphthalinyl, Benzofuranyl, Furanyl, Benzothiophenyl und Pyrazolyl ausgewählt ist, wobei das Ringsystem, wenn es substituiert ist, durch 1 bis 3 $R^{B4}$ substituiert ist;

$Q^{B2}$ für ein gegebenenfalls substituiertes Ringsystem steht, das aus der Gruppe bestehend aus Phenyl, Pyridinyl, Benzodioxolyl, Pyridinon, Thiadazolyl, Thiazolyl und Oxazolyl ausgewählt ist, wobei das Ringsystem, wenn es substituiert ist, durch 1 bis 3 $R^{B5}$ substituiert ist;
$R^{B4}$ jeweils unabhängig für Halogen, $C_1$-$C_6$-Alkyl, $C_1$-$C_6$-Halogenalkyl, $C_1$-$C_6$-Alkoxy, $C_1$-$C_6$-Halogenalkoxy, $C_3$-$C_8$-Cycloalkyl, Cyano, $C_1$-$C_6$-Alkylthio, $C_1$-$C_6$-Alkylsulfinyl, $C_1$-$C_6$-Alkylsulfonyl, $SF_5$, $NHR^{B8}$, Phenyl, das gegebenenfalls durch 1-3 $R^{B7}$ substituiert ist, oder Pyrazolyl, das gegebenenfalls durch 1-3 $R^{B7}$ substituiert ist, steht;
$R^{B5}$ jeweils unabhängig für Halogen, $C_1$-$C_6$-Alkyl, $C_1$-$C_6$-Halogenalkyl, $C_1$-$C_6$-Alkoxy, $C_1$-$C_6$-Halogenalkoxy, Cyano, Nitro, $C_1$-$C_6$-Alkylthio, $C_1$-$C_6$-Alkylsulfinyl oder $C_1$-$C_6$-Alkylsulfonyl steht;
$R^{B7}$ jeweils unabhängig für $C_1$-$C_6$-Alkyl, Halogen oder $C_1$-$C_6$-Halogenalkyl steht; und
$R^{B8}$ für $C_1$-$C_4$-Alkoxycarbonyl steht; oder ein N-Oxid oder eine Salzform davon.

**2.** Zusammensetzung nach Anspruch 1, wobei Z aus der Gruppe bestehend aus $-C(O)OH$, $-C(O)OCH_3$, $-S(O)_2OH$, $-C(O)OCH_2C_6H_5$, $-C(O)OC_6H_5$ und $-C(O)NHS(O)_2N(CH_3)_2$ ausgewählt ist.

**3.** Zusammensetzung nach Anspruch 1 oder Anspruch 2, wobei A aus A-I, A-II und A-III gemäß Anspruch 1 ausgewählt ist.

**4.** Zusammensetzung nach Anspruch 1, wobei Komponente (A) aus der Gruppe der in der nachstehenden Tabelle gezeigten 35 Verbindungen ausgewählt ist:

| Verbindung Nr. | Struktur |
|---|---|
| 1.001 | 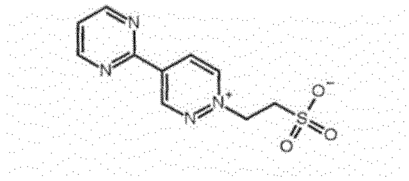 |
| 1.002 | 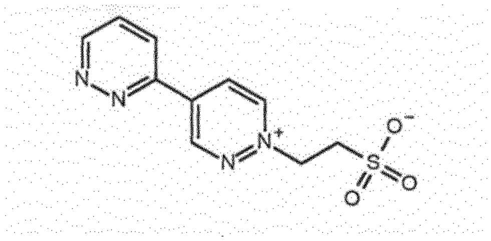 |
| 1.003 | 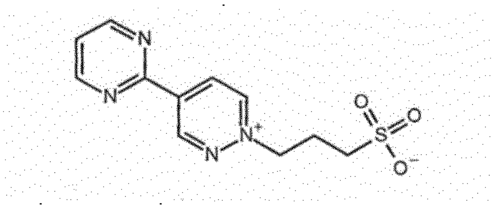 |
| 1.004 | 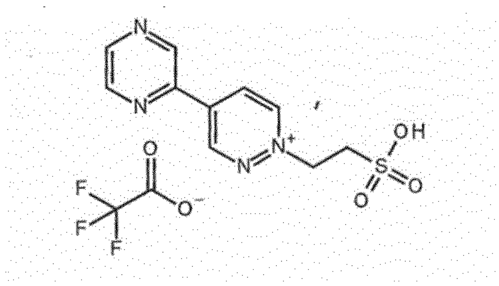 |

(fortgesetzt)

| Verbindung Nr. | Struktur |
|---|---|
| 1.005 | 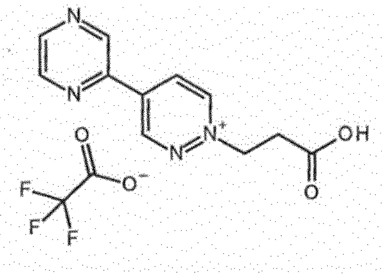 |
| 1.006 | 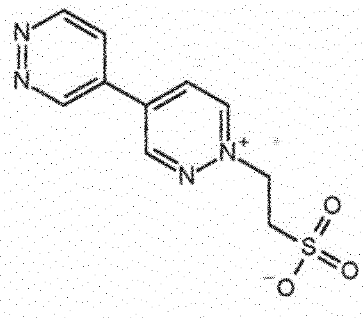 |
| 1.007 | 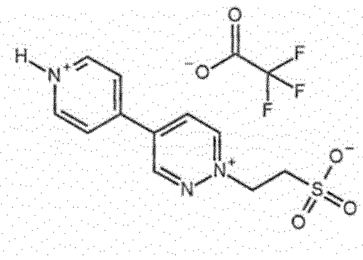 |
| 1.008 | 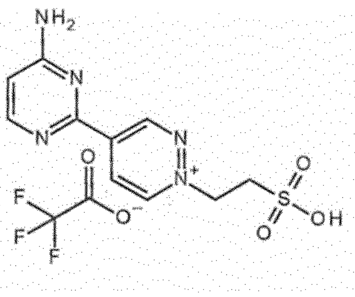 |
| 1.009 | 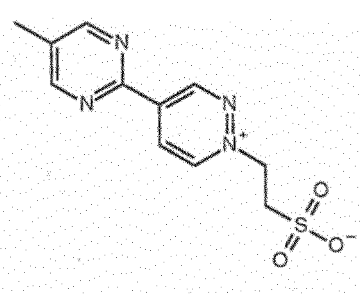 |

(fortgesetzt)

| Verbindung Nr. | Struktur |
|---|---|
| 1.010 | 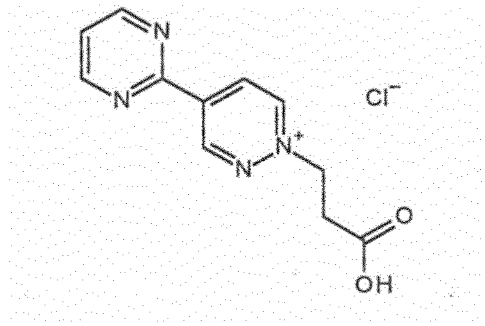 |
| 1.011 | 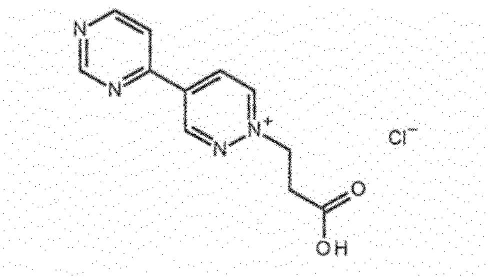 |
| 1.012 | 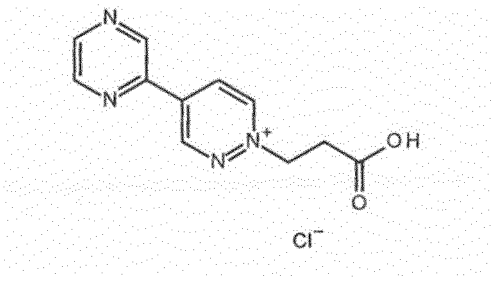 |
| 1.013 | 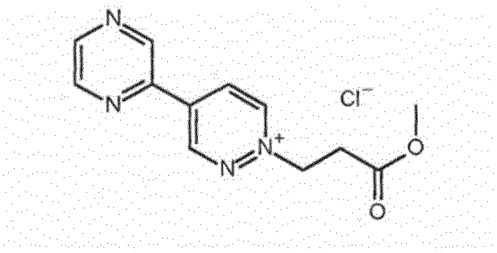 |
| 1.014 | 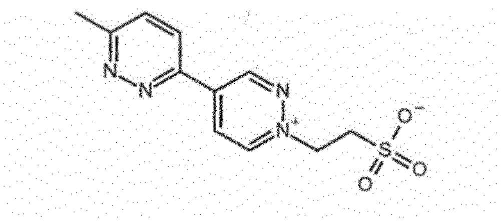 |

(fortgesetzt)

| Verbindung Nr. | Struktur |
|---|---|
| 1.015 | 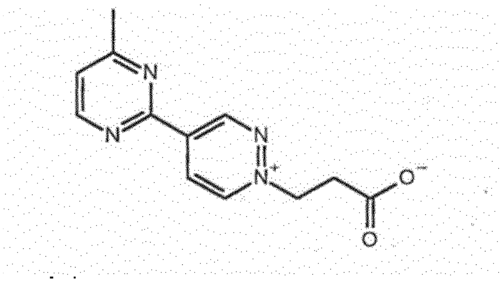 |
| 1.016 | 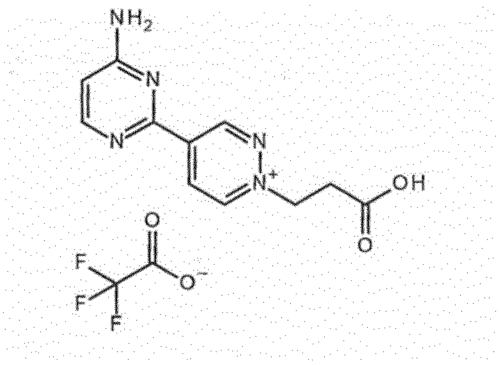 |
| 1.017 | 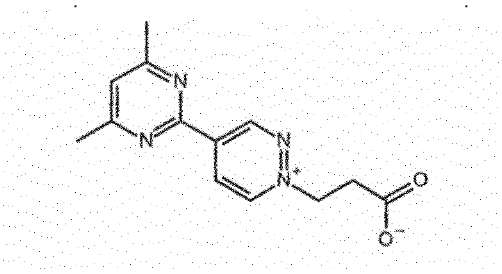 |
| 1.018 | 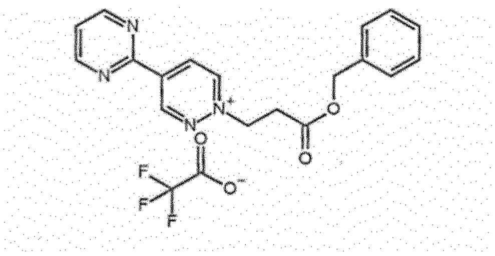 |
| 1.019 | 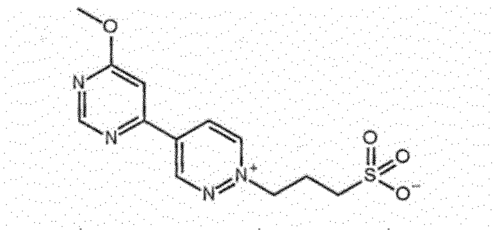 |

(fortgesetzt)

| Verbindung Nr. | Struktur |
|---|---|
| 1.020 | 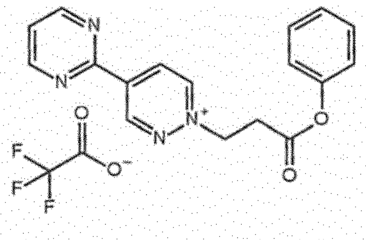 |
| 1.021 | 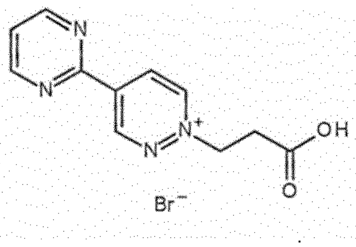 |
| 1.022 | 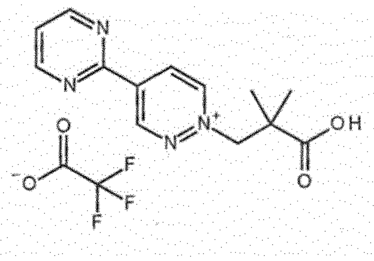 |
| 1.023 | 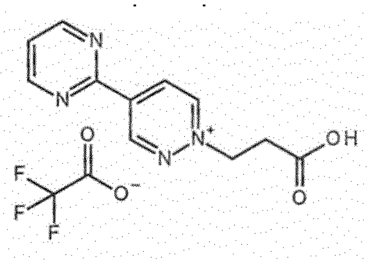 |
| 1.024 | 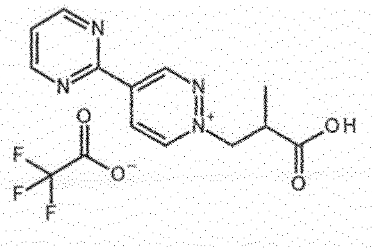 |
| 1.025 | 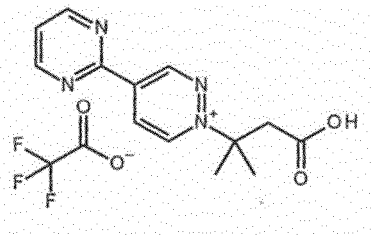 |

(fortgesetzt)

| Verbindung Nr. | Struktur |
|---|---|
| 1.026 | 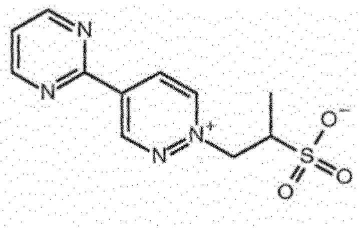 |
| 1.027 | 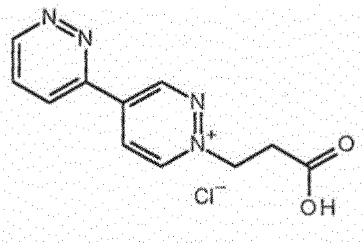 |
| 1.028 | 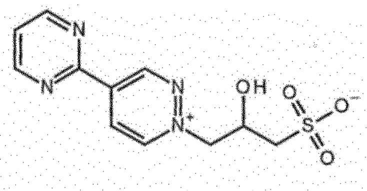 |
| 1.029 | 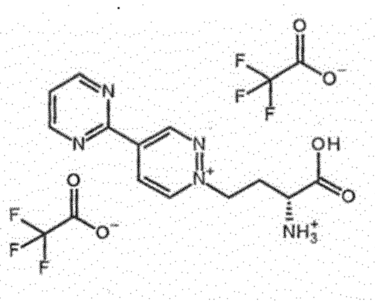 |
| 1.030 | 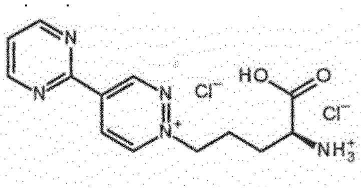 |
| 1.031 | 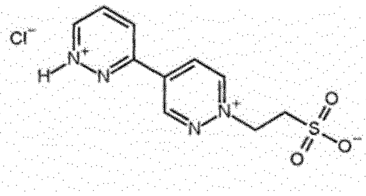 |

(fortgesetzt)

| Verbindung Nr. | Struktur |
|---|---|
| 1.032 | 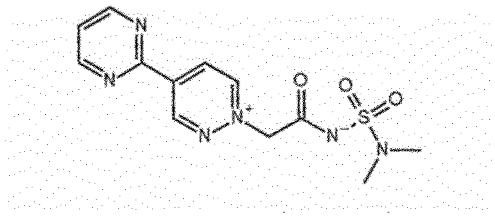 |
| 1.033 | 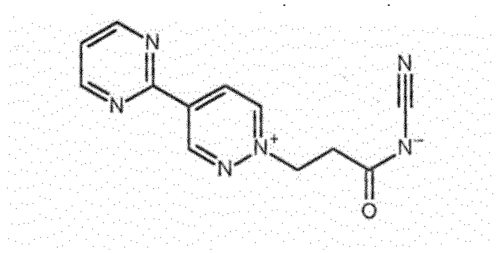 |
| 1.034 | 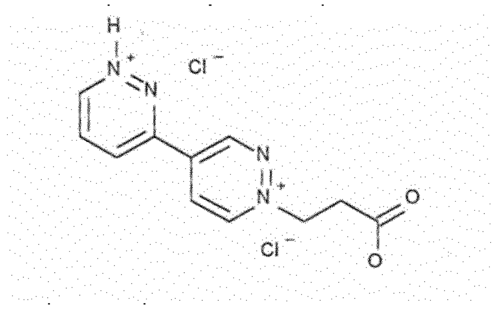 |
| 1.035 | 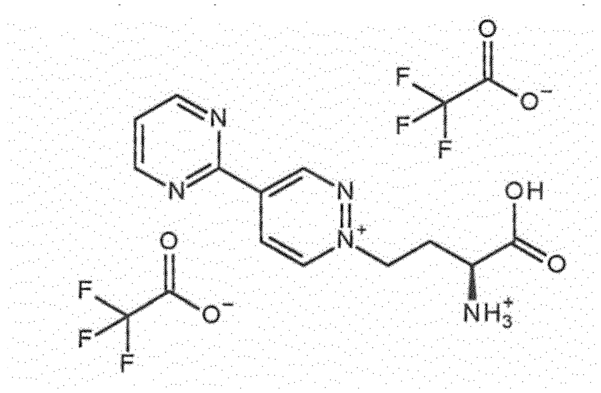 |

**5.** Zusammensetzung nach einem der Ansprüche 1-4, wobei die Verbindung der Formel (II) aus der Gruppe von Verbindungen bestehend aus 2.1, 2.2, 2.3, 2.4, 2.5, 2.6, 2.7, 2.8, 2.9, 2.10, 2.11, 2.12, 2.13, 2.14, 2.15, 2.16, 2.17 und 2.18 gemäß der nachstehenden Tabelle ausgewählt ist:

| Verbindung Nr. | Name | Struktur |
|---|---|---|
| 2.1 | N-(2-Fluorphenyl)-2-oxo-4-[3-(trifluormethyl) phenyl]-pyrrolidin-3-carboxamid | 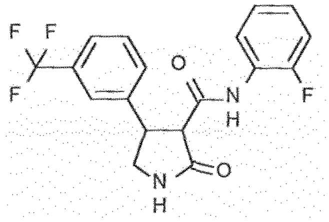 |
| 2.2 | N-(2,3-Difluorphenyl)-2-oxo-4-[3-(trifluormethyl) phenyl]-pyrrolidin-3-carboxamid | 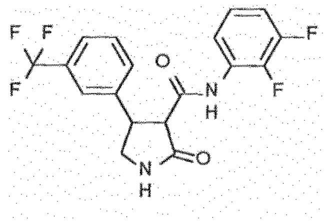 |
| 2.3 | 2-Oxo-4-[3-(trifluormethyl)phenyl]-N-(2,3,4-trifluorphenyl)-pyrrolidin-3-carboxamid | 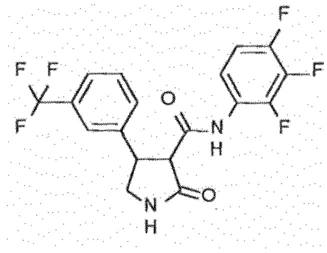 |
| 2.4 | N-(2-Fluorphenyl)-1-methyl-2-oxo-4-[3-(trifluormethyl)phenyl]-pyrrolidin-3-carboxamid | 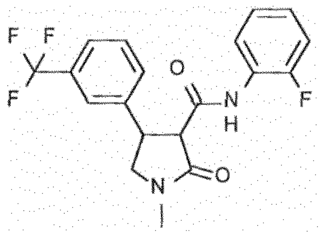 |
| 2.5 | N-(2-Fluorphenyl)-2-oxo-4-[4-(trifluormethyl) phenyl]-pyrrolidin-3-carboxamid | 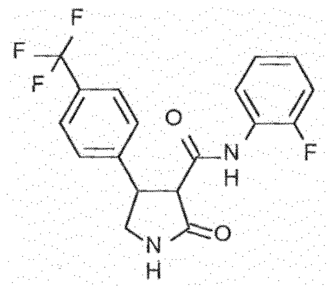 |
| 2.6 | N-(2-Fluorphenyl)-1-methyl-2-oxo-4-[4-(trifluormethyl)phenyl]-pyrrolidin-3-carboxamid | 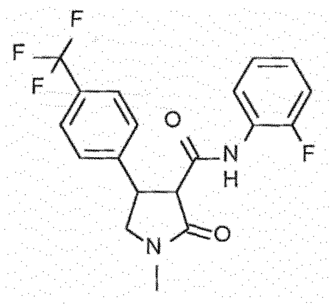 |

(fortgesetzt)

| Verbindung Nr. | Name | Struktur |
|---|---|---|
| 2.7 | N-(2,3-Difluorphenyl)-2-oxo-4-[4-(trifluormethyl) phenyl]-pyrrolidin-3-carboxamid | 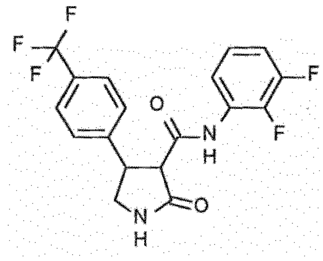 |
| 2.8 | N-(2,3-Difluorphenyl)-1-methyl-2-oxo-4-[4-(trifluormethyl)phenyl]-pyrrolidin-3-carboxamid | 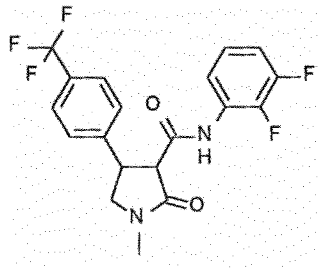 |
| 2.9 | 2-Oxo-4-[4-(trifluormethyl)phenyl]-N-(2,3,4-trifluorphenyl)-pyrrolidin-3-carboxamid | 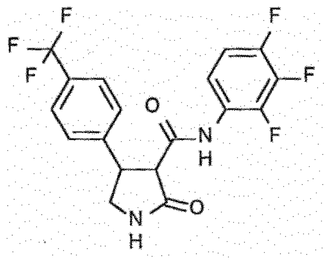 |
| 2.10 | N-(2-Fluorphenyl)-4-(4-fluorphenyl)-1-methyl-2-oxopyrrolidin-3-carboxamid | 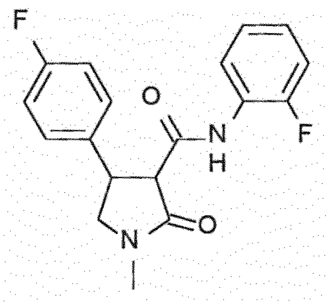 |
| 2.11 | N-(2,3-Difluorphenyl)-4-(3,4-difluorphenyl)-2-oxopyrrolidin-3-carboxamid | 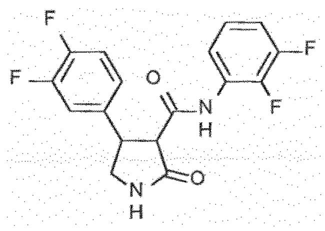 |
| 2.12 | 4-(3,4-Difluorphenyl)-N-(2-fluorphenyl)-2-oxopyrrolidin-3-carboxamid | 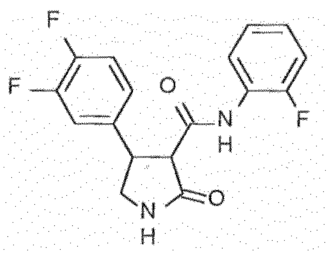 |

(fortgesetzt)

| Verbindung Nr. | Name | Struktur |
|---|---|---|
| 2.13 | N-(2,4-Difluorphenyl)-4-(3,5-difluorphenyl)-2-oxopyrrolidin-3-carboxamid | 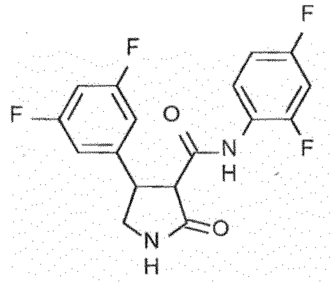 |
| 2.14 | N-(2,3-Difluorphenyl)-4-(3-isopropylphenyl)-2-oxopyrrolidin-3-carboxamid | 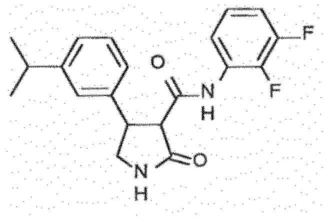 |
| 2.15 | N-(2,3-Difluorphenyl)-2-oxo-4-[6-(trifluormethyl)-3-pyridyl]pyrrolidin-3-carboxamid | 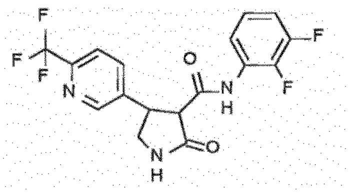 |
| 2.16 | 4-(3,5-Difluorphenyl)-N-[3-fluor-2-(trifluormethyl) phenyl]-1-methyl-2-oxopyrrolidin-3-carboxamid | 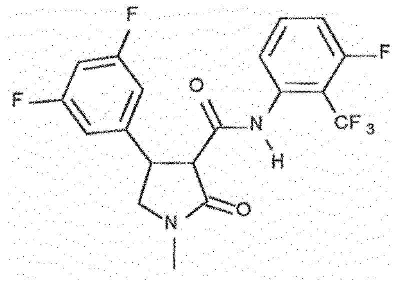 |
| 2.17 | N-(2,4-Difluorphenyl)-4-(3,5-difluorphenyl)-1-methyl-2-oxopyrrolidin-3-carboxamid | 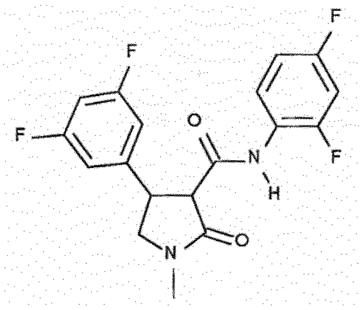 |
| 2.18 | N-(2,3-Difluorphenyl)-4-(3,5-difluorphenyl)-1-methyl-2-oxopyrrolidin-3-carboxamid | 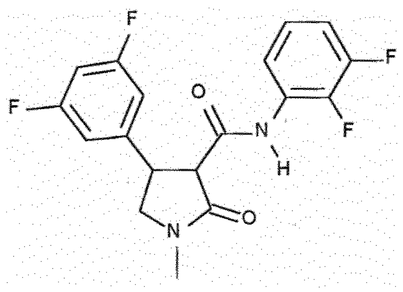 |

6. Zusammensetzung nach einem der vorhergehenden Ansprüche, wobei das Gewichtsverhältnis von Komponente (A) zu Komponente (B) 0,01:1 bis 100:1 beträgt.

7. Zusammensetzung nach einem der vorhergehenden Ansprüche, wobei das Gewichtsverhältnis von Komponente (A) zu Komponente (B) 0,025:1 bis 20:1 beträgt.

8. Zusammensetzung nach einem der vorhergehenden Ansprüche, wobei das Gewichtsverhältnis von Komponente (A) zu Komponente (B) 1:30 bis 20:1 beträgt.

9. Herbizide Zusammensetzung nach einem der vorhergehenden Ansprüche, die zusätzlich ein landwirtschaftlich unbedenkliches Formulierungshilfsmittel umfasst.

10. Herbizide Zusammensetzung nach Anspruch 9, ferner umfassend mindestens ein zusätzliches Pestizid.

11. Herbizide Zusammensetzung nach Anspruch 10, wobei es sich bei dem zusätzlichen Pestizid um ein Herbizid oder einen Herbizid-Safener handelt.

12. Verfahren zur Bekämpfung von unerwünschtem Pflanzenwuchs, umfassend das Ausbringen einer Verbindung der Formel (I) gemäß einem der Ansprüche 1 bis 4 und einer Verbindung der Formel (II) gemäß einem von Anspruch 1 oder Anspruch 5 auf die unerwünschten Pflanzen oder auf ihren Standort.

13. Verfahren nach Anspruch 12, wobei die Verbindungen der Formel (I) und Formel (II) in Form einer Zusammensetzung gemäß einem der Ansprüche 1 bis 11 ausgebracht werden.

## Revendications

1. Composition comprenant en tant que composant (A) un composé de formule (I), ou un sel acceptable sur le plan agrochimique ou une espèce zwitterionique correspondant(e),

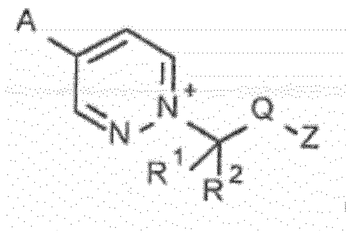

(I),

A étant un hétéroaryle à 6 chaînons choisi dans le groupe constitué par

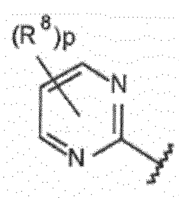

A-I

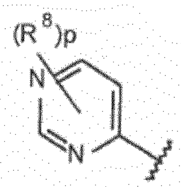

A-II

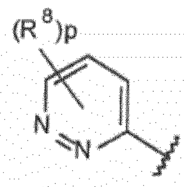

A-III

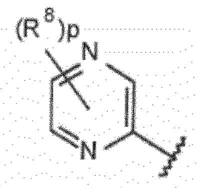

A-IV

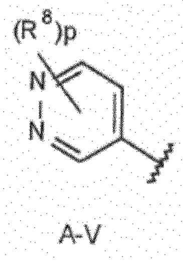

A-V

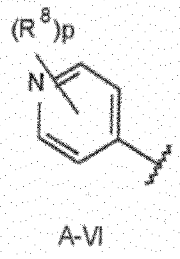

A-VI

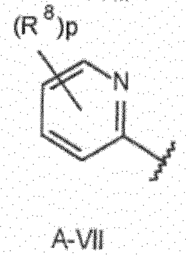

A-VII

la ligne dentelée définissant le point de fixation à la partie restante d'un composé de formule (I), p étant 0, 1 ou 2, et chaque $R^8$ étant indépendamment choisi dans le groupe constitué par $NH_2$, méthyle, et méthoxy ; $R^1$ et $R^2$ étant chacun indépendamment hydrogène ou méthyle ; Q étant $(CR^{1a}R^{2b})_m$ ; m étant 0, 1, ou 2 ; chaque $R^{1a}$ et $R^{2b}$ étant indépendamment choisi dans le groupe constitué par hydrogène, hydroxy, -méthyle, et $NH_2$ ; Z étant $-S(O)_2OR^{10}$, $-C(O)OR^{10}$, $-C(O)NHS(O)_2R^{12}$ et - C(O)NHCN ; $R^{10}$ étant hydrogène, méthyle, benzyle ou phényle ; et $R^{12}$ étant méthyle, $-NH_2$, $-N(CH_3)_2$, ou $-NHCH_3$ ; et, en tant que composant (B) :

(B) un ou plusieurs composés de formule (II)

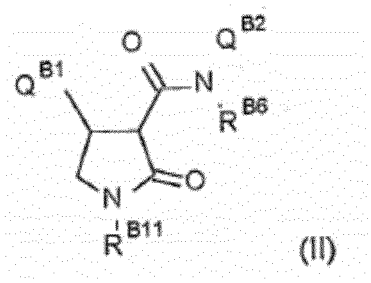

(II)

$R^{B11}$ étant H, $C_1$-$C_6$alkyle, $C_1$-$C_6$ halogénoalkyle ou $C_4$-$C_8$ cycloalkyle ;
$R^{B6}$ étant H, $C_1$-$C_6$alkyle, ou $C_1$-$C_6$alcoxy ;
$Q^{B1}$ étant un système cyclique éventuellement substitué, choisi dans le groupe constitué par phényle, thiényle, pyridinyle, benzodioxolyle, naphtyle, naphtalényle, benzofurannyle, furanyle, benzothiophényle, et pyrazolyle, lorsqu'il est substitué, ledit système cyclique étant substitué par 1 à 3 $R^{B4}$ ;
$Q^{B2}$ étant un système cyclique éventuellement substitué, choisi dans le groupe constitué par phényle, pyridinyle, benzodioxolyle, pyridinone, thiadazolyle, thiazolyle, et oxazolyle, lorsqu'il est substitué, ledit système cyclique étant substitué par 1 à 3 $R^{B5}$ ;
chaque $R^{B4}$ étant indépendamment halogène, $C_1$-$C_6$alkyle, $C_1$-$C_6$halogénoalkyle, $C_1$-$C_6$alcoxy, $C_1$-$C_6$halogénoalcoxy, $C_3$-$C_8$cycloalkyle, cyano, $C_1$-$C_6$alkylthio, $C_1$-$C_6$alkylsulfinyle, $C_1$-$C_6$alkylsulfonyle, $SF_5$, $NHR^{B8}$, phényle éventuellement substitué par 1 à 3 $R^{B7}$, ou pyrazolyle éventuellement substitué par 1 à 3 $R^{B7}$ ;
chaque $R^{B5}$ étant indépendamment halogène, $C_1$-$C_6$alkyle, $C_1$-$C_6$halogénoalkyle, $C_1$-$C_6$alcoxy, $C_1$-$C_6$halogénoalcoxy, cyano, nitro, $C_1$-$C_6$alkylthio, $C_1$-$C_6$alkylsulfinyle, ou $C_1$-$C_6$alkylsulfonyle ;
chaque $R^{B7}$ étant indépendamment $C_1$-$C_6$alkyle, halogène, ou $C_1$-$C_6$halogénoalkyle ; et
$R^{B8}$ étant $C_1$-$C_4$alcoxycarbonyle ; ou N-oxyde, ou forme de sel correspondant(e).

**2.** Composition selon la revendication 1, Z étant choisi dans le groupe constitué par : $-C(O)OH$, $-C(O)OCH_3$, $-S(O)_2OH$, $-C(O)OCH_2C_6H_5$, - $C(O)OC_6H_5$, et $-C(O)NHS(O)_2N(CH_3)_2$.

**3.** Composé selon la revendication 1 ou la revendication 2, A étant choisi parmi A-I, A-II et A-III tels que définis dans la revendication 1.

**4.** Composition selon la revendication 1, le composant (A) étant choisi dans le groupe de 35 composés présentés dans le tableau ci-dessous :

| Composé n° | Structure |
|---|---|
| 1.001 | 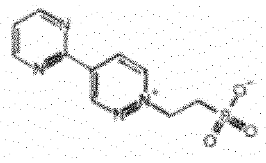 |
| 1,002 | 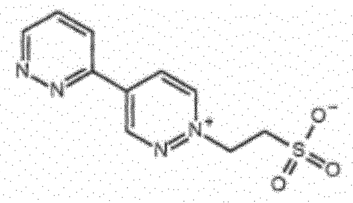 |
| 1.003 | 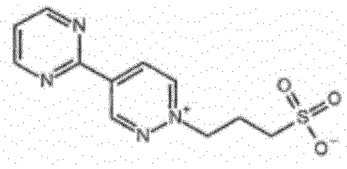 |
| 1.004 | 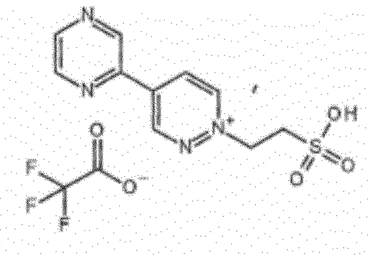 |
| 1.005 | 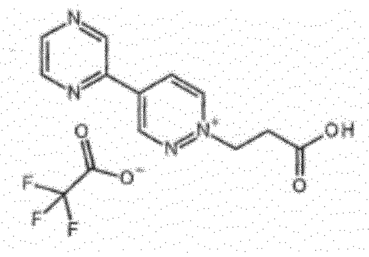 |
| 1.006 | 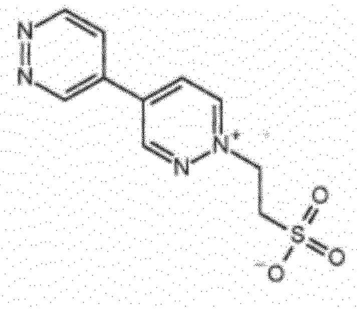 |

(suite)

| Composé n° | Stucture |
|---|---|
| 1.001 | 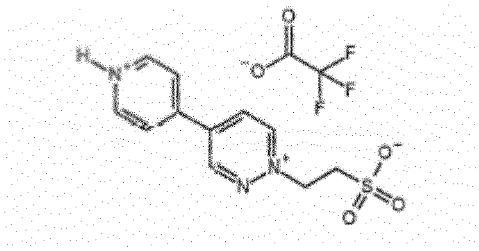 |
| 1.008 | 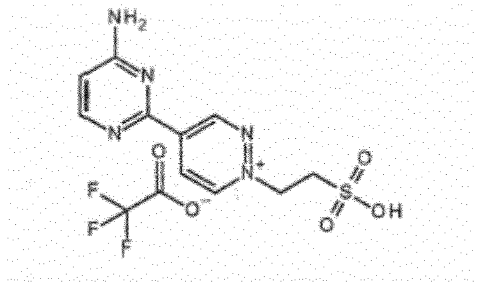 |
| 1.009 | 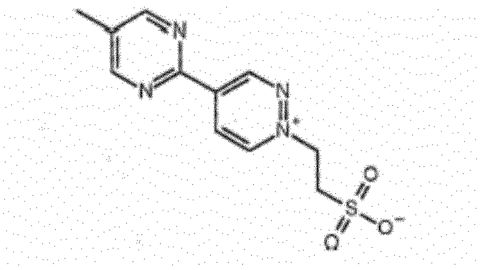 |
| 1.010 | 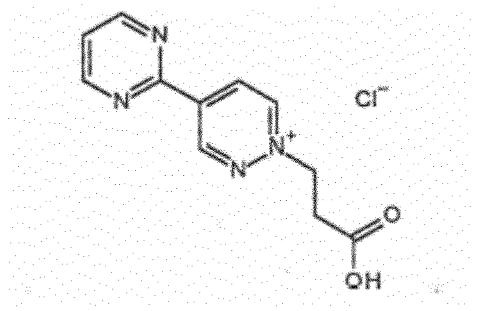 |
| 1.011 | 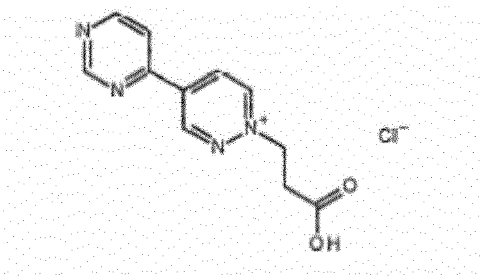 |

(suite)

| Composé n° | Stucture |
|---|---|
| 1.012 | 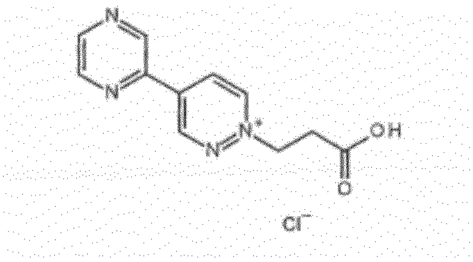 |
| 1.013 | 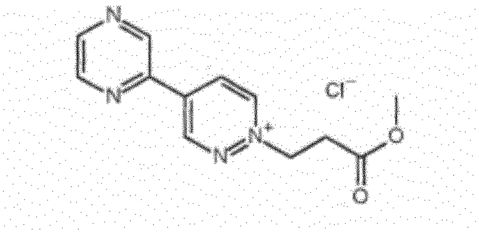 |
| 1.014 | 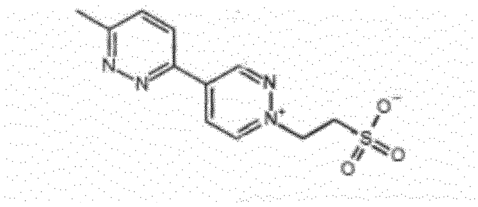 |
| 1.015 | 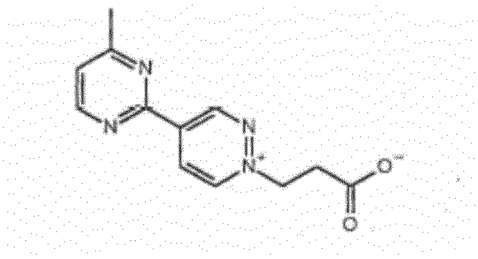 |
| 1.016 | 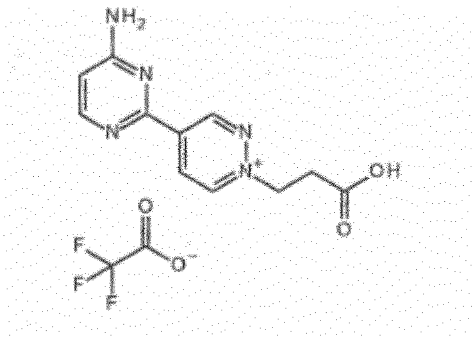 |
| 1.017 | 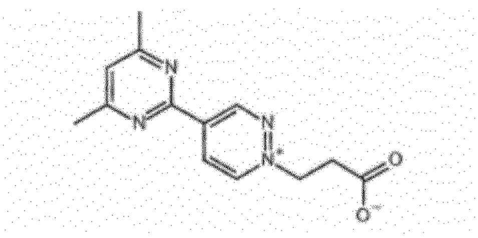 |

(suite)

| Composé n° | Structure |
|---|---|
| 1.018 | 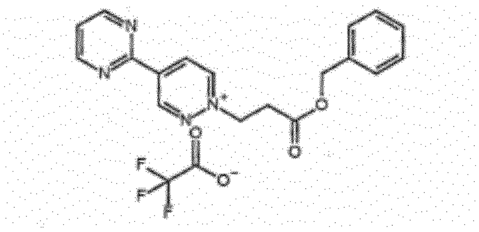 |
| 1.019 | 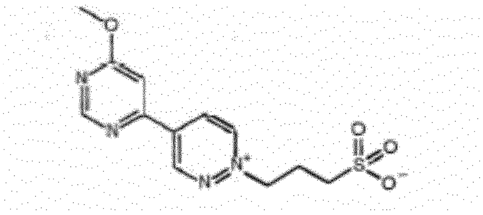 |
| 1.020 | 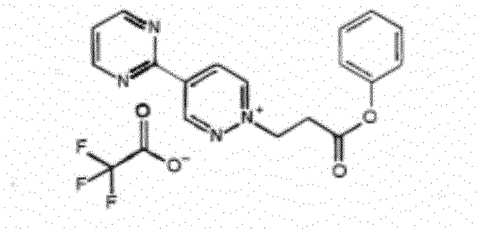 |
| 1.021 | 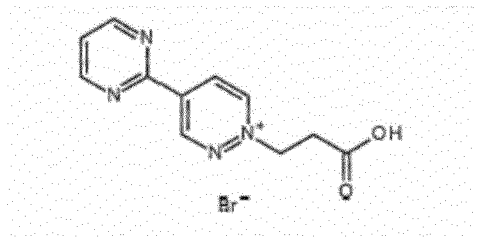 |
| 1.022 | 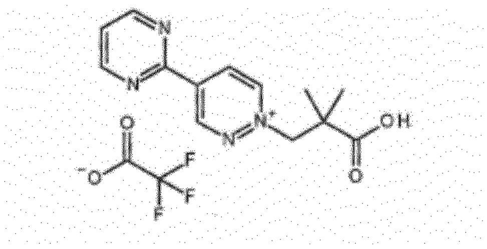 |
| 1.023 | 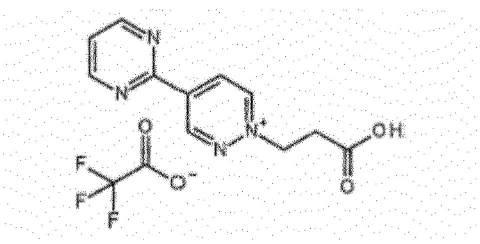 |

(suite)

| Composé n* | Structure |
|---|---|
| 1.024 | 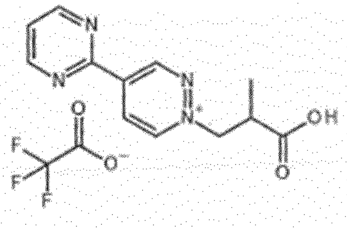 |
| 1.025 | 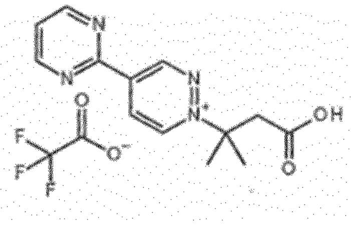 |
| 1.026 | 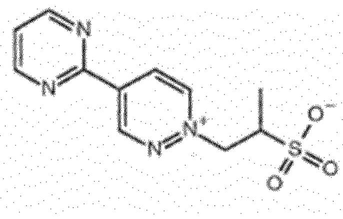 |
| 1.027 | 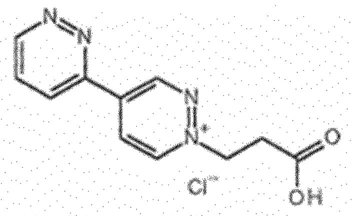 |
| 1.028 | 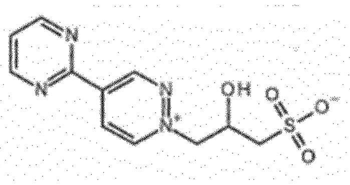 |
| 1.029 | 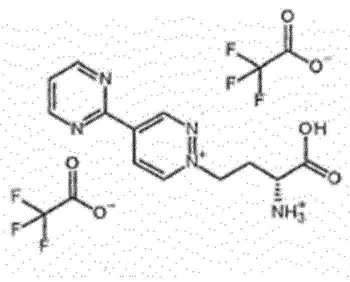 |

(suite)

| Composé n* | Structure |
|---|---|
| 1.030 | 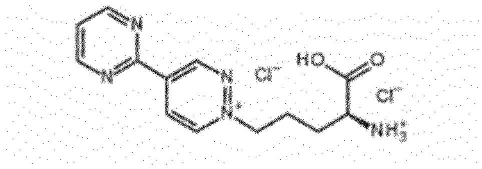 |
| **Composé n°** | **Structure** |
| 1.031 | 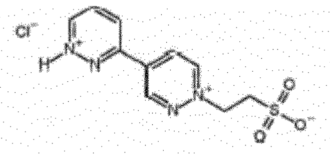 |
| 1.032 | 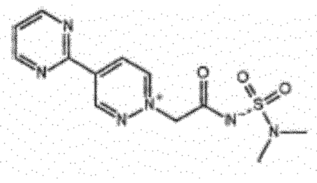 |
| 1.033 | 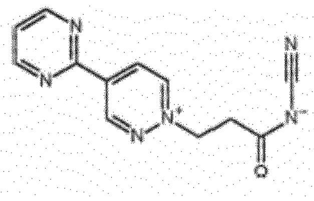 |
| 1.034 | 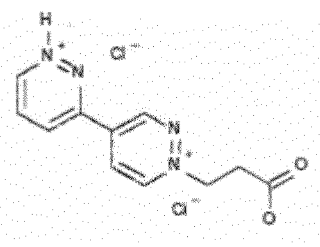 |
| 1.035 | 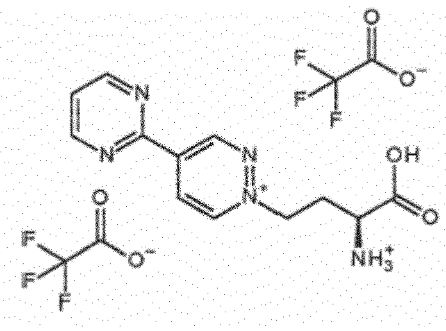 |

**5.** Composition selon l'une quelconque des revendications 1 à 4, le composé de formule (II) étant choisi dans le groupe de composés constitué par 2.1, 2.2, 2.3, 2.4, 2.5, 2.6, 2.7, 2.8, 2.9, 2.10, 2.11, 2.12, 2.13, 2.14, 2.15, 2.16, 2.17, et 2.18, tels que définis dans le tableau ci-dessous :

| Composé n° | Nom | Structure |
|---|---|---|
| 2.1 | N-(2-fluorophényl)-2-oxo-4-[3-(trifluorométhyl)phényl]pyrrolidine-3-carboxamide | 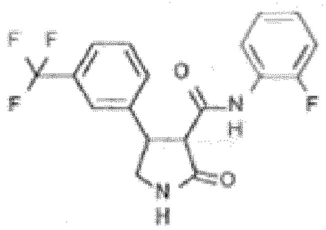 |
| 2.2 | N-(2,3-difluorophényl)-2-oxo-4-[3-(trifluorométhyl) phényl]pyrrolidine-3-carboxamide | 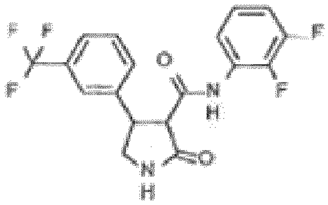 |
| 2.3 | 2-oxo-4-[3-(trifluorométhyl)phényl]-N-(2,3,4-trifluorophényl)pyrrolidine-3-carboxamide | 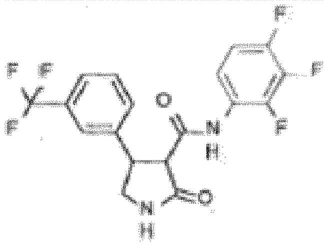 |
| 2.4 | N-(2-fluorophényl)-1-méthyl-2-oxo-4-[3-(trifluorométhyl) phényl]pyrrolidine-3-carboxamide | 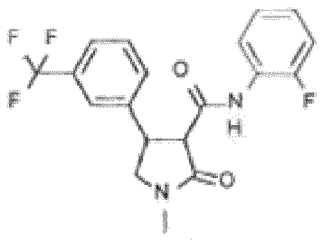 |
| 2.5 | N-(2-fluorophényl)-2-oxo-4-[4-(trifluorométhyl)phényl]pyrrolidine-3-carboxamide | 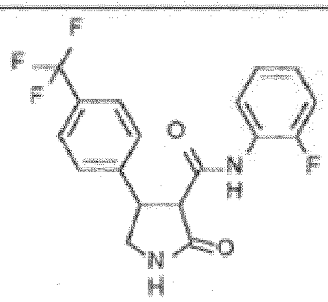 |

| Composé n° | Nom | Structure |
|---|---|---|
| 2.6 | N-(2-fluorophényl)-1-méthyl-2-oxo-4-[4-(trifluorométhyl)phényl]pyrrolidine-3-carboxamide | 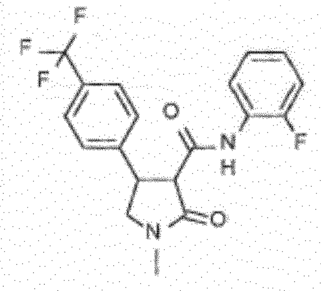 |
| 2.7 | N-(2,3-difluorophényl)-2-oxo-4-[4-(trifluorométhyl)phényl]pyrrolidine-3-carboxamide | 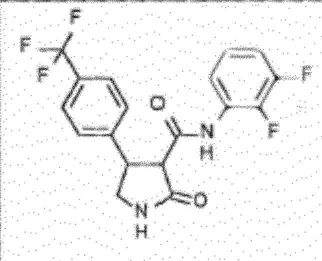 |
| 2.8 | N-(2,3-difluorophényl)-1-méthyl-2-oxo-4-[4-(trifluorométhyl)phényl]pyrrolidine-3-carboxamide | 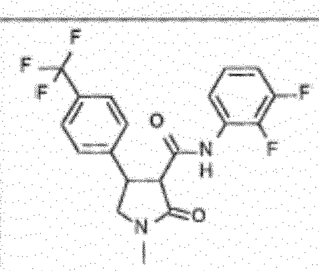 |
| 2.9 | 2-oxo-4-[4-(trifluorométhyl)phényl]-N-(2,3,4-trifluorophényl)pyrrolidine-3-carboxamide | 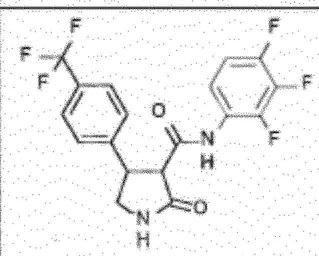 |
| 2.10 | N-(2-fluorophényl)-4-(4-fluorophényl)-1-méthyl-2-oxo-pyrrolidine-3-carboxamide | 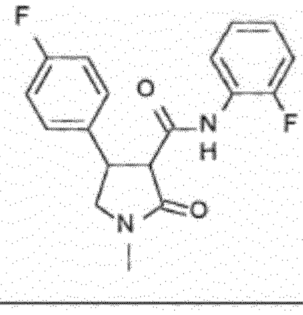 |

| Composé n° | Nom | Structure |
|---|---|---|
| 2.11 | N-(2,3-difluorophényl)-4-(3,4-difluorophényl)-2-oxo-pyrrolidine-3-carboxamide | 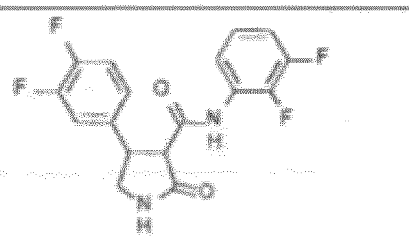 |
| 2.12 | 4-(3,4-difluorophényl)-N-(2-fluorophényl)-2-oxo-pyrrolidine-3-carboxamide | 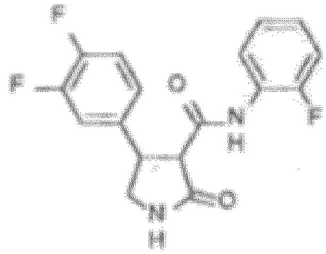 |
| 2.13 | N-(2,4-difluorophényl)-4-(3,5-difluorophényl)-2-oxo-pyrrolidine-3-carboxamide | 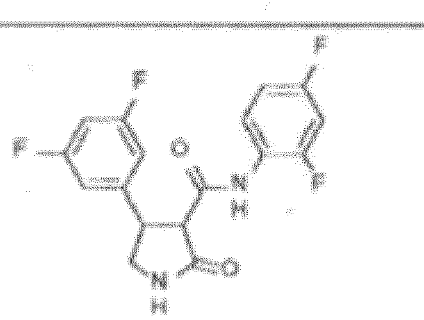 |
| 2.14 | N-(2,3-difluorophényl)-4-(3-isopropylphényl)-2-oxo-pyrrolidine-3-carboxamide | 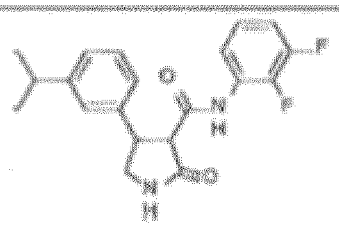 |
| 2.15 | N-(2,3-difluorophényl)-2-oxo-4-[6-(trifluorométhyl)-3-pyridinyl]pyrrolidine-3-carboxamide | 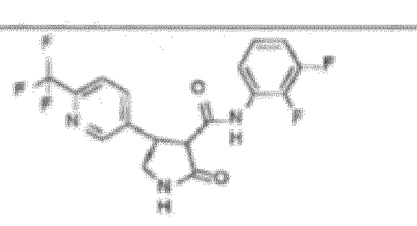 |
| 2.16 | 4-(3,5-difluorophényl)-N-[3-fluoro-2-(trifluorométhyl)phényl]-1-méthyl-2-oxo-pyrrolidine-3-carboxamide | 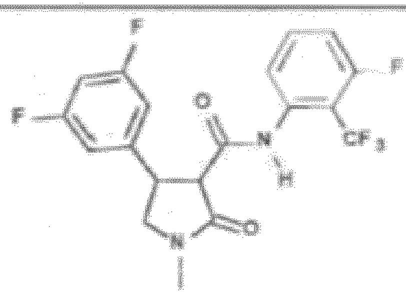 |

| Composé n° | Nom | Structure |
|---|---|---|
| 2.17 | N-(2,4-difluorophényl)-4-(3,5-difluorophényl)-1-méthyl-2-oxo-pyrrolidine-3-carboxamide | 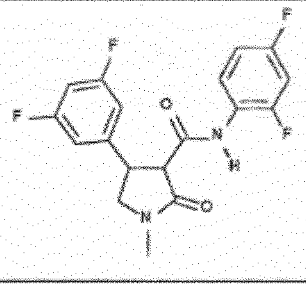 |
| 2.18 | N-(2,3-difluorophényl)-4-(3,5-difluorophényl)-1-méthyl-2-oxo-pyrrolidine-3-carboxamide | 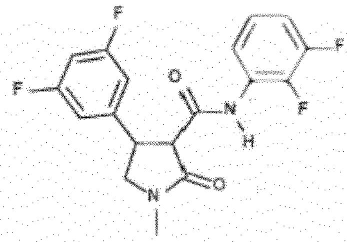 |

.

6. Composition selon l'une quelconque des revendications précédentes, le rapport en poids de composant (A) sur composant (B) étant de 0,01 : 1 à 100 : 1.

7. Composition selon l'une quelconque des revendications précédentes, le rapport en poids de composant (A) sur composant (B) étant de 0,025 : 1 à 20 : 1.

8. Composition selon l'une quelconque des revendications précédentes, le rapport en poids de composant (A) sur composant (B) étant de 1 : 30 à 20 : 1.

9. Composition herbicide selon l'une quelconque des revendications précédentes comprenant de plus un adjuvant de formulation acceptable sur le plan agricole.

10. Composition herbicide selon la revendication 9, comprenant en outre au moins un pesticide supplémentaire.

11. Composition herbicide selon la revendication 10, le pesticide supplémentaire étant un herbicide ou un phytoprotecteur herbicide.

12. Procédé de lutte contre de la croissance végétale indésirable, comprenant l'application d'un composé de formule (I) tel que défini dans l'une quelconque des revendications 1 à 4, et d'un composé de formule (II) tel que défini dans l'une quelconque parmi la revendication 1 et la revendication 5, sur les végétaux indésirables ou sur le site de ceux-ci.

13. Procédé selon la revendication 12, les composés de formule (I) et de formule (II) étant appliqués sous la forme d'une composition telle que définie dans l'une quelconque des revendications 1 à 11.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 2018072280 W
- WO 2019034757 A
- WO 2015084796 A
- WO 2015153683 A, Ramphal
- WO 2010038465 A
- KR 2015135626
- WO 2016094117 A
- EP 451878 A
- EP 374753 A
- WO 9307278 A
- WO 9534656 A
- WO 03052073 A
- EP 427529 A
- WO 0234048 A


### Non-patent literature cited in the description


- **COLBY, S.R.** Calculating synergistic and antagonistic responses of herbicide combination. *Weeds,* 1967, vol. 15, 20-22
- **PETIT et al.** *Tet. Lett.,* 2008, vol. 49 (22), 3663
- **HUFFORD, D. L. ; TARBELL, D. S. ; KOSZALKA, T. R.** *J. Amer. Chem. Soc.,* 1952, 3014
- **FARINA, V. ; KRISHNAMURTHY, V. ; SCOTT, W.** *J. Organic Reactions,* 1997, vol. 50
- **GAZZARD, L. et al.** *J. Med. Chem.,* 2015, 5053
- **ANDO, S. ; MATSUNAGA, H. ; ISHIZUKA, T.** *J. Org. Chem.,* 2017, 1266-1272
- **ERNST, J. B. ; RAKERS, L. ; GLORIUS, F.** *Synthesis,* 2017, 260
- **YANG, Y. ; OLDENHIUS, N. J. ; BUCHWALD, S. L.** *Angew. Chem. Int. Ed.,* 2013, 615
- **BRAENDVANG, M. ; GUNDERSEN, L.** *Bioorg. Med. Chem.,* 2005, 6360
- **HERAVI, M. M. ; HAJIABBASI, P.** *Monatsh. Chem.,* 2012, 1575
- **SAUER, J. ; HELDMANN, D. K.** *Tetrahedron,* 1998, 4297
- **LUEBBERS, T. ; FLOHR, A. ; JOLIDON, S. ; DAVID-PIERSON, P. ; JACOBSEN, H. ; OZMEN, L. ; BAUMANN, K.** *Bioorg. Med. Chem. Lett.,* 2011, 6554
- **IMAHORI, T. ; SUZAWA, K. ; KONDO, Y.** *Heterocycles,* 2008, 1057
- **HERAVI, M. M. ; HAJIABBASI, P.** *Monatsh. Chem.,* 2012, (1575
- **UNSINN et al.** *Organic Letters,* 2013, vol. 15 (5), 1128-1131
- **SADLER et al.** *Organic & Biomolecular Chemistry,* 2014, vol. 12 (37), 7318-7327
- *CHEMICAL ABSTRACTS,* 81-84-5
- *CHEMICAL ABSTRACTS,* 221668-34-4
- The Pesticide Manual. BCPC, 2009
- McCutcheon's Detergents and Emulsifiers Annual. MC Publishing Corp, 1981
- Compendium of Herbicide Adjuvants. Southern Illinois University, 2010